(19) Europäisches Patentamt
European Patent Office
Office européen des brevets

(11) **EP 3 443 024 B1**

(12) **FASCICULE DE BREVET EUROPEEN**

(45) Date de publication et mention de la délivrance du brevet:
**02.09.2026 Bulletin 2026/36**

(21) Numéro de dépôt: **17721790.8**

(22) Date de dépôt: **18.04.2017**

(51) Classification Internationale des Brevets (IPC):
***C08G 77/00*** *(2006.01)* ***C08L 83/00*** *(2006.01)*

(52) Classification Coopérative des Brevets (CPC):
(C-Sets disponibles)
**C08L 83/08; C08G 77/14; C08G 77/26; C08G 77/38; C08G 77/382; C08G 77/388; C08K 5/07; C08K 5/16; C08K 5/18; C08L 83/00; C08L 83/06** (Cont.)

(86) Numéro de dépôt international:
**PCT/FR2017/050912**

(87) Numéro de publication internationale:
**WO 2017/178775 (19.10.2017 Gazette 2017/42)**

(54) **COMPOSITION DE POLYMÈRES COMPRENANT DES SILICONES RÉTICULÉS À POINTS DE RÉTICULATION ÉCHANGEABLES, PROCÉDÉ DE PRÉPARATION ET UTILISATIONS**

POLYMERZUSAMMENSETZUNG MIT VERNETZTEN SILIKONEN MIT AUSWECHSELBAREN VERNETZUNGSSTELLEN, HERSTELLUNGSVERFAHREN UND VERWENDUNGEN

POLYMER COMPOSITION COMPRISING CROSSLINKED SILICONES WITH EXCHANGEABLE CROSSLINKING POINTS, PREPARATION METHOD AND USES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2016 FR 1653350**

(43) Date de publication de la demande:
**20.02.2019 Bulletin 2019/08**

(73) Titulaires:
- **Ecole Supérieure de Physique et de Chimie Industrielles de la Ville de Paris 75005 Paris (FR)**
- **Centre National de la Recherche Scientifique CNRS 75016 Paris (FR)**

(72) Inventeurs:
- **LEIBLER, Ludwik 75006 Paris (FR)**
- **NICOLAY, Renaud 91370 Verrieres-Le-Buisson (FR)**
- **SOULIE-ZIAKOVIC, Corinne 75013 Paris (FR)**

(74) Mandataire: **Regimbeau 20, rue de Chazelles 75847 Paris Cedex 17 (FR)**

(56) Documents cités:
**WO-A2-2013/055467 US-A- 4 948 858 US-A1- 2012 302 705**

- **CARMEN RACLES ET AL: "on the feasibility of chemical reactions in the presence of siloxane-based surfactants", COLLOID POLYMER SCIENCE,, vol. 287, 1 January 2009 (2009-01-01), pages 461 - 470, XP002765108, DOI: 10.1007/ S00396-008-1991-Y**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

**(Cont. page suivante)**

(52) Classification Coopérative des Brevets (CPC):
(Cont.)

C-Sets
**C08L 83/06, C08L 83/00, C08K 5/16, C08K 5/18;
C08L 83/08, C08L 83/00, C08K 5/07**

## Description

L'invention traite de compositions de polymère comprenant des silicones réticulés comprenant des fonctions imine, et éventuellement des fonctions aldéhyde, éventuellement des fonctions amine primaire, permettant des réactions d'échange, ainsi que des aldéhydes libres monofonctionnels et/ou des imines libres monofonctionnelles et/ou des amines primaires monofonctionnelles.

Selon l'invention, ces compositions sont avantageusement issues de la modification d'un polymère comprenant des unités consécutives silicone par un additif fonctionnalisé imine et/ou aldéhyde et/ou amine primaire. Ce polymère silicone peut être pré-fonctionnalisé imine et/ou aldéhyde et/ou amine primaire, en fonction des cas, ou fonctionnalisé lors de l'ajout dudit additif.

En particulier, l'invention vise un procédé permettant de modifier le comportement d'un polymère comprenant des unités consécutives silicone par ajout d'un additif fonctionnel permettant de former un réseau réticulé contenant des liaisons échangeables imine-imine et/ou imine-aldéhyde et/ou imine-amine primaire.

Les polymères comprenant des unités consécutives silicone, c'est-à-dire des unités consécutives -Si-O-, seront également dénommés « silicones ».

Les silicones ou poly(dialkyl siloxane) présentent une combinaison de propriétés physico-chimiques et mécaniques unique du fait de la nature des liaisons chimiques covalentes constituant leur squelette, à savoir les liaisons Si-O.

Parmi ces propriétés on peut citer une grande inertie chimique, une bonne tenue aux rayons ultraviolet, à l'oxygène et à l'ozone, des propriétés hydrophobes et une faible perméabilité à l'eau, une faible toxicité, une température de dégradation élevée, une faible conductivité thermique, une faible dépendance des propriétés physico-chimique sur une très large gamme de température, une température de transition vitreuse très basse, une grande perméabilité aux gaz et notamment à l'oxygène.

Ces caractéristiques confèrent des propriétés supérieures aux silicones et expliquent leur utilisation dans de très nombreux domaines. L'industrie du bâtiment est le secteur d'application le plus développé en volume pour les silicones à l'heure actuelle. Ils y sont utilisés pour concevoir des mastiques, des enduits, et surtout des joints. Les caoutchoucs silicone sont également très utilisés dans le secteur des transports, aussi bien automobile qu'aéronautique. Les silicones servent également à préparer des revêtements, notamment dans le domaine du textile et de l'aéronautique. Des adhésifs à base de silicone, et plus particulièrement des adhésifs "pressure sensitive" ou des adhésifs « sensitive skin », sont couramment utilisés dans les secteurs de la santé et des cosmétiques. Les élastomères silicones sont également très utilisés pour concevoir des ustensiles de cuisine ainsi que des moules pour des domaines aussi variés que l'art, le domaine médicale (impression dentaire par exemple) ou agro-alimentaire (moule à gâteau, moule à glaçons,...). Les élastomères silicones servent également dans l'industrie électronique (par exemple la connectique) et dans la câblerie pour concevoir des matériaux isolant thermique, mais également pour apporter une protection mécanique et chimique.

Dans la très grande majorité de ces applications, les silicones sont utilisés sous forme d'élastomères, c'est à dire sous la forme de réseaux de polymères réticulés chimiquement. La réticulation chimique, également appelé vulcanisation, est essentielle pour apporter une stabilité dimensionnelle aux objets et aux matériaux, et notamment pour éviter qu'ils fluent. La réticulation permet également d'améliorer les propriétés mécaniques (élasticité notamment) et la résistance chimique des élastomères silicone.

La réticulation des silicones est donc très importante d'un point de vue applicatif. De ce fait, les élastomères silicone sont couramment classifiés suivant le procédé de vulcanisation employé pour les préparer. On peut ainsi distinguer deux grandes familles, les élastomères silicone réticulés à froid et les élastomères silicone réticulés à chaud.

Dans le cas des élastomères silicone réticulés à froid (RTV silicone en anglais, pour Room Temperature Vulcanization), la réaction de réticulation est une réaction de condensation déclenchée par l'humidité de l'air (dans le cas des systèmes monocomposants) ou catalysée par des sels d'étain ou de titane (dans le cas des systèmes bicomposants). Dans les deux cas, la réaction est peu sensible à la température et il est donc inutile d'effectuer la réaction de réticulation à une température supérieure à 40-50°C.

La réaction de condensation peut avoir lieu entre des groupements hydroxy (silanol), alcoxy ou acétoxy, conduisant respectivement à la libération d'eau, d'alcool ou d'acide acétique. Ces réactions de réticulation sont très lentes et prennent environ une journée, même en présence de catalyseur d'étain ou de titane. De plus, l'utilisation de sels d'étain génère des problèmes de toxicité pour divers applications.

La réticulation à chaud des élastomères silicone nécessite l'emploi d'un amorceur thermique, typiquement des peroxydes. Lors de leur décomposition, les amorceurs thermiques vont créer des radicaux carbonés sur les groupements alkyls pendants des chaînes siloxane ce qui engendrera la réticulation du matériau par réaction de recombinaison. Dans certains cas, les chaînes polymères peuvent contenir un faible pourcentage de groupes vinyle (< 1 %), ce qui facilite la réticulation. La réaction de réticulation est typiquement réalisée à des températures supérieures à 110°C en quelques minutes. Toutefois, une étape de post-cuisson de quelques heures à température plus élevée (150-200°C) est généralement nécessaire afin d'améliorer le taux de réticulation et les propriétés finales des élastomères.

Il existe une troisième méthode de réticulation des silicones, qui se situe entre la réticulation à froid et la

réticulation à chaud, en ce sens que ce procédé de réticulation peut être conduit à température ambiante ou à chaud. Ce troisième procédé repose sur des réactions d'hydrosilylation entre des groupements silane (Si-H) et des groupements alcènes terminaux présents dans les poly(dialkyl siloxane)s à réticuler. Cette réaction nécessite l'emploi de catalyseurs de platine (Pt) (ou parfois de rhodium) et peut être réalisée à température ambiante sur une vingtaine d'heures ou en une heure environ à des températures de l'ordre de 150-160°C. Malgré ses inconvénients, parmi lesquels on peut citer l'emploi de catalyseurs toxiques et onéreux, la sensibilité chimique des catalyseurs vis à vis d'un grand nombre de groupes fonctionnels, ce dernier procédé de réticulation est un procédé de choix pour préparer des élastomères silicones à l'échelle industrielle.

La synthèse d'élastomères silicone peut également se faire par polymérisation par ouverture de cyclosiloxanes et de biscyclosiloxanes (Gilbert, A. R.; Kantor, S. W. J. Polym. Sci. 1959, 40, 35-58). La vitesse et la température de réticulation suivant ce procédé dépendent de la base utilisée pour générer les espèces actives silanolates ($Si-O^-$) permettant l'ouverture des cyclosiloxanes. En utilisant ce procédé, il est possible de préparer des élastomères silicones en travaillant à des températures proches de 100°C. Toutefois, ce procédé nécessite la synthèse de composé biscyclosiloxanes qui ne sont pas commerciaux. De surcroit, ces systèmes se caractérisent par un équilibre entre chaînes polymères et monomères cyclosiloxanes. Ainsi, ces systèmes contiennent toujours un pourcentage non négligeable (typiquement de l'ordre de 15%) de monomères cyclosiloxanes, comme l'octaméthylcyclotétrasiloxane et le décaméthylcyclopentasiloxane. Les élastomères ainsi synthétisés vont donc voir leurs propriétés évoluer avec le temps du fait de réaction de dépolymérisation. Ce phénomène sera d'autant plus marqué à hautes températures, ce qui limite fortement les applications potentielles des élastomères silicones ainsi préparés. De plus, l'octaméthylcyclotétrasiloxane est un liquide inflammable (point éclair compris entre 51 et 57°C en coupelle fermée) dont les vapeurs peuvent formées des mélanges explosifs avec l'air. Le monomère octaméthylcyclotétrasiloxane présente également un risque possible d'altération de la fertilité (R62) et est étiqueté comme nocif (Xn) par la Communauté Européenne (fiche toxicologique 271 de l'octaméthylcyclotétrasiloxane établie par l'Institut national de recherche et de sécurité (INRS)).

Le brevet WO 2013/055467 décrit une composition de silicones comprenant un polymère polyorganosiloxane comprenant des fonctions terminales alkyle amine et un composé organique aromatique comprenant deux fonctions aldéhydes tel que le di-aldéhyde phtalique pour les lier par une fonction imine. La composition comprend donc des polymères polysiloxanes réticulés porteurs de liaisons pendantes et des points de réticulation. Ce document décrit également une méthode pour lier le polymère silicone photo-réactif à des cheveux en présence d'UV.

Le brevet US 2012/302705 divulgue un procédé de préparation d'un polyorganosiloxane comprenant des groupes fonctionnels pendants amides obtenus par réaction d'un polymère comprenant une fonction terminale imine et d'un polysiloxane comprenant des fonctions amines.

Une des réactions envisagée pour la préparation de nanoparticules de polymères silicone est une réaction de polycondensation (R3) entre le bis(formyl-p-phenoxymethyl)disiloxane (SDA) et la p-phenylene diamine (C. Racles; M. Cazacu; G. Hitrue, Colloïd Polym. Sci. (2009), Vol.287, p.461-470). Le polysiloxane obtenu comprend ainsi une liaison échangeable imine le long de la chaîne polymère ou en extrémité de chaîne polymère.

Le brevet US 4 948 858 décrit une composition résultant du mélange d'un polymère silicone linéaire comprenant des unités siloxy et comprenant des fonctions Si-H en extrémités de chaîne ($M^H$) permettant un greffage avec un composé allyloxyaniline comprenant un groupe fonctionnel alkenyle permettant le greffage avec les groupes Si-H du polyorganosiloxane fonction alkényle.

Ainsi, s'il existe plusieurs procédés industriels de réticulation des élastomères silicones, tous présentent des inconvénients qui compliquent ou limitent les procédés de préparation et de mise en œuvre des élastomères silicones ainsi que les domaines d'applications.

Il est donc important de développer un procédé de réticulation des élastomères qui permettent de préparer ces matériaux sans avoir à utiliser des catalyseurs toxiques et onéreux, qui puisse opérer à température ambiante ou à des températures relativement basses, tout en opérant en quelques heures ou moins.

Afin de développer un procédé de réticulation des élastomères silicones ne présentant pas les désavantages et limitations des systèmes décrits ci-dessus, la Demanderesse a mis au point des compositions de silicones réticulés comprenant des fonctions imine, éventuellement des fonctions aldéhyde, éventuellement des fonctions amine primaire, permettant des réactions d'échange.

Selon l'invention, la réaction de métathèse des imines permet une réaction d'échange entre les substituants portés par les imines :

Rx-(H)C=N-Ry + Rx'-(H)C=N-Ry' → Rx-(H)C=N-Ry + Rx'-(H)C=N-Ry' + Rx-(H)C=N-Ry' + Rx'- (H) C=N-Ry

Selon l'invention, la réaction d'échange imine-aldéhyde permet un échange entre les substituants portés par les imines et les aldéhydes:

$$Rx\text{-}(H)C{=}N\text{-}Ry + Rx'\text{-}(H)C{=}O \rightarrow Rx\text{-}(H)C{=}N\text{-}Ry + Rx'\text{-}(H)C{=}N\text{-}Ry + Rx\text{-}(H)C{=}O + Rx'\text{-}(H)C{=}O$$

Selon l'invention, la réaction d'échange imine-amine primaire permet un échange entre les substituants portés par les imines et les amines primaires:

$$Rx\text{-}(H)C{=}N\text{-}Ry + Ry'\text{-}NH_2 \rightarrow Rx\text{-}(H)C{=}N\text{-}Ry + Rx\text{-}(H)C{=}N\text{-}Ry' + Ry'\text{-}NH_2 + Ry\text{-}NH_2$$

Par « réaction d'échange » on entend que des molécules organiques, des oligomères, des polymères ou des réseaux polymères contenant des fonctions imine et/ou aldéhyde et/ou amine primaire peuvent échanger leurs substituants par réaction de métathèse des imines ou par réaction d'échange imine-aldéhyde ou par réaction d'échange imine-amine primaire. Ces substituants peuvent-être des groupements hydrocarbonés, des chaînes oligomère ou des chaînes polymère. Ces groupements sont liés aux fonctions imine, aldéhyde et amine primaire par des liaisons covalentes via un atome de carbone avant et après réaction d'échange. La réaction de métathèse des imines et les réactions d'échange imine-aldéhyde et imine-amine primaire ne libèrent pas de molécule d'eau et ne nécessitent pas la présence d'eau pour avoir lieu. Notamment, par "réaction d'échange" on entend que les polymères de l'invention peuvent échanger entre eux les substituants des fonctions imine et/ou aldéhyde et/ou amine primaire qu'ils portent par réaction de métathèse des imines ou par réactions d'échange imine-aldéhyde ou par réaction d'échange imine-amine primaire. Suivant l'invention, ces fonctions peuvent être pendantes ou faire partie de la chaîne polymère, notamment lorsqu'elles font partie d'un point de réticulation ; la chaîne polymère comprenant par ailleurs des unités consécutives silicone. Avantageusement ces fonctions sont pendantes ou font partie d'un point de réticulation. Ainsi, les polymères sont capables d'échanger entre eux des liens chimiques.

La réaction de métathèse peut se dérouler en l'absence de catalyseur ou en présence d'un nouveau catalyseur de la réaction de métathèse des imines, stable, facilement disponible, peu onéreux et non toxique.

Divers métaux de transition, e.g. Zr (R.G. Bergman et col., J. Am. Chem. Soc., 1994, 116, 2669.; R.G. Bergman et col., J. Am. Chem. Soc., 2000, 122, 751), Mo (T.Y. Meyer et col., Organometallics, 1997, 16, 5381; T.Y. Meyer et col., J. Am. Chem. Soc. 1998, 120, 8035), Ti (P. Mountford et col., Chem. Commun., 1998, 1669), Re (J. H. Espenson et col., Organometallics 1999, 18, 5170), Nb (J. W. Bruno et col., Organometallics 2000, 19, 4672) et sels de lanthanides (Sc, Tb, Sm, La) (J.-M. Lehn, J. Am. Chem. Soc., 2005, 127, 5528) avec des ions triflates ont été étudiés pour catalyser la métathèse des imines. Toutefois, en plus d'être généralement toxiques et onéreux, ces catalyseurs nécessitent plusieurs étapes de synthèse pour être obtenus. Le développement de catalyseurs organiques non toxiques, facilement disponibles et peu onéreux est donc particulièrement intéressant.

Dans cette optique, les inventeurs ont mis au point des compositions de polymères réticulés, dans lesquels les réactions de réticulation et les réactions d'échange peuvent avoir lieu en l'absence de catalyseur ou en présence de nouveaux catalyseurs de métathèse des imines : les aldéhydes.

De façon surprenante, des réactions d'échange aldéhyde-imine peuvent également avoir lieu. Ces réactions d'échanges permettent l'obtention de silicones échangeables.

En outre, des réactions d'échange imine-amine primaire peuvent également avoir lieu. Ces réactions d'échanges permettent également l'obtention de silicones échangeables.

Par silicones échangeables, on entend des silicones pouvant échanger des liens chimiques, des groupements hydrocarbonés, des chaînes oligomère ou des chaînes silicone par réaction de métathèse des imines ou par réaction d'échange imine-aldéhyde ou par réaction d'échange imine-amine primaire.

Ainsi, l'invention a pour objectif de proposer des compositions de silicones, qui peuvent être préparées par mélange à un silicone d'un ou plusieurs additif(s) permettant de former une composition de polymères réticulés, avantageusement un réseau réticulé, contenant des liaisons pendantes échangeables et des points de réticulation échangeables par réactions d'échange aldéhyde-imine et/ou imine-imine et/ou imine-amine primaire. Le silicone peut être fonctionnalisé imine et/ou aldéhyde et/ou amine primaire avant l'ajout dudit additif ou l'ajout dudit additif peut permettre la fonctionnalisation imine et/ou aldéhyde et/ou amine primaire du silicone et la réticulation.

Par ailleurs, l'invention a pour objectif un procédé pour modifier le comportement, par exemple la rhéologie, d'un silicone par ajout à la composition comprenant un tel silicone d'un ou plusieurs additif(s). Cet(ces) additif(s) est(sont) fonctionnalisé(s) imine et/ou aldéhyde et/ou amine primaire et permet(tent) de former une composition de polymères réticulés, avantageusement un réseau réticulé contenant des liaisons échangeables, par réaction d'échange aldéhyde-imine et/ou par réaction d'échange imine-imine et/ou par réaction d'échange imine-amine primaire. Le silicone peut être fonctionnalisé imine et/ou aldéhyde et/ou amine primaire avant l'ajout dudit additif ou l'ajout dudit additif peut permettre la fonctionnalisation imine et/ou aldéhyde et/ou amine primaire du silicone et la réticulation.

Pour ce faire, les inventeurs ont imaginé et développé des compositions permettant d'obtenir des compositions de polymères réticulés, avantageusement des réseaux de polymères, contenant des points de réticulation et des fonctions pendantes échangeables.

La présence de fonctions échangeables pendantes et de fonctions échangeables dans les points de réticulation

permet de contrôler facilement le comportement macroscopique des réseaux polymères formés et ce indépendamment du taux de réticulation. Ainsi, pour un taux de réticulation donné, une température donnée et une déformation donnée, un réseau polymère de l'invention relaxera plus vite les contraintes s'il contient plus de fonctions pendantes échangeables. De même, pour un taux de réticulation donné, une température donnée et une contrainte donnée, un réseau de l'invention s'écoulera plus vite s'il contient plus de fonctions pendantes échangeables.

De façon surprenante, les inventeurs ont pu préparer avec succès des réseaux de polymères contenant des fonctions pendantes aldimine primaire ou aldimine secondaire et/ou des fonctions aldéhyde et/ou des fonctions amine primaire et des points de réticulation incorporant des aldimines secondaires.

H
N
Rx
H

Aldimine primaire

Ry
N
Rx
H

Aldimine secondaire

où Rx et Ry sont des groupes hydrocarbonés, identiques ou différents, tels que définis ci-dessous.

Il a ainsi pu être préparé des compositions de polymères silicones réticulées sans avoir à utiliser de catalyseur toxique ou onéreux. La réticulation peut être réalisée à température ambiante ou à une température relativement basse, par exemple 45°C, et ce rapidement, en particulier en moins de 10 heures, avantageusement en moins de 5 heures, encore plus avantageusement en moins de 2 heures et encore plus avantageusement en moins d'1 heure.

## Présentation de l'invention

L'invention a pour objet une composition de silicones comprenant (a) des polymères comprenant des unités consécutives -Si-O-, réticulés contenant des liaisons pendantes échangeables et des points de réticulation échangeables, par réactions d'échange aldéhyde-imine et/ou par réactions d'échange imine-imine et/ou par réaction d'échange imine-amine primaire, obtenue par réticulation de polymères comprenant des unités consécutives -Si-O- linéaires ou branchés et (b) des aldéhydes libres monofonctionnels et/ou des imines libres monofonctionnelles et/ou des amines primaires libres monofonctionnelles.

Avantageusement, ces compositions comprennent des aldéhydes et au moins 1% en mole des fonctions aldéhydes sont des fonctions aldéhydes aromatiques. Ce pourcentage molaire est calculé par rapport au nombre total en moles de groupements fonctionnels aldéhyde liés aux polymères ou aux molécules.

Avantageusement, les silicones, avant réticulation, sont des silicones linéaires ou branchés ayant des groupements latéraux portant :

- des groupements fonctionnels aldéhyde, ou
- des groupements fonctionnels imine reliés au polymère par l'atome de carbone, ou
- des groupements fonctionnels imine reliés au polymère par l'atome d'azote, ou
- des groupements fonctionnels aldéhyde et des groupements fonctionnels imine reliés au polymère par l'atome de carbone, ou
- des groupements fonctionnels amine primaire, ou
- des groupements fonctionnels amine primaire et des groupements fonctionnels imine reliés au polymère par l'atome d'azote.

Dans une variante, la composition résulte du mélange, à l'état fondu ou en solution :

- D'au moins un silicone, comprenant des unités consécutives -Si-O-, linéaire ou branché P1 ayant des groupements latéraux portant :
    - des groupements fonctionnels aldéhyde, ou
    - des groupements fonctionnels imine reliés au polymère par l'atome de carbone, ou
    - des groupements fonctionnels imine reliés au polymère par l'atome d'azote, ou
    - des groupements fonctionnels aldéhyde et des groupements fonctionnels imine reliés au polymère par l'atome de carbone, ou
    - des groupements fonctionnels amine primaire, ou

- des groupements fonctionnels amine primaire et des groupements fonctionnels imine reliés au polymère par l'atome d'azote

- D'au moins un additif portant au moins deux groupements fonctionnels imine et/ou aldéhyde et/ou amine primaire aptes à réagir avec les groupements latéraux du polymère silicone P1 pour former un réseau réticulé à liaisons échangeables par réactions d'échange aldéhyde-imine et/ou par réactions d'échange imine-imine et/ou par réactions d'échange imine-amine primaire ;
- avantageusement, des aldéhydes libres monofonctionnels.

L'additif est avantageusement un composé de formule (I) ou de formule (II) ou un mélange de ces composés, les formules (I) et (II) répondant aux définitions suivantes :

$$(R_1)(R_2)Y{=}Z(R_3){-}R_4{-}\left[W_1(R'){=}W_{2i}(R''_i)(R''')\right]_n \quad \text{(I) ou} \qquad H_2N{-}R'_4{-}\left[NH_2\right]_{n'} \quad \text{(II)}$$

dans laquelle n, n', i, les liaisons en pointillé, Y et Z, $R_1$, $R_2$, $R_3$, $W_1$, $W_{2i}$, R', $R''_i$ et R''' sont tels que définis dans la suite. $R_4$ et $R'_4$ représentent un groupe hydrocarboné lié aux fonctions amine primaire et/ou imine et/ou aldéhyde par une liaison covalente via un atome de carbone.

L'additif peut être un mélange de composés de formule (I) et de formule (II) lorsque dans le composé de formule (I) Z représente N et $W_1$ représente N (sans quoi les composés de formule (I) et (II) pourraient réagir ensemble).

L'additif peut également être un silicone, comprenant des unités consécutives -Si-O-, linéaire ou branché P2 portant

- des groupements fonctionnels aldéhyde, ou
- des groupements fonctionnels imine reliés au polymère par l'atome de carbone, ou
- des groupements fonctionnels imine reliés au polymère par l'atome d'azote, ou
- des groupements fonctionnels aldéhyde et des groupements fonctionnels imine reliés au polymère par l'atome de carbone, ou
- des groupements fonctionnels amine primaire, ou
- des groupements fonctionnels amine primaire et des groupements fonctionnels imine reliés au polymère par l'atome d'azote.

Dans une variante, la composition résulte du mélange, à l'état fondu ou en solution :

- D'au moins un silicone, comprenant des unités consécutives -Si-O-, linéaire ou branché P1' comprenant des fonctions permettant un greffage,
- Une combinaison de molécules dont des molécules comprenant à une extrémité un groupe fonctionnel permettant de lier de façon covalente la molécule au polymère P1' et à l'autre extrémité un groupement fonctionnel choisi parmi une fonction imine reliée par son atome de carbone, une fonction imine reliée par son atome d'azote, une fonction aldéhyde ou une fonction amine primaire, et/ou des molécules comprenant à deux de leurs extrémités des groupes fonctionnels permettant de lier de façon covalente la molécule au polymère P1' et entre ses deux extrémités une fonction imine, la combinaison devant permettre le greffage et la création de liaisons pendantes échangeables et de points de réticulation échangeables par réactions d'échange aldéhyde-imine et/ou par réactions d'échange imine-imine et/ou par réactions d'échange imine-amine primaire;
- avantageusement, des aldéhydes libres monofonctionnels.

Avantageusement, l'aldéhyde est une molécule pour laquelle la fonction aldéhyde est portée par un groupement aryle, hétéroaryle ou la fonction alcène d'un terpénoïde.

L'invention a également pour objet un procédé pour préparer une composition de polymères réticulés, ledit procédé comprend les étapes suivantes :

- Choisir un polymère silicone, comprenant des unités consécutives -Si-O-, linéaire ou branché P1 ayant des groupements latéraux portant :

- ▪ des groupements fonctionnels aldéhyde, ou
- ▪ des groupements fonctionnels imine reliés au polymère par l'atome de carbone, ou
- ▪ des groupements fonctionnels imine reliés au polymère par l'atome d'azote, ou
- ▪ des groupements fonctionnels aldéhyde et des groupements fonctionnels imine reliés au polymère par l'atome de carbone, ou
- ▪ des groupements fonctionnels amine primaire, ou
- ▪ des groupements fonctionnels amine primaire et des groupements fonctionnels imine reliés au polymère par l'atome d'azote ;

- Choisir au moins un additif portant au moins deux groupements fonctionnels imine et/ou aldéhyde et/ou amine primaire aptes à réagir avec les groupements latéraux du polymère P1 pour former une composition de polymères réticulés contenant des liaisons pendantes échangeables et de points de réticulation échangeables par réactions d'échange aldéhyde-imine et/ou par réactions d'échange imine-imine et/ou par réactions d'échange imine-amine primaire ;
- Mélanger, à l'état fondu ou en solution, ledit polymère P1, ledit additif et le cas échéant un aldéhyde libre monofonctionnel, pour obtenir ladite composition.

L'invention a également pour objet un procédé pour préparer une composition de polymères réticulés, ledit procédé comprend les étapes suivantes :

- Choisir un polymère silicone, comprenant des unités consécutives -Si-O-, linéaire ou branché P1' comprenant des fonctions permettant un greffage,
- Choisir une combinaison de molécules dont des molécules comprenant à une extrémité un groupe fonctionnel permettant de lier de façon covalente la molécule au polymère P1' et à l'autre extrémité un groupement fonctionnel choisi parmi une fonction imine reliée par son atome de carbone, une fonction imine reliée par son atome d'azote, une fonction aldéhyde ou une fonction amine primaire, et/ou des molécules comprenant à deux de leurs extrémités des groupes fonctionnels permettant de lier de façon covalente la molécule au polymère P1' et entre ces deux extrémités une fonction imine, la combinaison devant permettre le greffage et la création de liaisons pendantes échangeables et de points de réticulation échangeables par réactions d'échange aldéhyde-imine et/ou par réactions d'échange imine-imine et/ou par réactions d'échange imine-amine primaire;
- Mélanger, à l'état fondu ou en solution, ledit polymère P1', ladite combinaison et le cas échéant un aldéhyde libre monofonctionnel, pour obtenir ladite composition.

L'invention a également pour objet l'utilisation d'aldéhyde pour catalyser les réactions de métathèse imine-imine et les réactions d'échange imine-aldéhyde réalisées dans les compositions définies précédemment.

L'invention a également pour objet un matériau obtenu à partir de la composition selon l'invention. L'invention a également pour objet une formulation comprenant une composition selon l'invention.

L'invention a également pour objet l'utilisation d'un additif tel que défini dans l'invention, ou d'une combinaison telle que définie dans l'invention, en présence d'un polymère silicone, comprenant des unités consécutives -Si-O-, linéaire ou branché P1 ou P1' pour la formation d'une composition comprenant des polymères réticulés, avantageusement un réseau réticulé, contenant des liaisons pendantes échangeables et des points de réticulation échangeables par réactions d'échange aldéhyde-imine et/ou par réactions d'échange imine-imine et/ou par réactions d'échange imine-amine primaire et des aldéhydes libres monofonctionnels et/ou des imines libres monofonctionnelles et/ou des amines primaires libres monofonctionnelles.

L'invention a également pour objet des combinaisons pour réticuler des polymères silicones, comprenant des unités consécutives -Si-O-, linéaires ou branchés, lesdites combinaisons étant choisies parmi des combinaisons comprenant :

- Un aldéhyde libre monofonctionnel + composé de formule (I), selon l'invention ;
- Composé de formule (II) + composé de formule (I) dans lequel Z représente N et $W_1$ représente N, selon l'invention ;
- Un aldéhyde libre monofonctionnel + polymère silicone P2, selon l'invention ;
- A et/ou B + C, et éventuellement un aldéhyde libre monofonctionnel selon l'invention ;
- A, éventuellement B, + C et/ou E, et éventuellement un aldéhyde libre monofonctionnel selon l'invention ;
- A et/ou B et/ou C + D et/ou E, et éventuellement un aldéhyde libre monofonctionnel selon l'invention ;
- A et/ou B + composé de formule (I) pour lequel Z et $W_1$ sont N, et éventuellement un aldéhyde libre monofonctionnel selon l'invention ;
- A, éventuellement B, + composé de formule (II) et éventuellement un aldéhyde libre monofonctionnel, selon l'invention ; ou

- C et/ou E + composé de formule (I) pour lequel Z et $W_1$ sont C, et éventuellement un aldéhyde libre monofonctionnel, selon l'invention

A, B, C, D, E répondant aux formules suivantes : (A) $G_1$-Rx-CH=N-Ry, (B) $G_2$-R'x-CH=O, (C) $G_3$-R"y-N=CH-R"x, (D) $G_4$-R‴x-CH=N-R‴y-$G_5$ et (E) $G_6$-Rw-$NH_2$, où les lettres $G_1$, $G_2$, $G_3$, $G_4$, $G_5$ et $G_6$ représentent un groupe fonctionnel permettant de lier de façon covalente les molécules aux chaînes polymère à fonctionnaliser, Rx, R'x, R"x, R‴x et Ry, R"y, R‴y, Rw sont des groupes hydrocarbonés.

L'invention a également pour objet l'utilisation d'une combinaison selon l'invention, en présence d'un polymère silicone, comprenant des unités consécutives -Si-O-, linéaire ou branché P1 ou P1' pour la formation d'une composition comprenant des polymères réticulés, avantageusement d'un réseau silicone réticulé, contenant des liaisons pendantes échangeables et des points de réticulation échangeables par réactions d'échange aldéhyde-imine et/ou par réactions d'échange imine-imine et/ou par réactions d'échange imine-amine primaire et des aldéhydes libres monofonctionnels et/ou des imines libres monofonctionnelles et/ou des amines primaires libres monofonctionnelles, en particulier pour modifier la rhéologie d'une composition, telle qu'une huile, une peinture ou une formulation cosmétique, comprenant ledit polymère P1 ou P1' par ajout à la composition de la combinaison selon l'invention ; la rhéologie est modifiée en choisissant la concentration en ladite combinaison.

## Définitions:

### Définition silicone, silicone linéaire, silicone branché:

Un silicone ou poly(dialkyl siloxane) est un polymère. Un polymère est constitué d'un ensemble de chaînes polymère de dimensions moléculaires différentes, notamment de masses molaires différentes. Une chaîne de polymère suivant cette invention est un enchainement d'atomes liés uniquement par des liaisons covalentes -Si-O- et éventuellement C-C, C=C, C-X ou C=X, où X est un élément chimique autre que le carbone, avantageusement à l'exception de la double liaison C=N pour la chaîne principale. Les chaînes polymères sont issues de l'assemblage covalent d'un grand nombre d'unités répétitives appelées unités monomères. Les chaînes polymère ainsi définies ont des dimensions moléculaires (caractérisées par leur masse molaire) très supérieures à celles des molécules simples et sont issues de l'assemblage covalent de plus de 5 unités monomères, avantageusement de plus de 20 unités monomères, encore plus avantageusement de plus de 50 unités monomères.

Au sens de la présente invention, on entend par « silicone » tout polymère comprenant des unités consécutives -Si-O- et éventuellement des unités C-C, C=C, C-X ou C=X, où X est un élément chimique autre que le carbone, avantageusement à l'exception de la double liaison C=N pour la chaîne principale. Dans les unités -Si-O-, l'atome de silicium est avantageusement substitué par deux groupements alkyles en $C_1$-$C_6$. Avantageusement les unités -Si-O-représentes plus de 10% molaires des unités de répétition, plus avantageusement plus de 20% des unités de répétition, plus avantageusement plus de 30% des unités de répétition, plus avantageusement plus de 50% des unités de répétition, plus avantageusement plus de 70% des unités de répétition, encore plus avantageusement plus de 90 % des unités de répétition.

Les chaînes polymères constituées d'un seul type d'unité monomère sont appelées homopolymères. Les chaînes polymères constituées de plusieurs types d'unité monomère sont appelées copolymères. Suivant cette invention, par polymère et par chaîne polymère on entend aussi bien les homopolymères que les copolymères.

Les unités monomères constitutives de la chaîne polymère peuvent être liées à un nombre variable d'autres unités monomères. Le nombre d'autres unités monomères auxquelles est liée une unité monomère est appelé valence. Une unité monomère qui est liée à une seule autre unité monomère a une valence de 1 et correspond à une extrémité de chaîne polymère. Une unité monomère qui est liée à deux autres unités monomères a une valence de 2 et correspond à une séquence linéaire d'une chaîne polymère. Une unité monomère qui est liée à plus de deux autres unités monomères a une valence supérieure à 2 et correspond à un point de branchement. Une chaîne polymère qui comporte deux extrémités est une chaîne polymère linéaire. Une chaine polymère linéaire est donc composée d'unités monomères ayant une valence de 2 et de deux unités monomères ayant une valence de 1. Une chaîne polymère qui présente plus de deux extrémités et dont la masse molaire présente une valeur finie est une chaîne polymère ramifiée ou branchée. Une chaine polymère ramifiée ou branchée est donc composée d'unités monomères ayant une valence de 2, d'unités monomères ayant une valence supérieure à 2 et de plus de deux unités monomères ayant une valence de 1.

Suivant cette invention, par polymère et par chaîne polymère on entend aussi bien les polymères et chaînes polymère linéaires que les polymères et chaînes polymère branchées.

### Définition d'une fonction pendante:

Une fonction est pendante si elle est liée par une liaison covalente par un et uniquement un de ses substituants

hydrocarbonés (Rx ou Ry des aldimines ou aldéhyde, Rw des amines, voir définition suivante) à une unité monomère ayant une valence supérieure à 1. En d'autres termes, une fonction est pendante si elle est liée par une liaison covalente à une chaîne polymère par un et uniquement un de ses substituants hydrocarbonés (Rx ou Ry des aldimines ou aldéhyde, Rw des amines, voir définition suivante) et si elle ne constitue pas une extrémité de la chaîne polymère.

Une fonction est terminale, ou constitue une extrémité de chaîne, si elle est liée par une liaison covalente par un et uniquement un de ses substituants hydrocarbonés (Rx ou Ry, des aldimines ou aldéhyde, Rw des amines, voir définition suivante) à une unité monomère ayant une valence égale à 1.

Une fonction imine fait partie d'un point de réticulation si elle est liée par son substituant hydrocarboné Rx, via une liaison covalente, à une unité monomère connectée de façon covalente à au moins deux autres unités monomères n'incluant pas la dite fonction imine, et si elle est liée par son substituant hydrocarboné Ry, via une liaison covalente, à une unité monomère connectée de façon covalente à au moins deux autres unités monomères n'incluant pas la dite fonction imine.

Ainsi, par le terme "groupe pendant", on entend, au sens de la présente invention, un groupement latéral, de la chaîne polymère. Le terme "groupement latéral", au sens de la présente invention, désigne un substituant qui n'est pas un oligomère ou un polymère. On utilisera indifféremment les termes « latéral » ou « pendant ». Un groupement latéral n'est pas intégré dans la chaîne principale du polymère. Par le terme "groupe pendant imine", on entend, au sens de la présente invention, un groupement latéral comprenant une fonction aldimine primaire ou aldimine secondaire. En présence d'une aldimine secondaire, Rx-C=NH-Ry, l'un de ces deux substituants (Rx ou Ry) n'est pas lié à une chaîne polymère, si ce n'est via la fonction imine. L'imine peut être liée au groupement latéral par son atome de carbone ou d'azote. Par le terme "groupe pendant aldéhyde", on entend, au sens de la présente invention, un groupement latéral comprenant un aldéhyde. Par le terme "groupe pendant amine primaire", on entend, au sens de la présente invention, un groupement latéral comprenant une fonction $-NH_2$.

Définition d'une molécule libre:

Suivant cette invention, une molécule est dite "libre" si elle n'est pas liée par une liaison covalente à un polymère de la composition.

Suivant cette invention, un "aldéhyde libre monofonctionnel" est une molécule libre contenant une et une seule fonction aldéhyde. Un "aldéhyde libre monofonctionnel" peut, ou non, contenir une ou plusieurs autres fonctions tant que celles-ci ne sont pas des fonctions imine, aldéhyde ou amine primaire.

Suivant cette invention, une "imine libre monofonctionnelle" est une molécule libre contenant une et une seule fonction imine. Une "imine libre monofonctionnelle" peut, ou non, contenir une ou plusieurs autres fonctions tant que celles-ci ne sont pas des fonctions imine, aldéhyde ou amine primaire.

Suivant cette invention, une "amine primaire libre monofonctionnelle" est une molécule libre contenant une et une seule fonction amine primaire. Une "amine primaire libre monofonctionnelle" peut, ou non, contenir une ou plusieurs autres fonctions tant que celles-ci ne sont pas des fonctions imine, aldéhyde ou amine primaire.

Définition réticulation:

La réticulation, ou réticulation de chaînes polymère, consiste à créer des liens chimiques covalents entre des chaînes polymères initialement non liées entre-elles par des liaisons covalentes. La réticulation s'accompagne d'une augmentation de la connectivité, via des liaisons covalentes, entre les différentes chaînes polymères constituant le polymère. La réticulation de chaînes polymères linéaires ou branchées s'accompagne d'une augmentation des dimensions moléculaires des chaînes, notamment des masses molaires, et peut conduire à l'obtention d'un réseau de polymères réticulés. La réticulation d'un réseau de polymères réticulés s'accompagne d'une augmentation de la fraction massique insoluble dans un bon solvant non réactif suivant la définition donnée ci-après.

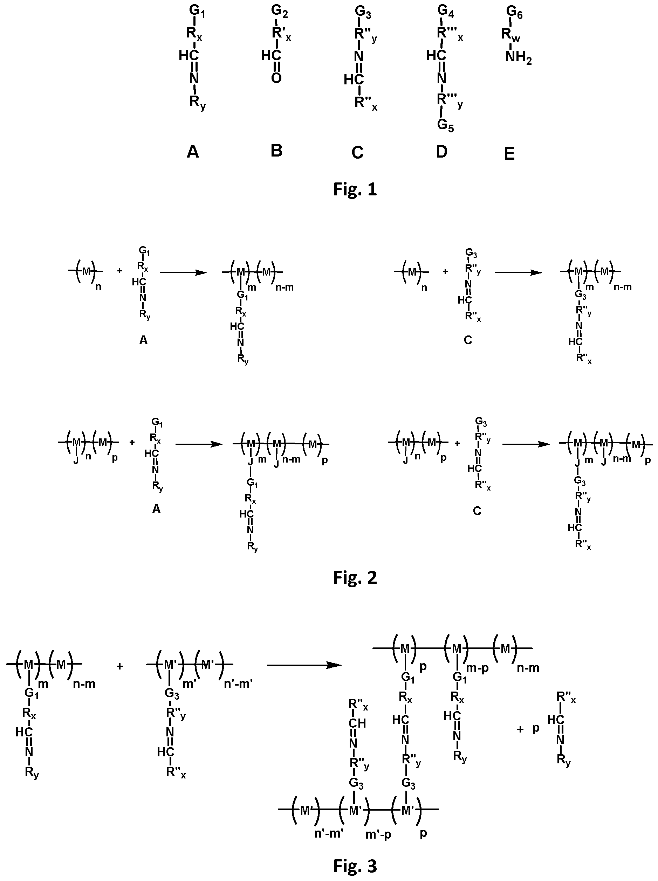

Dans le cadre de l'invention, la réticulation résulte entre autres de réactions de métathèse entre les fonctions imine et/ou de réactions d'échange entre les fonctions imine et aldéhyde et/ou de réactions d'échange entre les fonctions imine et amine primaire portées par les groupements pendants des polymères et/ou portées par les groupements pendants des polymères et par les composés de formule (I) et/ou (II). Avantageusement, la réticulation résulte exclusivement de réactions de métathèse entre les fonctions imine et/ou de réactions d'échange entre les fonctions imine et aldéhyde et/ou de réactions d'échange entre les fonctions imine et amine primaire portées par les groupements pendants des polymères et/ou portées par les groupements pendants des polymères et par les composés de formule (I) et/ou (II). Ainsi, pour toute réaction de réticulation par réaction de métathèse entre fonctions imine, respectivement pour toute réaction de réticulation par réaction d'échange entre fonctions imine et aldéhyde, respectivement pour toute réaction de réticulation par réaction d'échange entre fonctions imine et amine primaire, un équivalent d'imine libre monofonctionnelle, respectivement un équivalent d'aldéhyde libre monofonctionnel, respectivement un équivalent d'amine primaire libre monofonctionnelle, est généré, comme illustré par la figure 3 dans le cas de la réticulation par réaction de métathèse

de polymères linéaires fonctionnalisés par des fonctions imines pendantes complémentaires.

Par le terme "réseau de polymères réticulés", on entend, au sens de la présente invention, un ensemble de chaînes polymère et/ou oligomère reliées entre elles par des liaisons covalentes et qui immergé à une dilution massique de 7, avantageusement de 10 dans un bon solvant non réactif des chaînes polymères et/ou oligomères le constituant présentera une fraction massique insoluble supérieure à 0,1%, avantageusement supérieure à 0,5%, 1%, 2%, 5%, 10%, 20%, 30%, 40%, 50%, 70% après 48 heures d'immersion à pression atmosphérique et pour une température comprise entre la température de fusion et la température d'ébullition du solvant. Un bon solvant non réactif est un bon solvant qui ne va pas dégrader les chaînes polymères, les fonctions imine, aldéhyde ou amine primaire, et qui ne participera pas aux réactions d'échange imine-imine, aldéhyde-imine ou amine primaire-imine. L'insolubilité peut être évaluée à l'œil nu ou en passant la formulation sur un filtre ayant une porosité de 0,2 micromètre, avantageusement de 0,4 micromètre, encore plus avantageusement de 1 micromètre.

La réticulation s'accompagne de la création de points de réticulation reliant entre elles au moins deux chaînes polymères. Ces points de réticulation comprennent avantageusement des fonctions imine. Ainsi, après réticulation, la composition comprend des fonctions imine dans les points de réticulation et avantageusement des polymères comprenant des fonctions imine et/ou aldéhyde et/ou amine primaire pendantes.

Avantageusement, les polymères réticulés et les réseaux de polymères réticulés de l'invention contiennent/-peuvent contenir des liens chimiques thermoréversibles. A titre d'exemple non limitatifs de liens thermoréversibles on peut citer les cycloadduits obtenus par réaction de Diels-Alder ("Diels-Alder reactions_recent applications in polymer and material science", Mehmet Atilla Tasdelen, Polym. Chem., 2011, 2, 2133 _), les fonctions alkoxyamines ("Nitroxide-mediated polymerization", Julien Nicolas et al., Progress in Polymer Science 38 (2013) 63) ou disulfures ("Self-healing polymers based on thermally reversible Diels-Alder chemistry ",Ying-Ling Liu et Tsai-Wei Chuo, Polym. Chem., 2013, 4, 2194).

<u>Définition composition de polymères:</u>

On définit une composition de polymères comme un mélange homogène ou non homogène de polymères linéaires ou branchés, pouvant être liés par des points de réticulation, contenant des liaisons pendantes échangeables et des points de réticulation échangeables par réactions d'échange aldéhyde-imine et/ou par réactions d'échange imine-imine et/ou par réactions d'échange imine-amine primaire avec potentiellement divers charges, additifs ou solvants, tels que définit ci-après.

Ainsi, par la formule "composition de polymères", on entend aussi bien des formulations solides, ne contenant pas ou peu de solvant(s), que des formulations liquides, contenant une fraction massique de solvant(s) plus importante.

Ainsi, par le terme "formulation", on entend aussi bien des formulations solides que des formulations liquides.

Selon l'invention, une formulation solide contient moins de 30% massique de solvant(s), plus avantageusement moins de 25% massique de solvant(s), encore plus avantageusement moins de 20% massique de solvant(s), encore plus avantageusement moins de 15% massique de solvant(s), encore plus avantageusement moins de 10% massique de solvant(s), encore plus avantageusement moins de 5% massique de solvant(s), encore plus avantageusement moins de 2,5% massique de solvant(s), encore plus avantageusement moins de 1% massique de solvant(s), encore plus avantageusement moins de 0,5% massique de solvant(s).

Selon l'invention, une formulation solide est un matériau.

Selon l'invention, une formulation liquide contient plus de 30% massique de solvant(s), plus avantageusement plus de 50% massique de solvant(s), encore plus avantageusement plus de 60% massique de solvant(s), encore plus avantageusement plus de 70% massique de solvant(s), encore plus avantageusement plus de 75% massique de solvant(s).

Selon l'invention, une formulation liquide peut être un matériau.

On définit un solvant comme une molécule, ou un mélange de molécules, liquide à température ambiante et qui a la propriété, à température ambiante, de dissoudre et/ou de diluer d'autres substances sans les modifier chimiquement et sans lui-même se modifier. Parmi les solvants, on distingue, les bons solvants qui présentent la propriété de dissoudre à température ambiante les substances sans les modifier chimiquement et sans lui-même se modifier, et les mauvais solvants qui présentent la propriété de diluer sans dissoudre ni modifier chimiquement les substances à température ambiante et sans lui-même se modifier.

Un solvant peut donc être un bon solvant d'un composé et un mauvais solvant d'un autre composé.

A titre d'exemples non limitant, on peut citer comme solvant, l'acétate d'éthyle, l'acétate de butyle, l'acétone, l'acétonitrile, l'alcool benzylique, l'anhydride acétique, l'anisole, le benzène, le butanol, la butanone, le chlorobenzène, le chloroforme, le cyclohexane, le dichloroéthane, le dichlorométhane, le diméthylformamide, le diméthylsulfoxyde, le dioxane, l'eau, l'étahnol, l'éther de glycol, l'éther diéthylique, l'éthylène glycol, l'heptane, l'hexane, les huiles minérales, les huiles naturelles, les huile synthétiques, les hydrocarbures, le méthanol, le pentane, le propanol, le propoxypropane, la pyridine, le tétrachloroéthane, le tétrachlorométhane, le tétrahydrofurane, le toluène, le trichlorobenzène, le xylène, et

leurs mélanges.

Définition des radicaux :

Par groupement « hydrocarboné », on entend, au sens de la présente invention, un groupement comprenant des atomes de carbone et d'hydrogène. Ce groupement peut également comprendre des hétéroatomes et/ou être substitué par des halogènes. Le groupement hydrocarboné comprend avantageusement de 1 à 50, de préférence 1 à 18, de préférence 1 à 12, atomes de carbone.
Par « hétéroatome », on entend, au sens de la présente invention, des atomes de soufre, azote, oxygène, bore, phosphore, silicium.
Par «halogène », on entend, au sens de la présente invention, les atomes de fluor, de chlore, de brome et d'iode.
Les groupements hydrocarbonés peuvent être aliphatiques ou aromatiques.
Par "aliphatique", on entend, au sens de la présente invention un groupement « alkyle », «alcényle », «alcanediyle », « alcènediyle », « cycloalkyle ». La valence du groupement sera déterminée au cas par cas.
Le groupe aliphatique peut comprendre des hétéroatomes. En particulier, il peut être interrompu par des fonctions ester, amide, éther, thioéther, amine secondaire ou tertiaire, carbonate, uréthane, carbamide, anhydride. Le cas échéant, le groupe aliphatique peut être substitué notamment par un halogène, un groupement -Rz, -OH, -NHRz, -NRzR'z, -C(O)-OH, -C(O)-NRzR'z,-C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en $C_1$-$C_{50}$, ou par un groupement fonctionnel choisi parmi les groupements fonctionnels polymérisables par polymérisation radicalaire, les fonctions aldéhyde et/ou imine.
Par groupement « alkyle », on entend, au sens de la présente invention, une chaîne hydrocarbonée, saturée ou insaturée, linéaire ou ramifiée, avantageusement comportant 1 à 50, de préférence 1 à 18, de préférence 1 à 12, atomes de carbone, et qui peut comprendre un ou plusieurs hétéroatomes. Ainsi, par abus de langage, au sens de l'invention le terme « alkyle » englobe également :

- les «alcényles », c'est-à-dire les chaînes hydrocarbonées comportant au moins une double liaison ;
- les "hétéroalkyle", c'est-à-dire les groupements alkyles tel que définis précédemment comprenant au moins un hétéroatome.

Par groupement «alcanediyle », on entend, au sens de la présente invention, une chaîne hydrocarbonée divalente, saturée ou insaturée, linéaire ou ramifiée, comprenant avantageusement de 1 à 50, de préférence 1 à 18, de préférence 1 à 12, atomes de carbone et qui peut comprendre un ou plusieurs hétéroatomes. Ainsi, par abus de langage, au sens de l'invention le terme «alcanediyle » englobe également les «alcènediyles », c'est-à-dire les chaînes hydrocarbonées comprenant au moins une double liaison, comme par exemple, un groupement vinylène (éthénylène) ou propénylène et les « hétéro alcanediyle », c'est-à-dire les groupements alcanediyles tel que définis précédemment comprenant au moins un hétéroatome.
Par "terpénoïde" on entend selon l'invention tout groupement comprenant un squelette proche d'un terpène. Un « terpène » désigne un dérivé de l'isoprène qui est obtenu par la connexion d'unités en C5H8, conduisant par exemple aux monoterpènes, sesquiterpènes. Par « proche » on entend que le squelette est similaire à un terpène ou différent en ce qu'au moins un substituant alkyle, normalement présent, peut être absent ou porté par un autre atome. Le squelette peut en outre être substitué par des radicaux variés tels que des radicaux aliphatiques, oxy, des aldéhydes, des esters, des alcools, des éthers et leurs équivalents soufrés ou azotés. Au cas par cas, ce groupement "terpénoïde" sera monovalent ou divalent.
Par groupement «cycloalkyle », on entend, au sens de la présente invention, une chaîne alkyle cyclique, saturée ou partiellement insaturée, mais non aromatique, comportant avantageusement de 3 à 10 atomes de carbone cycliques. La chaîne alkyle peut comprendre un ou plusieurs hétéroatomes, on parlera alors spécifiquement d' « hétérocycloalkyle ». Le groupement peut comprendre plus d'un cycle et ainsi comprendre des cycles fusionnés, liés ou spiro. A titre d'exemple, on peut citer les groupes cyclopropyle, cyclopentyle, cyclohexyle, cycloheptyle, pyrrolidinyle, pipéridinyle, pipérazinyle ou morpholinyle. Le cas échéant, le groupe cycloalkyle peut être substitué notamment par un halogène, un groupement -Rz, -OH, -NHRz, - NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en $C_1$-$C_{50}$, ou par un groupement fonctionnel choisi parmi les groupements fonctionnels polymérisables par polymérisation radicalaire, les fonctions aldéhyde et/ou imine. Le cas échéant, le groupement cycloalkyle pourra être divalent, on parlera alors avantageusement de radical « cycloaliphatique ».
Par "aromatique", on entend, au sens de la présente invention, un groupe monovalent ou multivalent comprenant un groupement hydrocarboné aromatique. La valence du groupement sera déterminée au cas par cas.
Le groupe aromatique peut comprendre des hétéroatomes, on parlera alors spécifiquement de radical « hété-

roaromatique ». En particulier, il peut être interrompu par des fonctions ester, amide, éther, thioéther, amine secondaire ou tertiaire, carbonate, uréthane, carbamide, anhydride. Le groupe aromatique peut comprendre un ou plusieurs cycles accolés ou liés de manière covalente. Le cas échéant, le groupe aromatique peut être substitué notamment par un halogène, un groupement -Rz, -OH, -NHRz, -NRzR'z, -C(O)-OH, -C(O)-NRzR'z, -C(O)-O-Rz, -OC(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en $C_1$-$C_{50}$, ou par un groupement fonctionnel choisi parmi les groupements fonctionnels polymérisables par polymérisation radicalaire, les fonctions aldéhyde et/ou imine.

Le terme « aromatique » englobe les groupements « arylaliphatiques », c'est-à-dire un groupement comprenant au moins un groupement aromatique et au moins un groupement aliphatique, tels que définis. Le groupement aliphatique peut être lié à une partie de la molécule et le groupement aromatique peut être lié à une autre partie de la molécule. Le groupement peut comprendre deux groupements aromatiques, chacun relié à une partie de la molécule, et reliés entre eux par une chaîne aliphatique.

Par « aryle », on entend, au sens de la présente invention, un groupement hydrocarboné aromatique. Le terme « aryle » englobe les groupements aralkyles et alkyl-aryle. Le groupement hydrocarboné aromatique peut être substitué une ou plusieurs fois notamment par un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en $C_1$-$C_{50}$, ou par un groupement fonctionnel choisi parmi les groupements fonctionnels polymérisables par polymérisation radicalaire, les fonctions aldéhyde et/ou imine.

Par «alkyl-aryle », on entend, au sens de la présente invention, un groupe alkyle tel que défini ci-dessus, lié au reste de la molécule par l'intermédiaire d'un groupe aromatique tel que défini ci-dessus.

Par «aralkyle», on entend, au sens de la présente invention, un groupe aryle tel que défini ci-dessus, lié au reste de la molécule par l'intermédiaire d'un groupe aliphatique tel que défini ci-dessus.

Par « hétéroaryle », on entend, au sens de la présente invention, un groupement aryle pour lequel au moins un des atomes du cycle aromatique est un hétéroatome. Par "hétéroalkyl-aryle", on entend, au sens de la présente invention, un groupe alkyl-aryle tel que défini substitué par au moins un hétéroatome. Par "hétéroaralkyle", on entend, au sens de la présente invention, un groupe aralkyle tel que défini substitué par au moins un hétéroatome.

Par « amine primaire », on entend, au sens de la présente invention, un groupement portant une fonction $NH_2$.

Par le terme "imine", on entend, au sens de la présente invention, un groupe comprenant la fonction C=N. Au sens de l'invention l'imine est une aldimine primaire ou secondaire:

Aldimine primaire — Aldimine secondaire

où Rx et Ry sont différents de H et peuvent être identiques ou différents. Rx et Ry sont des radicaux hydrocarbonés tels que définis ci-dessus. Avantageusement, l'imine est une aldimine secondaire. Au sens de l'invention, les radicaux Rx et Ry sont liés à la fonction imine par une liaison covalente via un atome de carbone. Les groupements imine et aldéhyde de l'invention ont les structures suivantes :

$R_x{-}C(H){=}N{-}R_y$ **Aldimine secondaire**

$R_x{-}C(H){=}N{-}H$ **Aldimine primaire**

$R_x{-}C(H){=}O$ **Aldéhyde**

où Rx et Ry sont des groupes hydrocarbonés et où l'atome des groupements Rx et Ry lié à la fonction imine ou aldéhyde est un atome de carbone.

En particulier, indépendamment pour chaque groupement, Rx représente un radical alkyle, aryle, aralkyle, alkyle-aryle ou cycloalkyle. Ce radical peut contenir des hétéroatomes, en particulier choisis parmi O, N, S ou Si, et/ou peut

être substitué. Rx est avantageusement un groupement aryle, hétéroaryle ou terpénoïde. Avantageusement, lorsque la fonction aldéhyde est portée par un groupement terpénoïde, la fonction aldéhyde est liée directement à une fonction alcène du terpénoïde.

En particulier, ce radical Rx peut être substitué par des groupes fonctionnels, tels que des fonctions ester ou amide. En particulier, ce radical est substitué par un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en $C_1$-$C_{50}$. En particulier, ce radical Rx peut être interrompu par des fonctions ester, amide, éther, thioéther, amine secondaire ou tertiaire, carbonate, uréthane, carbamide, anhydride.

En particulier, indépendamment pour chaque groupement, Ry représente un radical alkyle, aryle, aralkyle, alkyle-aryle ou cycloalkyle. Ce radical peut contenir des hétéroatomes, en particulier choisis parmi O, N, S ou Si, et/ou peut être substitué. En particulier, ce radical Ry peut être substitué par des groupes fonctionnels, tels que des fonctions ester ou amide. En particulier, ce radical est substitué par un halogène, un groupement -Rz, -OH, -NHRz, -NRzR'z, -C(O)-OH, -C(O)-NRzR'z, -C(O)-O-Rz, -O-C(O)-Rz, O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en $C_1$-$C_{50}$. En particulier, ce radical Ry peut être interrompu par des fonctions ester, amide, éther, thioéther, amine secondaire ou tertiaire, carbonate, uréthane, carbamide, anhydride.

Ces groupements imine, aldéhyde et amine primaire sont avantageusement reliés, par Rx et/ou Ry, respectivement Rw, à une chaîne polymère ou à un groupement G fonctionnel permettant de lier de façon covalente les molécules aux chaînes polymère à fonctionnaliser, tel que défini par la suite.

## Descriptif des figures:

Figure 1. Représentation des molécules pouvant être utilisées pour la fonctionnalisation et la réticulation en une étape des polymères P1'

Figure 2. Représentation schématique de la fonctionnalisation de polymères linéaires P1' par la molécule A (gauche), respectivement la molécule C (droite), via la création de liaisons covalentes entre les molécules A, respectivement C, et les chaines polymère. Les fonctions permettant le greffage des molécules A (gauche), respectivement la molécule C (droite), peuvent faire partie de la chaîne principale (haut) ou des groupements latéraux/pendants (bas) du polymère linéaire à fonctionnaliser

Figure 3. Représentation schématique de la réticulation par réaction de métathèse de polymères linéaires fonctionnalisés par des fonctions imines pendantes complémentaires

## Description détaillée:

L'invention a pour objet une composition de silicones comprenant (a) des polymères comprenant des unités consécutives -Si-O- réticulés contenant des liaisons pendantes échangeables et des points de réticulation échangeables par réactions d'échange aldéhyde-imine et/ou par réactions d'échange imine-imine et/ou par réactions d'échange imine-amine primaire, obtenue par réticulation de polymères comprenant des unités consécutives -Si-O- linéaires ou branchés, (b) des aldéhydes libres monofonctionnels et/ou des imines libres monofonctionnelles et/ou des amines primaires libres monofonctionnelles. La réticulation résulte, en partie ou totalement, de réactions de métathèse entre les fonctions imine et/ou de réactions d'échange entre les fonctions imine et aldéhyde et/ou de réactions d'échange entre les fonctions imine et amine primaire portées par les groupements pendants des polymères et/ou portées par les groupements pendants des polymères et les composés de formule (I) et/ou (II). Ainsi, pour toute réaction de réticulation par réaction de métathèse entre fonctions imine, respectivement pour toute réaction de réticulation par réaction d'échange entre fonctions imine et aldéhyde, respectivement pour toute réaction de réticulation par réaction d'échange entre fonctions imine et amine primaire, un équivalent d'imine libre monofonctionnelle, respectivement un équivalent d'aldéhyde libre monofonctionnel, respectivement un équivalent d'amine primaire libre monofonctionnelle, est généré, comme illustré par la figure 3 dans le cas de la réticulation par réaction de métathèse de polymères linéaires fonctionnalisés par des fonctions imines pendantes complémentaires. Une telle composition forme avantageusement un réseau de polymères linéaires ou branchés réticulés contenant des liaisons pendantes échangeables et des points de réticulation échangeables par réactions d'échange aldéhyde-imine et/ou par réactions d'échange imine-imine et/ou par réactions d'échange imine-amine primaire.

Les polymères, avant réticulation, sont avantageusement des polymères linéaires ou branchés ayant des groupements latéraux portant :

- des groupements fonctionnels aldéhyde, ou
- des groupements fonctionnels pendants imine reliés aux polymères par leur atome de carbone, ou
- des groupements fonctionnels pendants imine reliés aux polymères par leur atome d'azote, ou
- des groupements fonctionnels aldéhyde et des groupements fonctionnels pendants imine reliés aux polymères par leur atome de carbone, ou
- des groupements fonctionnels amine primaire, ou
- des groupements fonctionnels amine primaire et des groupements fonctionnels imine reliés au polymère par l'atome d'azote.

Ces polymères peuvent être fonctionnalisés préalablement à et/ou au cours de la réticulation conduisant avantageusement à la formation d'un réseau de polymères réticulés contenant des points de réticulation échangeables et des liaisons pendantes échangeables par réactions d'échange aldéhyde-imine et/ou par réactions d'échange imine-imine et/ou par réactions d'échange imine-amine primaire.

Les groupements latéraux échangeables par réactions d'échange aldéhyde-imine et/ou par réactions d'échange imine-imine et/ou par réactions d'échange imine-amine primaire des polymères linéaires ou branchés sont avantageusement répartis sur l'ensemble de la chaîne. Ainsi, de préférence, les polymères linéaires ou branchés ne présentent pas une structure dibloc, avec un bloc contenant les groupements latéraux et un bloc ne contenant pas de groupements latéraux échangeables par réactions d'échange aldéhyde-imine et/ou par réactions d'échange imine-imine et/ou par réactions d'échange imine-amine primaire. De façon préférée, les groupements latéraux échangeables par réactions d'échange aldéhyde-imine et/ou par réactions d'échange imine-imine et/ou par réactions d'échange imine-amine primaire sont répartis de façon aléatoire sur l'ensemble de la chaîne polymères. De façon préférée, si les groupements latéraux échangeables par réactions d'échange aldéhyde-imine et/ou par réactions d'échange imine-imine et/ou par réactions d'échange imine-amine primaire sont répartis en bloc, alors le polymère présente une structure multiblocs avec des blocs contenant les groupements latéraux échangeables répartis tout le long de la chaîne polymère.

Lorsque les polymères avant réticulation sont des polymères branchés, ces polymères ne sont avantageusement pas des dendrimères. Lorsque les polymères branchés avant réticulation sont des dendrimères, ces dendrimères sont avantageusement des dendrimères de génération trois ou des dendrimères de génération deux.

Dans une première variante, le polymère est fonctionnalisé avant réticulation. En particulier, la composition résulte du mélange, à l'état fondu ou en solution :

- D'au moins un polymère linéaire ou branché P1 ayant des groupements latéraux portant :
  - des groupements fonctionnels aldéhyde, ou
  - des groupements fonctionnels imine reliés au polymère par leur atome de carbone, ou
  - des groupements fonctionnels imine reliés au polymère par leur atome d'azote,
  - des groupements fonctionnels aldéhyde et des groupements fonctionnels imine reliés au polymère par leur atome de carbone,
  - des groupements fonctionnels amine primaire, ou
  - des groupements fonctionnels amine primaire et des groupements fonctionnels imine reliés au polymère par l'atome d'azote.
- D'au moins un additif portant au moins deux groupements fonctionnels pendants imine et/ou aldéhyde et/ou amine primaire aptes à réagir avec les groupements pendants du polymère P1 pour former la composition de polymères réticulés, avantageusement un réseau réticulé, contenant des points de réticulation et des liaisons pendantes échangeables par réactions d'échange aldéhyde-imine et/ou imine-imine et/ou imine-amine primaire
- Avantageusement, des aldéhydes libres monofonctionnels.

Pour permettre la formation d'une composition de polymères réticulés, avantageusement d'un réseau de polymères réticulés, à liaisons échangeables, on utilise avantageusement à titre d'additif un moyen de réticulation qui, utilisé seul, ne va pas réagir sur lui-même et perdre ses fonctionnalités. Ainsi, le moyen de réticulation porte :

- des fonctions aldéhydes, ou
- des fonctions imines reliées au moyen par leur atome de carbone, ou
- des fonctions imines reliées au moyen par leur atome d'azote, ou
- des fonctions aldéhydes et des fonctions imines reliées au moyen par leur atome de carbone, ou
- des fonctions amine primaire, ou
- des fonctions amine primaire et des fonctions imines reliées au moyen par leur atome d'azote.

L'additif, moyen de réticulation, peut être une molécule et/ou un polymère. Le cas échéant, des combinaisons de molécules et/ou de polymères sont envisageables.

Dans une première variante, l'additif est une molécule comprenant au moins deux fonctions imine et/ou aldéhyde. Cet additif est aussi dénommé « moyen de réticulation bi- ou multifonctionnel ». Cet additif peut comprendre uniquement des fonctions imines, toutes reliées au reste de la molécule par l'atome de carbone de la liaison imine, ou uniquement des fonctions imines, toutes reliées au reste de la molécule par l'atome d'azote de la liaison imine, ou uniquement des fonctions aldéhydes. Il peut aussi à la fois comprendre des fonctions aldéhyde et des fonctions imine, toutes reliées au reste de la molécule par l'atome de carbone de la liaison imine.

Cet additif est avantageusement un composé de formule (I) suivante :

$$(R_1)(R_2)Y{=}Z(R_3){-}R_4{-}\left[W_1(R')={W_{2i}}(R''_i)(R''')\right]_n$$

dans laquelle

n est un entier variant de 1 à 6;
i est un entier variant de 1 à n
les liaisons en pointillé sont présentes ou absentes, en fonction de la valence de Y, Z, $W_1$, $W_{2i}$
Y et Z sont différents et chacun représente soit C soit N, ou Y est O et alors Z est C

- lorsque Y représente C, alors Z représente N, et $R_1$ représente un groupe hydrocarboné, $R_2$ représente H et $R_3$ est absent,
- lorsque Y représente N, alors Z représente C, et $R_1$ représente H ou un groupe hydrocarboné, $R_2$ est absent et $R_3$ représente H,
- lorsque Y est O, alors Z est C et, $R_1$, $R_2$ sont absents et $R_3$ représente H

$R_4$ représente un groupe hydrocarboné lié aux fonctions imine et/ou aldéhyde par une liaison covalente via un atome de carbone
dans chaque bloc $W_1(R')=W_{2i}(R''_i)(R''')$,
$W_1$ et $W_{2i}$ sont différents et chacun représente soit C soit N, ou $W_{2i}$ est O et alors $W_1$ est C

- lorsque $W_{2i}$ représente C, alors $W_1$ représente N et R' est absent, $R''_i$ représente un groupe hydrocarboné et R''' représente H,
- lorsque $W_{2i}$ représente N, alors $W_1$ représente C et R' représente H, $R''_i$ représente H ou un groupe hydrocarboné, et R''' est absent,
- lorsque $W_{2i}$ est O, alors $W_1$ est C et $R''_i$, R''' sont absents et R' représente H

lorsque Z représente C, alors $W_1$ représente C,
lorsque Y représente C, alors $W_{2i}$ représente C.

$R_4$ peut en particulier représenter un cycle permettant ainsi la présence de plusieurs blocs $[W_1(R')=W_{2i}(R''_i)(R''')]$, éventuellement sur chaque atome de carbone du cycle.

Le bloc $[W_1(R')=W_{2i}(R''_i)(R''')]$ est présent n fois en fonction du nombre de substitutions possibles sur le radical $R_4$. Le composé (I) peut donc être un composé appelé « en étoile ».

n est un entier variant de 1 à 6, de préférence de 1 à 4.

i est un entier variant de 1 à n.

D'un bloc à l'autre (et ainsi pour des valeurs différentes de i), la définition de $W_{2i}$ ou $R''_i$ peut varier, ce qui signifie que les blocs ne sont pas nécessairement identiques entre eux. Par contre, la définition de $W_1$ ne peut pas varier d'un bloc à l'autre, soit toujours C, soit toujours N. De même, la définition de R' ne peut pas varier d'un bloc à l'autre, soit toujours H, soit toujours absent. De même, la définition de R"' ne peut pas varier d'un bloc à l'autre, soit toujours H, soit toujours absent

$R_4$ peut être lié à l'atome de carbone ou à l'atome d'azote des fonctions imine et/ou aldéhyde. $R_4$ est lié aux fonctions imine et/ou aldéhyde par une liaison covalente via un atome de carbone. $R_4$ est avantageusement un groupe aliphatique, aromatique, arylaliphatique ou cycloaliphatique qui peut également comprendre des hétéroatomes tels que

O, N, S, ou Si. Dans une variante avantageuse, $R_4$ représente un groupement aromatique ou hétéroaromatique. Avantageusement, $R_4$ représente un groupe alcanediyle en $C_1$-$C_{12}$, un cycle benzénique, un cycle naphtalénique, un groupe arylaliphatique composé de deux cycles benzéniques reliés par un groupe alcanediyle en $C_1$-$C_6$, un cycle pyrimidine, un cycle triazine.

Avantageusement, lorsque Y représente O, alors Z représente C, $W_1$ représente C, $W_{2i}$ représente O, $R_1$, $R_2$, $R''_i$, R‴ sont absents et $R_3$ et R' représentent H.

Avantageusement, lorsque Y représente N ou O, alors Z représente C, $W_1$ représente C, $W_{2i}$ représente N ou O, $R_2$ et R‴ sont absents, $R_3$ et R' représentent H, et, en fonction de la valence de Y, $W_{2i}$, $R_1$ et $R''_i$ représentent un groupe hydrocarboné ou sont absents lorsque Y et $W_{2i}$ représentent O.

Avantageusement, lorsque Y représente C, alors Z représente N, $W_1$ représente N, $W_{2i}$ représente C, $R_3$ et R' sont absents, $R_2$ et R"' représentent H, $R_1$ et $R''_i$ représente un groupe hydrocarboné.

Lorsqu'il est présent, avantageusement $R_1$ représente un atome d'hydrogène, un groupe alkyle, alcényle, aryle, cycloalkyle, hétéroaryle, hétéroalkyle, hétérocycloalkyle, chacun de ces groupes peut être substitués. $R_2$ représente H ou est absent. $R_3$ représente H ou est absent. De préférence, $R_1$ représente un groupe alkyle, alcényle, aryle, hétéroaryle, alkyl-aryle, hétéroalkyl-aryle, aralkyle, hétéroarlalkyle, cycloalkyle ou hétérocycloalkyle ; chacun de ces groupes peut être substitués.

Lorsqu'il est présent, avantageusement $R''_i$ représente un atome d'hydrogène, un groupe alkyle, alcényle, aryle, cycloalkyle, hétéroaryle, hétéroalkyle, hétérocycloalkyle, chacun de ces groupes peut être substitué. R' représente H ou est absent. R‴ représente H ou est absent. De préférence, $R''_i$ représente un groupe alkyle, alcényle, aryle, hétéroaryle, alkyl-aryle, hétéroalkyl-aryle, aralkyle, hétéroarlalkyle, cycloalkyle ou hétérocycloalkyle ; chacun de ces groupes peut être substitués.

Alternativement ou en complément, l'additif est une molécule comprenant une fonction amine primaire. Cet additif est avantageusement un composé de formule (II) suivante :

$$H_2N - R'_4 - \left[ NH_2 \right]_{n'} \quad (II)$$

dans laquelle

n'est un entier variant de 1 à 6;
$R'_4$ représentent un groupe hydrocarboné lié aux fonctions amine par une liaison covalente via un atome de carbone

$R'_4$ peut en particulier représenter un cycle permettant ainsi la présence de plusieurs blocs [$NH_2$], éventuellement sur chaque atome de carbone du cycle.

Le bloc [$NH_2$] est présent n' fois en fonction du nombre de substitutions possibles sur le radical $R'_4$. Le composé (II) peut donc être un composé appelé « en étoile ».

n'est un entier variant de 1 à 6, de préférence de 1 à 4.

$R'_4$ est lié aux fonctions amine primaire par une liaison covalente via un atome de carbone. $R'_4$ est avantageusement un groupe aliphatique, aromatique, arylaliphatique ou cycloaliphatique qui peut également comprendre des hétéroatomes tels que O, N, S, ou Si. Dans une variante avantageuse, $R'_4$ représente un groupement aromatique ou hétéroaromatique. Avantageusement, $R'_4$ représente un groupe alcanediyle en $C_1$-$C_{12}$, un cycle benzénique, un cycle naphtalénique, un groupe arylaliphatique composé de deux cycles benzéniques reliés par un groupe alcanediyle en $C_1$-$C_6$, un cycle pyrimidine, un cycle triazine.

Lorsque le composé de formule (II) est utilisé en mélange avec le composé de formule (I), alors le composé de formule (I) est tel que Z représente N et $W_1$ représente N.

Le choix de la nature des groupements fonctionnels présents sur le composé de formule (I) et le choix des composés (I), (II) ou de leurs mélanges, va dépendre de la nature des groupements fonctionnels présents sur les groupements latéraux du polymère P1.

Ainsi, lorsque les groupements pendants du polymère P1 portent des groupements fonctionnels aldéhyde, on choisit à titre d'additif un composé de formule (I) dans lequel Z et $W_1$ représentent N.

Ainsi, lorsque les groupements pendants du polymère P1 portent des groupements fonctionnels imine reliés à la chaîne principale par l'atome de carbone, on choisit à titre d'additif un composé de formule (I) dans lequel Z et $W_1$ représentent N, un composé de formule (II) ou un mélange de composé de formule (I) dans lequel Z et $W_1$ représentent N et de composé de formule (II).

Ainsi, lorsque les groupements pendants du polymère P1 portent des groupements fonctionnels aldéhyde et des

groupements fonctionnels imine reliés à la chaîne principale par l'atome de carbone, on choisit à titre d'additif un composé de formule (I) dans lequel Z et $W_1$ représentent N, un composé de formule (II) ou un mélange de composé de formule (I) dans lequel Z et $W_1$ représentent N et de composé de formule (II).

Ainsi, lorsque les groupements pendants du polymère P1 portent des groupements fonctionnels imine reliés à la chaîne principale par l'atome d'azote, on choisit à titre d'additif un composé de formule (I) dans lequel Z et $W_1$ représentent C, Y et $W_{2i}$ représentent, chacun indépendamment les uns des autres, N ou O.

Ainsi, lorsque les groupements pendants du polymère P1 portent des groupements fonctionnels amine primaire, on choisit à titre d'additif un composé de formule (I) dans lequel Z et $W_1$ représentent C, Y et un $W_{2i}$ au moins représentent N, les autres $W_{2i}$ représentent, chacun indépendamment les uns des autres, N ou O le cas échéant.

Ainsi, lorsque les groupements pendants du polymère P1 portent des groupements fonctionnels amine primaire et des groupements fonctionnels imine reliés à la chaîne principale par l'atome d'azote, on choisit à titre d'additif un composé de formule (I) dans lequel Z et $W_1$ représentent C, Y et $W_{2i}$ représentent, chacun indépendamment les uns des autres, N ou O.

Dans une deuxième variante, l'additif est un polymère P2 portant

- des groupements fonctionnels aldéhyde, ou
- des groupements fonctionnels pendants imine reliés au polymère par l'atome de carbone, ou
- des groupements fonctionnels pendants imine reliés au polymère par l'atome d'azote, ou
- des groupements fonctionnels aldéhyde et des groupements fonctionnels pendants imine reliés au polymère par l'atome de carbone, ou

- des fonctions amine primaire, ou

  - des fonctions amine primaire et des fonctions imines reliées au moyen par leur atome d'azote.

Le choix de la nature des groupements fonctionnels présents sur le polymère P2 va dépendre de la nature des groupements fonctionnels présents sur le polymère P1.

Ainsi, lorsque les groupements pendants du polymère P1 portent des groupements fonctionnels aldéhyde, on choisit à titre de polymère P2 un silicone ayant des groupements latéraux portant des groupements fonctionnels imine reliés à la chaîne principale par leurs atomes d'azote, un silicone comprenant des groupements latéraux portant des groupements fonctionnels amine primaire et des groupements latéraux portant des groupements fonctionnels imine reliés au polymère par l'atome d'azote.

Ainsi, lorsque les groupements pendants du polymère P1 portent des groupements fonctionnels imine reliés à la chaîne principale par l'atome de carbone, on choisit à titre de polymère P2 un silicone dont les groupements latéraux portent des groupements fonctionnels imine reliés à la chaîne principale par leurs atomes d'azote, un silicone dont les groupements latéraux portent des groupements fonctionnels amine primaire, un silicone comprenant des groupements latéraux portant des groupements fonctionnels amine primaire et des groupements latéraux portant des groupements fonctionnels imine reliés à la chaîne principale par leurs atomes d'azote.

Ainsi, lorsque les groupements pendants du polymère P1 portent des groupements fonctionnels aldéhyde et des groupements fonctionnels imine reliés à la chaîne principale par l'atome de carbone, on choisit à titre de polymère P2 un silicone comprenant des groupements latéraux portant des groupements fonctionnels amine primaire, un silicone comprenant des groupements latéraux portant des groupements fonctionnels imine reliés au polymère par l'atome d'azote, un silicone comprenant des groupements latéraux portant des groupements fonctionnels amine primaire et des groupements latéraux portant des groupements fonctionnels imine reliés à la chaîne principale par leurs atomes d'azote.

Ainsi, lorsque les groupements pendants du polymère P1 portent des groupements fonctionnels imine reliés à la chaîne principale par l'atome d'azote, on choisit à titre de polymère P2 un silicone dont les groupements latéraux portent des groupements fonctionnels imine reliés à la chaîne principale par leurs atomes de carbone, un silicone dont les groupements latéraux portent des groupements fonctionnels aldéhyde, un silicone comprenant des groupements latéraux portant des groupements fonctionnels aldéhyde et des groupements latéraux portant des groupements fonctionnels imine reliés au polymère par l'atome de carbone.

Ainsi, lorsque les groupements pendants du polymère P1 portent des groupements fonctionnels amine primaire, on choisit à titre de polymère P2 un silicone comprenant des groupements latéraux portant des groupements fonctionnels imine reliés au polymère par l'atome de carbone, un silicone comprenant des groupements latéraux portant des groupements fonctionnels aldéhyde et des groupements latéraux portant des groupements fonctionnels imine reliés au polymère par l'atome de carbone.

Ainsi, lorsque les groupements pendants du polymère P1 portent des groupements fonctionnels amine primaire et des groupements fonctionnels imine reliées à la chaîne principale par leurs atomes d'azote, on choisit à titre de polymère P2 un silicone comprenant des groupements latéraux portant des groupements fonctionnels aldéhyde, un

silicone comprenant des groupements latéraux portant des groupements fonctionnels imine reliés au polymère par l'atome de carbone, un silicone comprenant des groupements latéraux portant des groupements fonctionnels aldéhyde et des groupements latéraux portant des groupements fonctionnels imine reliés au polymère par l'atome de carbone.

L'invention permet ainsi d'assembler, par réactions d'échange aldéhyde-imine et/ou par réactions d'échange imine-imine et/ou par réactions d'échange imine-amine primaire, deux polymères linéaires ou branchés, même si les natures chimiques des polymères sont différentes. Il est également envisageable d'assembler une composition de polymère selon l'invention avec un polymère linéaire ou branché P2 selon le même principe. Ce principe peut même être étendu à deux compositions selon l'invention qui peuvent être assemblées.

Les additifs sont avantageusement choisis de sorte que :

- le polymère silicone P1 a des groupements latéraux portant des groupements fonctionnels imines reliés à la chaîne principale par leurs atomes de carbone et l'additif est choisi parmi : un polymère silicone P2 dont les groupements latéraux portent des groupements fonctionnels imine reliés à la chaîne principale par leurs atomes d'azote, un polymère silicone P2 dont les groupements latéraux portent des groupements fonctionnels amine primaire, un polymère silicone P2 comprenant des groupements latéraux portant des groupements fonctionnels amine primaire et des groupements latéraux portant des groupements fonctionnels imine reliés à la chaîne principale par leurs atomes d'azote, un composé de formule (I) dans lequel les atomes Z et $W_1$ représentent N, un composé de formule (II), un mélange de composés de formule (II) et de formule (I) dans lequel les atomes Z et $W_1$ représentent N, ou un mélange de ces additifs;
- le polymère silicone P1 a des groupements latéraux portant des groupements fonctionnels imine reliés à la chaîne principale par leurs atomes d'azote et l'additif est choisi parmi : un polymère silicone P2 dont les groupements latéraux portent des groupements fonctionnels imine reliés à la chaîne principale par leurs atomes de carbone, un polymère silicone P2 dont les groupements latéraux portent des groupements fonctionnels aldéhyde, un polymère silicone P2 comprenant des groupements latéraux portant des groupements fonctionnels aldéhyde et des groupements latéraux portant des groupements fonctionnels imine reliés au polymère par l'atome de carbone, un composé de formule (I) dans lequel les atomes Z et $W_1$ représentent C, ou un mélange de ces additifs ;
- le polymère silicone P1 a des groupements latéraux portant des groupements fonctionnels aldéhyde et l'additif est choisi parmi : un polymère silicone P2 ayant des groupements latéraux portant des groupements fonctionnels imine reliés à la chaîne principale par leurs atomes d'azote, un polymère silicone P2 comprenant des groupements latéraux portant des groupements fonctionnels amine primaire et des groupements latéraux portant des groupements fonctionnels imine reliés au polymère par l'atome d'azote, un composé de formule (I) dans lequel les atomes Z et $W_1$ représentent N ou un mélange de ces additifs ;
- le polymère silicone P1 a des groupements latéraux portant des groupements fonctionnels amine primaire et l'additif est un polymère silicone P2 comprenant des groupements latéraux portant des groupements fonctionnels imine reliés au polymère par l'atome de carbone, un polymère silicone P2 comprenant des groupements latéraux portant des groupements fonctionnels aldéhyde et des groupements latéraux portant des groupements fonctionnels imine reliés au polymère par l'atome de carbone, un composé de formule (I) dans lequel les atomes Z et $W_1$ représentent C et, Y et un $W_{2i}$ au moins représentent N, les autres $W_{2i}$ représentent, chacun indépendamment les uns des autres, N ou O le cas échéant, ou un mélange de ces additifs;
- le polymère silicone P1 a des groupements latéraux portant des groupements fonctionnels aldéhyde et des groupements latéraux portant des groupements fonctionnels imine reliées à la chaîne principale par leurs atomes de carbone et l'additif est un polymère silicone P2 comprenant des groupements latéraux portant des groupements fonctionnels amine primaire, un polymère silicone P2 comprenant des groupements latéraux portant des groupements fonctionnels imine reliés au polymère par l'atome d'azote, un polymère silicone P2 comprenant des groupements latéraux portant des groupements fonctionnels amine primaire et des groupements latéraux portant des groupements fonctionnels imine reliés au polymère par l'atome d'azote, un composé de formule (I) dans lequel les atomes Z et $W_1$ représentent N, un composé de formule II, un mélange de composés de formule (II) et de formule (I) dans lequel les atomes Z et $W_1$ représentent N ou un mélange de ces additifs;
- le polymère silicone P1 a des groupements latéraux portant des groupements fonctionnels amine primaire et des groupements latéraux portant des groupements fonctionnels imine reliées à la chaîne principale par leurs atomes d'azote et l'additif est un polymère silicone P2 comprenant des groupements latéraux portant des groupements fonctionnels aldéhyde, un polymère silicone P2 comprenant des groupements latéraux portant des groupements fonctionnels imine reliés au polymère par l'atome de carbone, un polymère silicone P2 comprenant des groupements latéraux portant des groupements fonctionnels aldéhyde et des groupements latéraux portant des groupements fonctionnels imine reliés au polymère par l'atome de carbone, un composé de formule (I) dans lequel les atomes Z et $W_1$ représentent C, ou un mélange de ces additifs.

Dans une deuxième variante, la fonctionnalisation et la réticulation sont conduites simultanément.

En particulier, la composition résulte du mélange, à l'état fondu ou en solution :

- D'au moins un polymère silicone linéaire ou branché P1', comprenant des unités consécutives -Si-O- , et comprenant des fonctions permettant un greffage;
- Une combinaison de molécules dont des molécules comprenant à une extrémité un groupe fonctionnel permettant de lier de façon covalente la molécule au polymère P1' et à une autre extrémité un groupement fonctionnel choisi parmi une fonction imine reliée par son atome de carbone (A), une fonction imine reliée par son atome d'azote (C), une fonction aldéhyde (B), ou une fonction amine primaire (E), et/ou des molécules comprenant à deux de leurs extrémités des groupes fonctionnels permettant de lier de façon covalente la molécule au polymère P1' et entre ses deux extrémités une fonction imine (D), la combinaison devant permettre le greffage et la création de liaisons pendantes échangeables et de points de réticulation échangeables par réactions d'échange aldéhyde-imine et/ou par réactions d'échange imine-imine et/ou par réactions d'échange imine-amine primaire ;
- avantageusement, des aldéhydes libres monofonctionnels.

Ainsi, le polymère P1' peut être fonctionnalisé et réticulé lors de l'ajout de l'additif. Pour cela le polymère comprend des fonctions permettant un greffage, par exemple dans sa chaîne principale ou sur ses groupements latéraux/pendants.

La Figure 1 présente les molécules pouvant être utilisées pour la fonctionnalisation et la réticulation en une étape de polymères. Les lettres $G_1$, $G_2$, $G_3$, $G_4$, $G_5$ et $G_6$ représentent un groupe fonctionnel permettant de lier de façon covalente les molécules aux chaînes polymère à fonctionnaliser. Les groupes fonctionnels $G_1$, $G_2$, $G_3$, $G_4$, $G_5$ et $G_6$ sont choisis en fonction des polymères à fonctionnaliser, des fonctions permettant le greffage sur ces polymères et des conditions de greffage (température, milieu réactionnel (en fondu ou en solution), cinétiques, utilisation d'un catalyseur, etc). Avantageusement, les groupes $G_1$, $G_2$, $G_3$, $G_4$, $G_5$ et $G_6$ sont identiques.

A titre d'exemples non limitant, les fonctions G peuvent être des fonctions thiols permettant la fonctionnalisation des liaisons alcène présentent dans le silicone, soit dans sa chaîne principale soit en tant que fonctions pendantes, soit à la fois dans sa chaîne principale et en tant que fonctions pendantes. Les fonctions G peuvent également être des fonctions maléimide, méthacrylique, acrylique, styrénique ou ester maléique afin de permettre un greffage radicalaire sur des unités alkyls ou alcène par exemple présentent dans la chaîne du silicone et/ou en tant que fonctions pendantes (G. Moad, Prog. Polym. Sci. 1999, 24, 81-142; Elisa Passagliaa, Serena Coiai, Sylvain Augier, Prog. Polym. Sci. 2009, 34, 911-947). Les fonctions G peuvent être des fonctions isocyanate qui réagiront ainsi avec les groupes pendants alcool, amine ou thiol présents sur les polymères à fonctionnaliser (Kemal Arda Günay, Patrick Theato, Harm-Anton Klok, Journal of Polymer Science Part A: Polymer Chemistry 2013, 51, 1-28; Charles E. Hoyle, Andrew B. Lowe, Christopher N. Bowman, Chem. Soc. Rev., 2010, 39, 1355-1387). Les fonctions G peuvent également être des oléfines electrophiles pouvant donner des additions de Michael avec des nucléophiles, tels les thiols, les amines, primaires et secondaires, ou les phosphines (Brian D. Mather, Kalpana Viswanathan , Kevin M. Miller, Timothy E. Long, Prog. Polym. Sci. 2006, 31, 487-531). Parmi les oléfines electrophiles, on peut citer à titre d'exemples non limitant, les acrylates, les acrylamides, les maléimides, les méthacrylates ou les sulfones vinyliques. Les fonctions G peuvent également être des fonctions nucléophiles, tels les alcools, les thiols, les amines ou les acides carboxyliques, qui peuvent donner des réactions de substitutions nucléophiles, ou d'ouverture de cycles (Kemal Arda Günay, Patrick Theato, Harm-Anton Klok, Journal of Polymer Science Part A: Polymer Chemistry 2013, 51, 1-28). Ces groupes fonctionnels peuvent par exemple ouvrir des fonctions époxydes présentes dans la chaîne principale des polymères, ou des fonctions époxydes pendantes comme on en trouve dans les copolymères préparés avec le méthacrylate de glycidyle. Les fonctions G peuvent également être des fonctions alcool, thiol ou amine pouvant réagir avec des fonctions pendantes ester ou ester activées pour donner de nouvelles fonctions ester, thioester ou amide. Les groupes fonctionnels permettant de lier de façon covalente la molécule contenant la fonction imine ou aldéhyde ou amine primaire au polymère P1' sont donc nombreux et variés et l'homme du métier sait sélectionner le groupe fonctionnel de choix en fonction des fonctions présentes sur le polymère P1' et des conditions de greffage (température, milieu réactionnel (en fondu ou en solution), cinétiques, utilisation d'un catalyseur, etc).

La figure 1 définit des molécules (A) $G_1$-Rx-CH=N-Ry, (B) $G_2$-R'x-CH=O, (C) $G_3$-R"y-N=CH-R"x, (D) $G_4$-R'''x-CH=N-R'''y-$G_3$ et (E) $G_6$-Rw-$NH_2$, où les lettres $G_1$, $G_2$, $G_3$, $G_4$, $G_5$ et $G_6$ représentent un groupe fonctionnel permettant de lier de façon covalente les molécules aux chaînes polymère à fonctionnaliser, Rx, R'x, R"x, R'''x et Ry, R"y, R'''y et Rw sont des groupes hydrocarbonés. Les dénominations « Rx » et « Ry » sont reprises par homologie, sans être nécessairement identique, à la définition des groupements fonctionnels pendants imine et aldéhyde selon l'invention.

En particulier, Rx, R'x, R"x, R'''x représentent chacun, indépendamment les uns des autres, un radical aliphatique, terpénoïde, aromatique, arylaliphatique ou cycloaliphatique. Ce radical peut contenir des hétéroatomes, en particulier choisis parmi O, N, S ou Si, et/ou peut être substitué. Rx, R'x, R"x, R'''x sont avantageusement un groupement aromatique, hétéroaromatique ou terpénoïde. Avantageusement, lorsque la fonction aldéhyde est portée par un groupement terpénoïde, la fonction aldéhyde est liée directement à une fonction alcène du terpénoïde. Rx, R'x, R"x,

R‴x sont liés aux fonctions imine ou aldéhyde par une liaison covalente via un atome de carbone.

En particulier, Rx, R'x, R"x, R‴x, chacun, indépendamment les uns des autres, peut être substitué par des groupes fonctionnels, tels que des fonctions ester ou amide. En particulier, ce radical est substitué par un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, - C(O)-N(H)-Rz, -N(H)-C(O)-Rz avec Rz, R'z, identiques ou différents, représentant un radical alkyle en $C_1$-$C_{50}$. En particulier, ce radical Rx, R'x, R"x, R‴x peut être interrompu par des fonctions ester, amide, éther, thioéther, amine secondaire ou tertiaire, carbonate, uréthane, carbamide, anhydride.

En particulier, Ry, R"y, R‴y représentent chacun, indépendamment les uns des autres, un radical aliphatique, aromatique, arylaliphatique ou cycloaliphatique. Ry, R"y, R‴y sont liés aux fonctions imine par une liaison covalente via un atome de carbone. Ce radical peut contenir des hétéroatomes, en particulier choisis parmi O, N, S ou Si, et/ou peut être substitué. En particulier, ce radical Ry, R"y, R‴y peut être substitué par des groupes fonctionnels, tels que des fonctions ester ou amide. En particulier, ce radical est substitué par un halogène, un groupement -Rz, -OH, - NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, - N(H)-C(O)-O-Rz, -O-Rz, -S-Rz, -C(O)-N(H)-Rz, -N(H)-C(O)-Rz avec Rz, R'z, identiques ou différents, représentant un radical alkyle en $C_1$-$C_{50}$. En particulier, ce radical Ry, R"y, R‴y peut être interrompu par des fonctions ester, amide, éther, thioéther, amine secondaire ou tertiaire, carbonate, uréthane, carbamide, anhydride.

En particulier, Rw représente un radical aliphatique, aromatique, arylaliphatique ou cycloaliphatique. Rw est lié aux fonctions amine par une liaison covalente via un atome de carbone. Ce radical peut contenir des hétéroatomes, en particulier choisis parmi O, N, S ou Si, et/ou peut être substitué. En particulier, ce radical Rw peut être substitué par des groupes fonctionnels, tels que des fonctions ester ou amide. En particulier, ce radical est substitué par un halogène, un groupement -Rz, -OH, -NHRz, -NRzR'z, -C(O)-OH, -C(O)-NRzR'z, -C(O)-O-Rz, -O-C(O)-Rz, -O-C(O)-O-Rz, -O-C(O)-N(H)-Rz, -N(H)-C(O)-O-Rz, -O-Rz, -S-Rz, -C(O)-N(H)-Rz, -N(H)-C(O)-Rz avec Rz, R'z, identiques ou différents, représentant un radical alkyle en $C_1$-$C_{50}$. En particulier, ce radical Rw peut être interrompu par des fonctions ester, amide, éther, thioéther, amine secondaire ou tertiaire, carbonate, uréthane, carbamide, anhydride.

La Figure 2 présente de façon schématique la fonctionnalisation de polymères linéaires P1' par la molécule A, respectivement C, via la création de liaisons covalentes entre les molécules A, respectivement C, et les chaînes polymère.

Les combinaisons permettant la réticulation et fonctionnalisation en une étape de polymères sont:

- A+C : Polymères fonctionnalisés avec des fonctions imines pendantes accrochées par le carbone (A) + polymères fonctionnalisés avec des fonctions imines pendantes accrochées par l'azote (C) et réticulation par réaction de métathèse imine-imine (Figure 3). Des réactions de métathèse imine-imine peuvent avoir lieu entre A et C avant que ces fonctions ne se greffent sur les polymères (ce qui revient à générer une molécule équivalente à la molécule D).

- B+C : Polymères fonctionnalisés avec des fonctions aldéhydes pendantes (B) + polymères fonctionnalisés avec des fonctions imines pendantes accrochées par l'azote (C) et réticulation par réaction d'échange aldéhyde-imine. Des réactions d'échange aldéhyde-imine peuvent avoir lieu entre B et C avant que ces fonctions ne se greffent sur les polymères (ce qui revient à générer une molécule équivalente à la molécule D).

- A+D : Polymères réticulés par la molécule D + polymères fonctionnalisés avec des fonctions imines pendantes accrochées par le carbone (A). Des réactions de métathèse imine-imine peuvent avoir lieu entre A et D avant que ces fonctions ne se greffent sur les polymères.

- B+D

- C+D

- A+B+C

- A+B+D

- B+C+D

- A+B+C+D

- E+A

- E+D

- A+E+C
- A+E+D
- A+C+D+E
- A+B+C+E
- A+B+D+E
- A+B+C+D+E
- A+C+D
- A+B+E
- B+C+E
- B+C+D+E

En résumé, toute combinaison pour laquelle en moyenne au moins deux fonctions imine et/ou aldéhyde seront greffées par chaîne polymère et reliées à la chaîne principale par l'atome de carbone et deux fonctions imine et/ou amine primaire seront greffées par chaîne polymère et reliées à la chaîne principale par l'atome d'azote.
Des aldéhydes libres monofonctionnels peuvent être ajoutés en plus dans chaque cas.
D'autres combinaisons sont encore possible lorsqu'on utilise un composé de formule (I) ou de formule (II), définie précédemment:

- A + composé (I) pour lequel Z et $W_1$ sont N. On prépare ainsi des polymères fonctionnalisés avec des fonctions imines pendantes reliée à la chaîne principale par l'atome de carbone (A) puis la réticulation s'opère par réaction de métathèse imine-imine entre les fonctions pendantes et le composé (I). Des réactions de métathèse imine-imine peuvent avoir lieu entre A et le composé (I) avant que ces fonctions ne se greffent sur les polymères.
- B + composé (I) pour lequel Z et $W_1$ sont N
- A + B + composé (I) pour lequel Z et $W_1$ sont N
- C + composé (I) pour lequel Z et $W_1$ sont C
- E + composé (I) pour lequel Z et $W_1$ sont C, Y et un $W_{2i}$ au moins sont N
- C + E + composé (I) pour lequel Z et $W_1$ sont C
- A + composé (II)
- A + B + composé (II)

De nouveau, il faut qu'il y ait en moyenne au moins deux fonctions pendantes échangeables greffées par chaîne polymère (via A, B, C ou E). La quantité de composé (I) variera suivant sa fonctionnalité. Toutefois, on peut dire que les composés (I) doivent également apporter en moyenne au moins deux fonctions imine ou aldéhyde par chaîne polymère. Ces fonctions devront être complémentaires des fonctions greffées sur les polymères (via A, B, C ou E).
Des aldéhydes libres monofonctionnels peuvent être ajoutés en plus dans chaque cas.
Dans les compositions selon l'invention, les polymères comprennent des fonctions imine et/ou aldéhyde et/ou amine primaire pendantes. Ils comprennent également des fonctions imine dans leurs chaînes latérales formant des points de réticulation. Ceci permet un échange entre imines et améliore la réticulation des polymères. Les inventeurs pensent que les réactions d'échanges entre les imines et entre les imines et aldéhydes et entre les imines et amines primaires permettent une circulation des points de réticulation.
Les compositions comprennent également des aldéhydes libres monofonctionnels et/ou des imines libres monofonctionnelles et/ou des amines primaires libres monofonctionnelles, formées lors de la création des points de réticulation.
A l'une ou l'autre de ces compositions précédemment décrites, on peut en outre ajouter un composé ayant une seule fonction imine ou aldéhyde ou amine primaire. Ce composé supplémentaire peut permettre de moduler les propriétés, notamment la viscosité, des compositions de polymère. Ce composé peut comprendre un groupement aryle, ou hétéroaryle, ou terpénoïde relié au carbone de l'aldéhyde ou de l'imine ou de l'amine primaire. Avantageusement, lorsque la fonction aldéhyde est portée par un groupement terpénoïde, la fonction aldéhyde est liée directement à une fonction alcène du terpénoïde.

En outre, les compositions selon l'invention comprennent avantageusement des aldéhydes libres monofonctionnels. De manière surprenante, les inventeurs ont découvert que les réactions d'échanges entre imines peuvent être catalysées par un aldéhyde, qui peut être présent dans le polymère (groupe CHO pendant) ou en tant que molécule non-liée aux polymères, dite "libre". L'aldéhyde libre monofonctionnel peut être ajouté avant, pendant ou après l'ajout de l'additif.

La fonction aldéhyde peut être apportée par une molécule comprenant au moins un groupe CHO : additif de formule (I) et/ou additif P2 et/ou aldéhyde libre monofonctionnel. Avantageusement, en présence d'une molécule, la molécule fonctionnalisée aldéhyde utilisée pour catalyser la métathèse des imines est un aldéhyde aromatique, à savoir une molécule pour laquelle la fonction aldéhyde est portée par un groupement aryle ou hétéroaryle, de préférence un cycle benzénique. On peut citer notamment le benzaldéhyde et ses dérivés. Avantageusement, la molécule fonctionnalisée aldéhyde utilisée pour catalyser la métathèse des imines est une molécule dans laquelle le carbone de la fonction aldehyde est relié par une liaison covalente à une fonction alcène d'un terpénoïde. On peut citer notamment le citral, ses deux isomères, le géranial et le néral, et leurs dérivés.

De manière surprenante, les inventeurs ont découvert que les fonctions imine et aldéhyde peuvent échanger leurs substituants suivant la réaction suivante:

$$Rx\text{-}(H)C{=}N\text{-}Ry + Rx'\text{-}(H)C{=}O \rightarrow Rx\text{-}(H)C{=}N\text{-}Ry + Rx'\text{-}(H)C{=}N\text{-}Ry + Rx\text{-}(H)C{=}O + Rx'\text{-}(H)C{=}O$$

Avantageusement, l'atome de carbone des fonctions imine et l'atome de carbone des fonctions aldéhyde sont reliés directement à un atome de carbone d'un groupement aryle, hétéroaryle ou à la fonction alcène d'un terpénoïde.

L'utilisation de molécules fonctionnalisées aldéhyde, et plus particulièrement d'aldéhydes aromatiques, tels le benzaldéhyde et ses dérivés, dont la vanilline, et d'aldéhydes terpénoïde, tel le cinnamaldéhyde, comme catalyseurs de la métathèse des imines présente de nombreux avantages. Ces molécules sont compatibles avec de nombreux polymères, ces molécules sont peu susceptibles d'introduire des réactions de parasites dans les matrices/matériaux polymères, ces molécules sont disponibles commercialement, peuvent être bio-sourcées ou d'origines naturelles et nombre d'aldéhydes aromatiques et d'aldéhydes terpénoïdes sont peu ou pas toxiques comme en témoigne leur utilisation dans l'industrie alimentaire et cosmétique.

Tel qu'illustré dans les exemples ci-dessous la présence d'un aldéhyde pendant ou libre va catalyser les réactions d'échange de métathèse imine-imine et imine-aldéhyde.

Les polymères silicone peuvent être fonctionnalisés pour introduire des groupements latéraux pendants fonctionnalisés imine ou aldéhyde ou amine primaire ou pour introduire des motifs ou fonctions permettant un greffage. L'introduction de ces groupements latéraux pendants fonctionnalisés imine ou aldéhyde ou amine primaire peut se faire par différents procédés connus de l'homme du métier : copolymérisation de monomères précurseurs du polymère avec des monomères fonctionnalisés imine ou aldéhyde ou amine primaire (les fonctions imine ou aldéhyde ou amine primaire ne s'intégrant pas à la chaîne principale du polymère en cours de formation mais se retrouvant sur un groupe latéral pendant) (M. Spinu, J. E. Mc Grath, J. Polym. Sci. Part A Polym. Chem. 1991, 29, 657), greffage sur une fonction réactive du polymère, copolymérisation de monomères précurseurs du polymère avec des monomères contenant une ou plusieurs fonctions qui serviront après formation du polymère à greffer les fonctions pendantes imine et/ou aldéhyde et/ou amine primaire (W. Noli, Chemistry and Technology of Silicones. Academiv Press, New York, 1968). De tels procédés sont connus de l'homme du métier et la synthèse de copolymères silicone à fonctions pendantes est notamment décrite dans le chapitre 3 "Side Group Modified" (auteurs: B. Boutevin, F. Guida-Pietrasanta et A. Ratsimihety) du livre "Silicon-Containing Polymers" (Ed. R.G. Jones, W. Ando, J. Chojnowski, Springer, 2000). Une méthode couramment utilisée pour l'introduction de fonctions pendantes sur les silicones est la réaction d'hydrosilylation. Cette réaction correspond à l'addition d'un composé insaturé sur une liaison Si-H. De nombreux silicones contenant des fonctions hydrosilane, dont le polyméthylhydrosiloxane (PMHS) et les copolymères poly(dimethylsiloxane-co-methylhydrosiloxane) (PDMSMHS), sont disponibles commercialement (Gelest, Dow, Siltech, ShinEtsu, Wacker,...). La réaction d'hydrosilylation se produit soit en présence d'amorceurs radicalaires, soit en présence de catalyseurs. Parmi les catalyseurs de la réaction d'hydrosilylation, on peut citer les amines tertiaires, les acides de Lewis et les complexes de métaux de transition, dont les complexes de platine ( J. V. Crivello, J. L. Lee, J Polym. Sci., Part A, Polym. Chem., 1990, 28, 479; J. N. Lewis, J. Amer. Chem. Soc. 1991, 112, 5998; J. V. Crivello, D. Bi, J Polym. Sci., Part A, Polym. Chem., 1993, 31, 3121). La réaction d'hydrosilylation permet notamment de préparer des silicones contenant des fonctions pendantes amine, imine (J. V. Crivello, G. Lohden, Macromolecules, 1995, 28, 8057), époxy (L. Lecamp, C. Vaugelade, B. Youssef, C. Bunel, Eur. Polym. J., 1997, 33, 1453; J. V. Crivello, M. Fan, J Polym Sci., Part A. Polym Chem., 1991, 29, 1853; J. V. Crivello, Bo Yang, Whan-Gi Kim, J Polym. Sci., Part A. Polym. Chem., 1995, 33, 2415), acrylate et méthacrylate (K. D. Belfield, X. Z. Lin, I. Cabasso, J Polym. Sci. Part A Polym. Chem. 1991, 29, 1073; R. Puyenbroek, J. J. Jansema, J. C. Van de Grampel, B. A. C. Rousseeuw, E. W. J. M. Van der Drift, Polymer 1996, 37, 847). L'addition thiol-ène est une autre approche couramment utilisée pour fonctionnaliser les silicones. Il s'agit de l'addition d'un composé thiol sur une liaison pendante vinyle d'un silicone. De nombreux silicones contenant des fonctions vinylsilane, dont le polymethylhvinylsi-

loxane (PMVS) et les copolymères poly(dimethylsiloxane-co-methylhvinylsiloxane) (PDMSMVS), sont disponibles commercialement (Gelest, Dow, Siltech, ShinEtsu, Wacker,...). L'addition thiol-ène sur des silicones contenant des fonctions vinylsilane permet notamment de préparer des silicones contenant des fonctions pendantes amine primaire, imine, aldéhyde. L'introduction des motifs ou fonctions permettant un greffage peut également se faire suivants d'autres procédés connus de l'homme du métier (Charles E. Hoyle, Christopher N. Bowman, Angew. Chem. Int. Ed. 2010, 49, 1540-1573; Kemal Arda Günay, Patrick Theato, Harm-Anton Klok, Journal of Polymer Science Part A: Polymer Chemistry 2013, 51, 1-28; G. Moad, Prog. Polym. Sci. 1999, 24, 81-142; Elisa Passagliaa, Serena Coiai, Sylvain Augier, Prog. Polym. Sci. 2009, 34, 911-947; Charles E. Hoyle, Andrew B. Lowe, Christopher N. Bowman, Chem. Soc. Rev., 2010, 39, 1355-1387; Brian D. Mather, Kalpana Viswanathan , Kevin M. Miller, Timothy E. Long, Prog. Polym. Sci. 2006, 31, 487-531; T. C. Chung, Prog. Polym. Sci. 2002, 27, 39-85. Chulsung Bae, John F. Hartwig, Hoyong Chung, Nicole K. Harris, Karen A. Switek, Marc A. Hillmyer, Angew. Chem. Int. Ed. 2005, 44, 6410-6413).

Comme décrit précédemment, les polymères peuvent être fonctionnalisés et réticulés lors de l'ajout de l'additif.

La masse molaire moyenne en nombre, $M_n$, des polymères linéaires ou branchés P1, P1', ou P2, c'est-à-dire avant réticulation, varie avantageusement de 1000 g/mol à 2500000 g/mol, plus avantageusement de 2000 à 750000 g/mol et encore plus avantageusement de 7500 g/mol à 400000 g/mol.

La dispersité, $D=M_w/M_n$, des polymères linéaires ou branchés P1, P1', ou P2, c'est-à-dire avant réticulation, varie avantageusement de 1,01 à 15, plus avantageusement de 1,03 à 10 et encore plus avantageusement de 1,05 à 7,5.

Dans l'invention, le ratio molaire [unité de répétition du polymère P1 ou P1' ne contenant pas de fonctions imine ou aldéhyde ou amine primaire pendantes]:[unité de répétition du polymère P1 ou P1' contenant une fonction pendante imine + unité de répétition du polymère P1 ou P1' contenant une fonction pendante aldéhyde + unité de répétition du polymère P1 ou P1' contenant une fonction pendante amine primaire] varie avantageusement de 0,01 à 1000, plus avantageusement de 0,1 à 250 et encore plus avantageusement de 1 à 100. On désigne ici par « fonctions imine ou aldéhyde ou amine primaire pendantes » soit une fonction imine ou aldéhyde ou amine primaire soit une fonction permettant le greffage d'une telle fonction imine ou aldéhyde ou amine primaire.

Le ratio molaire [composé de formule (I)]:[unité de répétition du polymère P1 ou P1' contenant une fonction pendante imine + unité de répétition du polymère P1 ou P1' contenant une fonction pendante aldéhyde + unité de répétition du polymère P1 ou P1' contenant une fonction pendante amine primaire] varie avantageusement de 5 à 0,001 plus avantageusement de 1 à 0,005 et encore plus avantageusement de 0,5 à 0,01. On désigne ici par « fonctions imine ou aldéhyde ou amine primaire pendantes » soit une fonction imine ou aldéhyde ou amine primaire soit une fonction permettant le greffage d'une telle fonction imine ou aldéhyde ou amine primaire.

Dans l'invention, le ratio molaire [unité de répétition du polymère P2 ne contenant pas de fonctions imine ou aldéhyde ou amine primaire pendantes]:[unité de répétition du polymère P2 contenant une fonction pendante imine + unité de répétition du polymère P2 contenant une fonction pendante aldéhyde + unité de répétition du polymère P2 contenant une fonction pendante amine primaire] varie avantageusement de 0,01 à 1000, plus avantageusement de 0,1 à 250 et encore plus avantageusement de 1 à 100.

Le ratio molaire [unité de répétition du polymère P2 contenant une fonction pendante imine + unité de répétition du polymère P2 contenant une fonction pendante aldéhyde + unité de répétition du polymère P2 contenant une fonction pendante amine primaire]:[unité de répétition du polymère P1 ou P1' contenant une fonction pendante imine + unité de répétition du polymère P1 ou P1' contenant une fonction pendante aldéhyde + unité de répétition du polymère P1 ou P1' contenant une fonction pendante amine primaire] varie avantageusement de 2500 à 0,0004, plus avantageusement de 250 à 0,004 et encore plus avantageusement de 100 à 0,01. On désigne ici par « fonctions imine ou aldéhyde ou amine primaire pendantes » soit une fonction imine ou aldéhyde ou amine primaire soit une fonction permettant le greffage d'une telle fonction imine ou aldéhyde ou amine primaire.

Lorsqu'elles sont sous forme de formulations liquides, les compositions de polymères réticulés selon l'invention, avantageusement les compositions formant un réseau de polymères linéaires ou branchés réticulés, présentent avantageusement la propriété remarquable de pouvoir être injectées, notamment via une seringue. Suivant le taux de réticulation des réseaux de polymères linéaires ou branchés réticulés, les compositions de polymères réticulés selon l'invention, sont injectables, notamment via une seringue, tout en formant un réseau de polymères réticulés qui gonflé de solvant(s), avantageusement d'eau, pourra supporter son poids et ne s'écoulera pas à l'échelle de 30 secondes, avantageusement 1 minute, avantageusement 2 minutes, avantageusement 5 minutes, avantageusement 10 minutes, avantageusement 30 minutes, avantageusement 1 heure, avantageusement 2 heures, avantageusement 4 heures, avantageusement 6 heures, avantageusement 8 heures, avantageusement 12 heures, avantageusement 1 jour, sans l'application d'une contrainte.

Lorsqu'ils sont sous forme de formulations liquides, les réseaux de polymères linéaires ou branchés réticulés selon l'invention présentent avantageusement la propriété de s'agglomérer ensemble lorsqu'il sont laissés en contact.

Le taux de réticulation des compositions de polymères réticulés selon l'invention, avantageusement les compositions sous forme de formulations liquides formant des réseaux de polymères linéaires ou branchés réticulés, peut être modulé par ajout à la composition d'aldéhydes libres monofonctionnels, et/ou d'imines libres monofonction-

nelles, et/ou d'amines primaires libres monofonctionnelles et/ou de composés de formules (I) et/ou (II) et/ou de polymères linéaires ou branchés P2. Une telle modulation du taux de réticulation peut permettre de relarguer des molécules et/ou des polymères dans les formulations contenant les compositions de polymères réticulés selon l'invention. On peut citer à titre d'exemples non restrictifs de molécules ou polymères pouvant être relargués, des principes actifs, des protéines, des acides nucléiques, des acides aminés, des vitamines, des aromes, des catalyseurs, des réactifs chimiques, des pigments ou autres additifs.

La composition de l'invention peut en outre comprendre des charges et/ou des additifs. Les charges et/ou les additifs sont en particulier ceux habituellement utilisés par l'homme de l'art.

La composition peut en outre comprendre, dans le mélange ou dans le réseau, d'autre(s) polymère(s) compatible(s). L'homme du métier sait comment choisir un tel polymère.

Des compositions de réseaux polymères comprenant au moins un réseau polymère dont la composition a été décrite ci-dessus peuvent également comprendre: un ou plusieurs polymères, pigments, colorants, agents azurants, "filler", plastifiants, modificateurs d'impact, fibres, retardateurs de flamme, antioxydants, lubrifiants, bois, verre, métaux.

Parmi les polymères qui peuvent être utilisés en mélange avec les compositions ou réseaux polymères de l'invention, on peut citer les élastomères, les thermodurcissables, les élastomères thermoplastiques, les polymères résistants aux impacts.

Le terme "pigments" signifie des particules colorées insolubles dans la composition ou le réseau polymère. Parmi les pigments qui peuvent être utilisés dans l'invention, on peut citer l'oxyde de titane, le noir de carbone, les nanotubes de carbone, les particules métalliques, la silice, les oxydes de métaux, les sulfites métalliques ou tout autre pigment minéral. On peut également citer comme pigments les phtalocyanines, les anthraquinones, les quinacridones, les dioxazines, les pigments azoïques ou tout autre pigment organique, les pigments naturels (madder, inidigo, garance, carmin, etc.) et les mélanges de pigments. Les pigments peuvent représenter entre 0, 05% et 70% en poids de la composition de la formulation.

Le terme "colorants" signifie des molécules qui sont solubles dans la composition ou le réseau polymère et qui ont la capacité d'absorber tout ou partie des rayonnements lumineux du visible.

Le terme "agent azurant" signifie une molécule qui absorbe les rayonnements lumineux ultraviolets et réémet ensuite cette énergie par fluorescence dans le visible. Les agents azurants sont notamment utilisés pour conférer une certaine blancheur.

Parmi les "fillers" qui peuvent être utilisés dans les compositions ou réseaux polymères de l'invention, on peut citer la silice, les argiles, le carbonate de calcium, le noir de carbone, les kaolins.

Parmi les fibres qui peuvent être utilisées dans les compositions ou réseaux polymères de l'invention, on peut citer les fibres de verre, les fibres de carbone, les fibres polyester, les fibres polyamide, les fibres aramide, les fibres polyéthylène, les fibres de cellulose et de nano-cellulose. Les fibres végétales (lin, chanvre, sisal, bambou, etc) peuvent également être envisagées.

La présence dans les compositions ou réseaux polymères de l'invention de pigments, colorants ou fibres thermiquement conducteurs peut être utilisée pour faciliter le chauffage d'un article obtenu à partir des compositions ou réseaux polymères de l'invention et ainsi permettre la fabrication, la transformation ou le recyclage d'un article obtenu à partir des compositions ou réseaux polymères de l'invention comme décrit ci-dessous. A titre d'exemples non limitant de pigments, fibres ou "fillers" thermiquement conducteurs, on peut citer le nitrure d'aluminium (AIN), le nitrure de bore (BN), MgSiN2, le carbure de silicium (SiC), le graphite, le graphène, les nanotubes de carbone, les fibres de carbone, les poudres métalliques et leurs combinaisons.

La présence dans les compositions ou réseaux polymères de l'invention de pigments, colorants ou fibres capables d'absorber des radiations peut être utilisée pour assurer le chauffage d'un article obtenu à partir des compositions ou réseaux polymères de l'invention au moyen d'une source de radiation, tel un laser par exemple. La présence dans les compositions ou réseaux polymères de l'invention de pigments, fibres ou "fillers" électro-conducteurs tels le noir de carbone, les nanotubes de carbone, les fibres de carbone, des poudres métalliques, des particules magnétiques peut être utilisée pour assurer le chauffage d'un article obtenu à partir des compositions ou réseaux polymères de l'invention par effet Joule, par induction ou par microondes. De tels procédés de chauffage peuvent permettre la fabrication, la transformation ou le recyclage d'un article obtenu à partir des compositions ou réseaux polymères de l'invention comme décrit ci-dessous. Des charges électro-conductrices peuvent également permettre d'évacuer les charges électrostatiques du matériau ou pour permettre la peinture électrostatique.

L'invention a également pour objet un procédé de préparation des compositions selon l'invention. Ce procédé comprend avantageusement les étapes suivantes :

- Choisir un polymère silicone, comprenant des unités consécutives -Si-O-, linéaire ou branché P1 ayant des groupements latéraux portant :

    - des groupements fonctionnels aldéhyde, ou

- des groupements fonctionnels imine reliés au polymère par l'atome de carbone, ou
- des groupements fonctionnels imine reliés au polymère par l'atome d'azote, ou
- des groupements fonctionnels aldéhyde et des groupements fonctionnels imine reliés au polymère par l'atome de carbone, ou
- des groupements fonctionnels amine primaire, ou
- des groupements fonctionnels amine primaire et des groupements fonctionnels imine reliés au polymère par l'atome d'azote ;

- Choisir au moins un additif portant au moins deux groupements fonctionnels imine et/ou aldéhyde et/ou amine primaire aptes à réagir avec les groupements latéraux du polymère P1 pour former une composition de polymères réticulés, avantageusement un réseau réticulé, contenant des liaisons pendantes échangeables et des points de réticulation échangeables par réactions d'échange aldéhyde-imine et/ou par réactions d'échange imine-imine et/ou par réactions d'échange imine-amine primaire ;
- mélanger, à l'état fondu ou en solution, ledit polymère P1, ledit additif et le cas échéant un aldéhyde libre monofonctionnel, pour obtenir ladite composition.

Le choix des substitutions et de l'additif se fait selon la description donnée précédemment pour les compositions. On peut ajouter un aldéhyde libre monofonctionnel ou une imine libre monofonctionnelle ou une amine primaire libre monofonctionnelle, tels que décrits précédemment.

Le procédé peut comprendre une étape antérieure de préparation d'un polymère P1, comprenant la copolymérisation, par polymérisation par ouverture de cycle ou par polycondensation, d'un monomère précurseur de P1 et d'un monomère portant un groupe fonctionnalisé imine ou aldéhyde ou amine primaire.

Le procédé peut comprendre une étape antérieure de préparation d'un polymère P1, comprenant le greffage de fonctions pendantes aldéhyde et/ou imine et/ou amine primaire sur un polymère linéaire ou branché.

Un autre procédé selon l'invention comprend avantageusement les étapes suivantes :

- choisir au moins un polymère silicone, comprenant des unités consécutives -Si-O-, linéaire ou branché P1' comprenant des fonctions permettant un greffage,
- choisir une combinaison de molécules dont des molécules comprenant à une extrémité un groupe fonctionnel permettant de lier de façon covalente la molécule au polymère P1' et à une autre extrémité un groupement fonctionnel choisi parmi une fonction imine reliée par son atome de carbone au reste de la molécule (A), une fonction imine reliée par son atome d'azote au reste de la molécule (C), ou une fonction aldéhyde (B), ou une fonction amine primaire (E) et/ou des molécules comprenant à deux de leurs extrémités des groupes fonctionnels permettant de lier de façon covalente la molécule au polymère P1' et entre ses deux extrémités une fonction imine (D), la combinaison devant permettre le greffage et la création de liaisons pendantes échangeables et de points de réticulation échangeables par réactions d'échange aldéhyde-imine et/ou par réactions d'échange imine-imine et/ou par réactions d'échange imine-amine primaire;
- mélanger, à l'état fondu ou en solution, ledit polymère P1', ladite combinaison et le cas échéant un aldéhyde libre monofonctionnel, pour obtenir ladite composition.

Le choix des substitutions et de la combinaison se fait selon la description donnée précédemment pour les compositions. On peut ajouter un aldéhyde libre monofonctionnel ou une imine libre monofonctionnelle, ou une amine primaire libre monofonctionnelle, tels que décrits précédemment.

Le procédé peut comprendre une étape antérieure de préparation d'un polymère P1', comprenant la copolymérisation, par polymérisation par ouverture de cycle ou par polycondensation, d'un monomère précurseur de P1' et d'un monomère portant un groupe fonctionnel permettant par la suite de greffer des fonctions pendantes aldéhyde et/ ou imine et/ou amine primaire.

Le procédé peut comprendre une étape antérieure de préparation d'un polymère P1', comprenant le greffage de fonctions pendantes permettant le greffage de fonctions aldéhyde et/ ou imine et/ou amine primaire sur un polymère linéaire ou branché.

L'invention a également pour objet un matériau obtenu à partir de la composition selon l'invention.

L'invention a également pour objet un procédé de préparation d'un matériau selon l'invention, comprenant les étapes suivantes :

- Préparation d'une composition selon l'invention ;
- Mise en forme de la composition ainsi obtenue.

La notion de mise en forme inclut aussi bien le compounding de la composition sous forme de granulés ou de

poudre par exemple que la préparation de produits finis. La mise en forme peut être réalisée par les procédés connus de l'homme de l'art pour la mise en forme de polymères thermoplastiques ou thermodurcissable. On peut notamment mentionner les procédés de moulage, de compression, d'injection, d'extrusion, de thermoformage. Avant de lui donner la forme de l'objet recherché, le matériau sera le plus souvent sous forme de granulés ou de poudre.

D'une manière intéressante, dans le procédé selon l'invention, les étapes de préparation et de mise en forme peuvent être concomitantes. En particulier, par les procédés décrits précédemment, il est possible de fonctionnaliser et réticuler un polymère par exemple par extrusion ou injection lors de sa mise en forme ou d'une étape de compounding.

L'invention a également pour objet une formulation comprenant une composition selon l'invention.

L'invention a également pour objet l'utilisation d'un additif tel que défini précédemment ou d'une combinaison telle que définie précédemment, en présence d'un polymère linéaire ou branché P1 ou P1' pour la formation d'une composition de polymères réticulés, avantageusement d'un réseau réticulé, contenant des liaisons pendantes échangeables et des points de réticulation échangeables par réactions d'échange aldéhyde-imine et/ou par réactions d'échange imine-imine et/ou par réactions d'échange imine-amine primaire. La nature de l'additif ou de la combinaison est choisie en fonction du polymère P1 ou P1', en particulier de sa fonctionnalisation, suivant les critères explicités précédemment.

On peut en outre ajouter à la composition un aldéhyde libre monofonctionnel ou une imine libre monofonctionnelle ou une amine primaire libre monofonctionnelle. Avantageusement, l'atome de carbone de la fonction imine et l'atome de carbone de la fonction aldéhyde est relié directement à un groupement aryle ou hétéroaryle.

Avantageusement, l'atome de carbone de la fonction imine et l'atome de carbone de la fonction aldéhyde est relié directement à la fonction alcène d'un groupement terpénoïde.

Les compositions selon l'invention peuvent servir pour toute utilisation des silicones décrite en introduction. En particulier, les compositions selon l'invention peuvent être utilisées pour préparer des patchs, des pansements, des adhésifs « pressure sensitive » ou encore des adhésifs « sensitive skin ». De même, suivant le degré de réticulation, il est possible d'obtenir des compositions selon l'invention qui peuvent être utilisées dans des revêtements antiadhésifs.

L'invention a également pour objet un procédé pour modifier la rhéologie d'une composition, telle qu'une huile ou une peinture ou une composition cosmétique, comprenant ledit polymère P1 ou P1' par ajout à la composition de l'additif selon l'invention ou de la combinaison selon l'invention. La rhéologie est modifiée en choisissant la concentration en ledit additif ou combinaison.

La nature de l'additif ou de la combinaison est choisie en fonction du polymère P1 ou P1', en particulier de sa fonctionnalisation, suivant les critères explicités précédemment.

On peut en outre ajouter à la composition un aldéhyde libre monofonctionnel ou une imine libre monofonctionnelle ou une amine primaire libre monofonctionnelle. Avantageusement, l'atome de carbone de la fonction imine et l'atome de carbone de la fonction aldéhyde est relié directement à un groupement aryle ou hétéroaryle.

Avantageusement, l'atome de carbone de la fonction imine et l'atome de carbone de la fonction aldéhyde est relié directement à la fonction alcène d'un groupement terpénoïde.

L'invention a également pour objet des combinaisons pour réticuler des polymères silicones, comprenant des unités consécutives -Si-O-, linéaires ou branchés, avantageusement P1, P1', lesdites combinaisons étant choisies parmi des combinaisons comprenant :

- Un aldéhyde libre monofonctionnel + composé de formule (I), tels que définis précédemment;
- Composé de formule (II) + composé de formule (I) ) dans lequel Z représente N et $W_1$ représente N, tels que définis précédemment ;
- Un aldéhyde libre monofonctionnel + polymère silicone P2, tels que définis précédemment ;
- A et/ou B + C ; A, B, C étant tel que définis précédemment, et éventuellement un aldéhyde libre monofonctionnel tel que défini précédemment ;
- A, éventuellement B, + C et/ou E, et éventuellement un aldéhyde libre monofonctionnel, tels que définis précédemment ;
- A et/ou B et/ou C + D et/ou E, et éventuellement aldéhyde libre monofonctionnel tel que défini précédemment ;
- A et/ou B + composé de formule (I) pour lequel Z et $W_1$ sont N, et éventuellement aldéhyde libre monofonctionnel, tels que définis précédemment ; ou
- A, éventuellement B, + composé de formule (II) et éventuellement un aldéhyde libre monofonctionnel, tels que définis précédemment;
- C et/ou E+ composé de formule (I) pour lequel Z et $W_1$ sont un atome de carbone, et éventuellement aldéhyde libre monofonctionnel, tels que définis précédemment.

Dans les trois premiers cas, il faut que les polymères linéaires ou branchés possèdent des fonctions pendantes échangeables imine et/ou aldéhyde et/ou amine primaire.

A, B, C, D, E sont tels que décrits précédemment.

Ces combinaisons peuvent également comprendre un aldéhyde libre monofonctionnel ou une imine libre monofonctionnelle ou une amine primaire libre monofonctionnelle. Avantageusement, l'atome de carbone de la fonction imine et l'atome de carbone de la fonction aldéhyde est relié directement à un groupement terpénoïde, aryle ou hétéroaryle. Avantageusement, lorsque la fonction aldéhyde est portée par un groupement terpénoïde, la fonction aldéhyde est liée directement à une fonction alcène du terpénoïde.

La présente invention a également pour objet l'utilisation d'une combinaison telle que précédemment, en présence d'un polymère silicone, comprenant des unités consécutives -Si-O-, linéaire ou branché P1 ou P1' pour la formation d'une composition comprenant des polymères réticulés, avantageusement d'un réseau silicone réticulé, contenant des liaisons pendantes échangeables et des points de réticulation échangeables par réactions d'échange aldéhyde-imine et/ou par réactions d'échange imine-imine et/ou par réactions d'échange imine-amine primaire et des aldéhydes libres monofonctionnels et/ou des imines libres monofonctionnelles et/ou des amines primaires libres monofonctionnelles, en particulier pour modifier la rhéologie d'une composition, telle qu'une huile, une peinture ou une formulation cosmétique, comprenant ledit polymère P1 ou P1' par ajout à la composition de la combinaison selon l'invention ; la rhéologie pourrait être modifiée en choisissant la concentration en ladite combinaison.

Les exemples suivants illustrent l'invention et ne sont pas limitatifs.

### A. Synthèses d'agents de fonctionnalisation A, B, C et D et de composés de formule (I)

#### A.1. Agent de fonctionnalisation B: B1

$K_2CO_3$, DMF, 70°C, 3 h

Le *p*-chlorométhylstyrène (6.63 g, 43.4 mmol), le 4-hydroxybenzaldéhyde (6.25 g, 51.1 mmol) et le carbonate de potassium ($K_2CO_3$) (17.7 g, 127.9 mmol) sont introduits dans un ballon de 250 mL contenant 75 mL de diméthylformamide (DMF). Le mélange est laissé sous agitation sous atmosphère d'azote pendant 3 heures à 70°C. La solution est ensuite versée dans 500 mL d'eau, et le mélange est extrait trois fois avec 150 Ml d'acétate d'éthyle. Les phases organiques sont combinées, lavées trois fois avec 150 mL de solution aqueuse de soude à 0.5 M, puis séchées sur sulfate de magnésium ($MgSO_4$). Le solvant est ensuite évaporé pour donner un solide légèrement jaune. Le solide est introduit dans 100 mL d'héptane et le mélange est chauffé 1 heure à 50°C sous forte agitation. Le solide est ensuite filtré et séché pour donner le l'agent de fonctionnalisation B B1 sous la forme d'un solide blanc (8.7 g, 36.3 mmol, 84%).

$^1$H NMR ($CDCl_3$, 400 MHz) $\delta$ : 9.89 (s, 1H), 7.84 (d, 2H, J = 8.8 Hz), 7.42 (m, 4H), 7.07 (d, 1H, J = 8.8 Hz), 6.73 (dd, 1H, J = 17.6 Hz, 10.8 Hz), 5.77 (d, 1H, J = 17.6 Hz), 5.28 (d, 1H, J = 10.8 Hz), 5.14 (s, 2H).
GC MS: 97%, () m/z: [M] Calculé pour C16H14O2 : 238.0944; Trouvé : 238.20

#### A.2. Agent de fonctionnalisation A: A1

L'agent de fonctionnalisation B1 (5 g, 21 mmol) et la n-butylamine (7.67 g, 105 mmol) sont dissous dans 40 mL de tétrahydrofurane (THF). Du sulfate de magnésium anhydre ($MgSO_4$) est ajouté et le milieu réactionnel est laissé sous agitation 48 heures à température ambiante (TA). Le mélange est ensuite filtré et concentré sous pression réduite pour l'agent de fonctionnalisation A A1 sous la forme d'un solide blanc (5.85 g, 19.9 mmol, 95%).

$^{1}$H NMR ($CDCl_3$, 400 MHz) δ : 8.20 (s, 1H), 7.66 (d, 2H, J = 8.8 Hz), 7.41 (m, 4H), 6.99 (d, 2H, J = 8.8 Hz), 6.73 (dd, 1H, J = 17.6 Hz, 10.8 Hz), 5.77 (d, 1H, J = 17.6 Hz), 5.27 (d, 1H, J = 10.8 Hz), 5.09 (s, 2H), 3.58 (t, 2H, J = 7.2 Hz), 1.67 (m, 2H), 1.38 (m, 2H), 0.95 (t, 3H, J = 7.2 Hz).
$^{13}$C NMR ($CDCl_3$, 400 MHz) δ : 160.5, 160;0, 137.4, 136.4, 136.2, 129.6, 129.5, 127.8, 126.5, 114.9, 114.2, 69.8, 61.4, 32.2, 20.5, 14.0
GC MS: 96%, () m/z: [M] Calculé pour $C_{20}H_{30}$ NO 293.4027; Trouvé 293.25

**A.3. Composé de formule (I) et/ou agent de fonctionnalisation D: CF1**

Le composé aldéhyde M1 (12.0 g, 50.34 mmol) et l'hexane-1,6-diamine (5.83 g, 50.34 mmol) sont dissous dans 150 mL de toluène et le mélange réactionnel est laissé sous agitation à température ambiante pendant 24 heures, au cours desquelles un précipité blanc se forme. Le mélange est filtré et le précipité est rincé trois fois avec 150 mL de méthanol. Le précipité est ensuite filtré, rincé trois fois avec 150 mL de méthanol et séché pour donner le composé de formule (I) et/ou l'agent de fonctionnalisation D CF1 sous la forme d'un solide blanc (9.5 g, 17.1 mmol, 70%).

$^{1}$H NMR ($CDCl_3$, 400 MHz) δ : 8.19 (s, 2H), 7.66 (d, 4H, J = 8.8 Hz), 7.41 (m, 8H), 6.99 (d, 4H, J = 8.8 Hz), 6.73 (dd, 2H, J = 17.6 Hz, 10.8 Hz), 5.77 (d, 2H, J = 17.6 Hz), 5.27 (d, 2H, J = 10.8 Hz), 5.08 (s, 4H), 3.57 (t, 4H, J = 7.2 Hz), 1.70 (m, 4H), 1.41 (m, 4H).

$^{13}$C NMR ($CDCl_3$, 400 MHz) δ : 160.7, 160;1, 137.5, 136.4, 136.2, 129.6, 127.7, 126.5, 114.9, 114.3, 69.8, 61.7, 31.0, 27.2.

**A.4. Composé de formule (I) : CF2**

Dichlorométhane
$MgSO_4$
TA, 24 h

Le benzaldéhyde (2.05 équivalent) et l'hexane-1,6-diamine (1 équivalent) sont introduits dans du dichlorométhane (2 mL par mol d'hexane-1,6-diamine) et du sulfate de magnésium est ajouté (3 équivalents). Le mélange réactionnel est laissé sous agitation à température ambiante pendant 24 heures, filtré puis évaporé sous pression réduite pour donner le composé de formule (I) CF2 sous la forme d'une huile jaune (98%, en présence de 7 mol% de benzaldéhyde).

$^1$H NMR ($CDCl_3$, 400 MHz) $\delta$ : 8.26 (s, 1H), 7.72 (m, 2H), 7.38 (m, 3H), 3.63 (t, J = 6.8 Hz, 2H), 1.74 (m, 2H), 1.42 (m, 2H).

$^{13}$C NMR ($CDCl_3$, 400 MHz) $\delta$ : 161.2, 136.2, 130.4, 128.6, 128.1, 62.0, 30.8, 27.2.

**A.5. Composé de formule (I)** : **CF3**

Tétrahydrofurane
$MgSO_4$
TA, 12 h

1.5 g de téréphtaldéhyde (1 eq.) et 3 g d'octylamine (2.1 eq.) sont solubilisés dans 5 mL de THF anhydre. 8 g de sulfate de magnésium anhydre (6 eq.) sont ajoutés. Le mélange est mis sous agitation à température ambiante. Après 12h, la suspension est filtrée sur papier filtre et le THF évaporé sous pression réduite pour donner le composé de formule (I) CF3 sous la forme d'un solide jaune pâle (réaction quantitative).

$^1$H NMR ($CDCl_3$, 400 MHz) $\delta$ : 8.28 (s, 2H), 7.76 (s, 4H), 3.61 (t, J = 7.1 Hz, 4H), 1.70 (qt, J = 7.1 Hz, 4H), 1.27 (m, 20H), 0.87 (t, J = 7.1 Hz, 6H).

**A.6. Agent de fonctionnalisation C: C1**

THF, $MgSO_4$
TA, 24 h

Le benzaldéhyde (0.9 mL, 8.8 mmol) et la 4-vinylaniline (1 g, 8.4 mmol), ou agent de fonctionnalisation E E1, sont introduits dans 20 mL de tétrahydrofurane et du sulfate de magnésium (1 g) est ajouté. Le mélange réactionnel est laissé sous agitation à température ambiante pendant 24 heures, filtré puis évaporé sous pression réduite pour donner l'agent de fonctionnalisation C C1 (90%, en présence de 5 mol% de benzaldéhyde).

$^1$H NMR ($CDCl_3$, 400 MHz) $\delta$ : 8.48 (s, 1H), 7.93-7.90 (m, 2H), 7.50-7.45 (m, 5H), 7.23-7.20 (m, 2H), 6.75 (dd, J = 17.6 Hz, 10.8 Hz, 1H), 5.76 (d, J = 17.6 Hz, 1H), 5.25 (d, J = 10.8 Hz, 1H).

**A.7. Agent de fonctionnalisation C: C2**

THF, $MgSO_4$

TA, 24 h

Le benzaldéhyde (0.24 mL, 2.4 mmol) et la 4-vinylbenzylamine (0.3 g, 2.25 mmol) ), ou agent de fonctionnalisation E E2, sont introduits dans 10 mL de tétrahydrofurane et du sulfate de magnésium (0.5 g) est ajouté. Le mélange réactionnel est laissé sous agitation à température ambiante pendant 24 heures, filtré puis évaporé sous pression réduite pour donner l'agent de fonctionnalisation C C2 (90%, en présence de 5 mol% de benzaldéhyde).

$^1H$ NMR ($CDCl_3$, 400 MHz) $\delta$ : 8.40 (s, 1H), 7.81-7.78 (m, 2H), 7.44-7.31 (m, 7H), 6.73 (dd, J = 17.6 Hz, 10.8 Hz, 1H), 5.74 (d, J = 17.6 Hz, 1H), 5.25 (d, J = 10.8 Hz, 1H), 4.83 (s, 2H).

**B. Etudes cinétiques des réactions d'échanges**

Ces expériences visent à évaluer les conditions (temps, température, catalyseur) permettant d'observer les réactions d'échange imine-imine, imine-amine and imine-aldéhyde.

**Etudes cinétiques :**

Des quantités stœchiométriques des composés imines, amines ou aldéhydes sont mélangées dans $CDCl_3$ et des spectres RMN $^1H$ sont enregistrés régulièrement. Les composés sont mélangés à partir de solutions mères et la concentration globale des deux réactifs de départ pouvant s'échanger est fixée à 0.071 mol/L (0.05 mmol/0.7 mL).

**Procédure générale de mélange :**

$CDCl_3$ est introduit dans le tube RMN et les réactifs sont ajoutés au moyen d'une microseringue à partir de solutions mères. Le tube est fermé hermétiquement et agité doucement avant de démarrer l'analyse RMN. Le temps écoulé entre la fin d'introduction de tous les réactifs et l'acquisition du premier spectre RMN est d'environ 3:30 minutes. Pour les analyses à températures élevées, le spectromètre RMN est préalablement équilibré à la température d'analyse. La température ambiante pour ces analyses était comprise entre 22.0 et 23.6°C. Les réactions d'échange suivantes ont été étudiées: Schéma réactionnel des réactions de métathèse imine-imine B.1, B.2, B.3, B.4, B.5

CDCl3

B.1. Métathèse imine-imine non catalysée à température ambiante (TA)
B.2. Métathèse imine-imine non catalysée à 45°C
B.3. Métathèse imine-imine en présence de 10 %mol d'amine (butylamine) à TA
B.4. Métathèse imine-imine en présence de 10 %mol d'aldéhyde (benzaldéhyde) à TA
B.5. Métathèse imine-imine en présence de 10 %mol d'aldéhyde (benzaldéhyde) à 45°C
B.6. Réaction d'échange imine-aldéhyde à TA

**Observations générales** :

A l'équilibre thermodynamique, chaque composé doit représenter 25% molaire de l'ensemble des produits (dans le cas des réactions non catalysée). Les temps requis pour former 15% des deux nouveaux composés issus des réactions de métathèse ou d'échange des six réactions étudiées sont présentés dans le tableau ci-dessous. Cette conversion seuil arbitraire, qui correspond à une conversion de 60% par rapport à l'équilibre thermodynamique, a été choisie afin de pouvoir comparer les différentes vitesses d'échanges.

Tableau 1

| **Réaction:** | **1** | **2** | **3** | **4** | **5** | **6** |
|---|---|---|---|---|---|---|
| **temps [h]** pour former 15% de *N*-*n*-butylbenzimine | 32.5 | 23 | 7.5 | 4.75 | 0.75 | 8.75 |
| **temps [h]** pour former 15% de monomère *N*-*tert*-butylimine | 32.5 | 23 | 12.5 | 4.75 | 0.75 | 8.75 |

La métathèse imine-imine non catalysée est la réaction d'échange la plus lente parmi les réactions étudiées plus lente. L'ajout d'aldéhyde libre lors de la métathèse imine-imine permet d'accélérer très sensiblement la réaction, quasiment d'un facteur 7 à TA et d'un facteur 30 à 45°C. A notre connaissance, l'utilisation d'aldéhyde pour catalyser la métathèse des imines n'a pas encore été décrite.

La réaction d'échange imine-aldéhyde s'est également avérée être plus rapide que la réaction de métathèse imine-imine non catalysée, d'un facteur 3.5 environ.

**C. Polymères P1**

**C.1. Polymère P1 portants des groupes fonctionnels amine primaire** : **AMS-163**

Le copolymère siloxane porteur de fonctions amine primaire utilisé dans les exemples suivant a été acheté auprès de la société Gelest (CAS 99363-37-8). Les caractéristiques du grade AMS-163 sont: Mn = 50 000 g/mol, 6-7 mol% d'unités aminopropylsiloxane, soit environ 42 fonctions amines par chaine polymère en moyenne.

**C.2. Exemple de mode opératoire pour la synthèse d'un polymère P1 portants des groupes fonctionnels imine reliés par l'atome d'azote: AMS-163Benz**

10 g de AMS-163 sont solubilisés dans 10 mL de THF anhydre. Après totale dissolution, 0.91 g de benzaldéhyde (1.05 équivalents / aux fonctions amines) et 3 g de sulfate de magnésium anhydre (3 eq. / aux fonctions amines) sont ajoutés. La solution est mise sous agitation magnétique à température ambiante pendant 12h. Après arrêt de l'agitation, le mélange (suspension de sulfate de magnésium) est laissé à décanter pendant 24h, puis centrifugé à 9000 rpm pendant 30 minutes. Le surnageant est évaporé et on récupère AMS-163Benz sous la forme d'un liquide transparent légèrement visqueux. L'analyse RMN $^1H$ dans $CDCl_3$ anhydre (15 mg de polymère/0.7 mL $CDCl_3$) montre que la conversion des fonctions amines primaires pendantes en fonction imines pendantes est totale : le signal des protons méthylènes en alpha de la fonction amine ($\delta$ = 2.6 ppm) a disparu. Un nouveau signal est apparu à 3.5 ppm pour les protons méthylène en alpha de la fonction imine formée, ainsi que le signal du proton imine à 8.3 ppm.

**D. Formation et caractérisation de réseaux de polymères réticulés contenant des liaisons pendantes échangeables par réactions d'échange aldéhyde-imine et/ou par réactions d'échange imine-imine et/ou par réactions d'échange imine-amine primaire.**

**D.1. Réseaux de polymères réticulés contenant des liaisons pendantes et des points de réticulation échangeables par réactions d'échange imine-amine primaire.**

Les exemples suivant présentent des exemples de formulation liquide et illustrent la formation en solution d'un réseau de polymères réticulés suivant l'invention.

a/ 25.3 g de AMS-163 sont mis en solution dans 10 g de THF anhydre. 0.54 g (3 eq. par chaine siloxane) de composé de formule (I) CF3 sont dissouts dans 2 g de THF anhydre et ajouté sous agitation à la solution de AMS-163. Après 2h environ, un réseau de polymères réticulés est obtenu.

b/ 25.3 g de AMS-163 sont mis en solution dans 10 g de THF anhydre. 0.9 g (5 eq. par chaine siloxane) de composé de formule (I) CF3 sont dissouts dans 2 g de THF anhydre et ajouté sous agitation à la solution de AMS-163. Après 2h environ, un réseau de polymères réticulés est obtenu.

c/ 25.3 g de AMS-163 sont mis en solution dans 10 g de THF anhydre. 1.8 g (10 eq. par chaine siloxane) de composé de formule (I) CF3 sont dissouts dans 2 g de THF anhydre et ajouté sous agitation à la solution de AMS-163. Après 2h environ, un réseau de polymères réticulés est obtenu.

Les exemples suivant présentent des exemples de formulation solide et illustrent la formation de réseaux de polymères réticulés suivant l'invention ainsi que leur mise en forme par compression.

d/ 25.3 g de AMS-163 sont mis en solution dans 10 g de THF anhydre. 0.54 g (3 eq. par chaine siloxane) de composé de formule (I) CF3 sont dissouts dans 2 g de THF anhydre et ajouté sous agitation à la solution de AMS-163. Après 2h environ, un réseau de polymères réticulés est obtenu. Le THF est évaporé sous cloche à vide pendant 4h à 100°C. Le séchage est complété dans une étuve à vide à 120°C pendant 12h pour éliminer le THF résiduel.

Le réseau de polymères réticulés sec est découpé en morceaux puis mis en forme sous presse chauffante à 130°C et 3 tonnes pendant 1h.

e/ 25.3 g de AMS-163 sont mis en solution dans 10 g de THF anhydre. 0.9 g (5 eq. par chaine siloxane) de composé de formule (I) CF3 sont dissouts dans 2 g de THF anhydre et ajouté sous agitation à la solution de AMS-163. Après 2h environ, un réseau de polymères réticulés est obtenu. Le THF est évaporé sous cloche à vide pendant 4h à 100°C. Le séchage est complété dans une étuve à vide à 120°C pendant 12h pour éliminer le THF résiduel.

Le réseau de polymères réticulés sec est découpé en morceaux puis mis en forme sous presse chauffante à 130°C et 3 tonnes pendant 1h.

**D.2. Réseaux de polymères réticulés contenant des liaisons pendantes et des points de réticulation échangeables par réactions d'échange imine-aldéhyde.**

Les exemples suivant présentent des exemples de formulation liquide et illustrent la formation en solution d'un réseau de polymères réticulés suivant l'invention.

a/ 29.4 g de AMS-163Benz sont mis en solution dans 20.3 g de THF anhydre. 0.22 g (3 eq. par chaine siloxane) de téréphtaldéhyde sont dissouts dans 2 g de THF anhydre et ajouté sous agitation à la solution de AMS-163Benz. Après 2h environ, un réseau de polymères réticulés est obtenu.
b/ 24.2 g de AMS-163Benz sont mis en solution dans 18 g de THF anhydre. 0.31 g (5 eq. par chaine siloxane) de téréphtaldéhyde sont dissouts dans 2 g de THF anhydre et ajouté sous agitation à la solution de AMS-163Benz. Après 2h environ, un réseau de polymères réticulés est obtenu.

Les exemples suivant présentent des exemples de formulation solide et illustrent la formation de réseaux de polymères réticulés suivant l'invention, leur mise en forme par compression et leur insolubilité dans un bon solvant non réactif du polymère constituant le réseau de polymères réticulés.
c/ 29.4 g de AMS-163Benz sont mis en solution dans 20.3 g de THF anhydre. 0.22 g (3 eq. par chaine siloxane) de téréphtaldéhyde sont dissouts dans 2 g de THF anhydre et ajouté sous agitation à la solution de AMS-163Benz. Après 2h environ, un réseau de polymères réticulés est obtenu. le THF est évaporé sous cloche à vide pendant 4h à 100°C. Le séchage est complété dans une étuve à vide à 120°C pendant 12h pour éliminer le THF résiduel.
Le réseau de polymères réticulés sec est découpé en morceaux puis mis en forme sous presse chauffante à 130°C et 3 tonnes pendant 1h.
Test de solubilité à température ambiante dans le THF anhydre
Un échantillon (139 mg) du réseau de polymères réticulés ainsi obtenu est introduit dans 10 mL de THF anhydre et laissé à gonfler 24 heures à température ambiante. Le taux de gonflement (SR) et la fraction soluble (SF) du réseau de polymères réticulés sont ensuite calculés.

Taux de gonflement = (Masse de l'échantillon gonflé-Masse de l'échantillon sec après gonflement)/(Masse de l'échantillon sec après gonflement)

Fraction soluble = (Masse de l'échantillon sec avant gonflement-Masse de l'échantillon sec après gonflement)/(Masse de l'échantillon sec avant gonflement)

$$\text{Fraction insoluble} = 100 - \text{fraction soluble}$$

Résultats : taux de gonflement SR = 15.4 ; fraction soluble SF = 29.6 % ; fraction insoluble = 70.4 %
d/ 24.2 g de AMS-163Benz sont mis en solution dans 18 g de THF anhydre. 0.31 g (5 eq. par chaine siloxane) de téréphtaldéhyde sont dissouts dans 2 g de THF anhydre et ajouté sous agitation à la solution de AMS-163Benz. Après 2h environ, un réseau de polymères réticulés est obtenu. le THF est évaporé sous cloche à vide pendant 4h à 100°C. Le séchage est complété dans une étuve à vide à 120°C pendant 12h pour éliminer le THF résiduel.
Le réseau de polymères réticulés sec est découpé en morceaux puis mis en forme sous presse chauffante à 130°C et 3 tonnes pendant 1h.
Test de solubilité à température ambiante dans le THF anhydre
Un échantillon (130 mg) du réseau de polymères réticulés ainsi obtenu est introduit dans 10 mL de THF anhydre et laissé à gonfler 16 heures à température ambiante. Le taux de gonflement (SR) et la fraction soluble (SF) du réseau de polymères réticulés sont ensuite calculés. Résultats : taux de gonflement SR = 6.21 ; fraction soluble SF = 13.9 % ; fraction insoluble = 86.1 %.

**D.3. Réseaux de polymères réticulés contenant des liaisons pendantes et des points de réticulation échangeables par réactions d'échange imine-imine.**

Les exemples suivant présentent des exemples de formulation liquide et illustrent la formation en solution d'un réseau de polymères réticulés suivant l'invention.

a/ 22.3 g de AMS-163Benz sont mis en solution dans 18 g de THF anhydre. 0.445 g (3 eq. par chaine siloxane) de

composé de formule (I) CF3 sont dissouts dans 4 g de THF anhydre et ajouté sous agitation à la solution de AMS-163Benz. Après 2h environ, un réseau de polymères réticulés est obtenu.

b/ 22 g de AMS-163Benz sont mis en solution dans 18 g de THF anhydre. 0.733 g (5 eq. par chaine siloxane) de composé de formule (I) CF3 sont dissouts dans 4 g de THF anhydre et ajouté sous agitation à la solution de AMS-163Benz. Après 2h environ, un réseau de polymères réticulés est obtenu.

Les exemples suivant présentent des exemples de formulation solide et illustrent la formation de réseaux de polymères réticulés suivant l'invention, leur mise en forme par compression et leur insolubilité dans un bon solvant non réactif du polymère constituant le réseau de polymères réticulés.

c/ 22.3 g de AMS-163Benz sont mis en solution dans 18 g de THF anhydre. 0.445 g (3 eq. par chaine siloxane) de composé de formule (I) CF3 sont dissouts dans 4 g de THF anhydre et ajouté sous agitation à la solution de AMS-163Benz. Après 2h environ, un réseau de polymères réticulés est obtenu. Le THF est évaporé sous cloche à vide pendant 4h à 100°C. Le séchage est complété dans une étuve à vide à 120°C pendant 12h pour éliminer le THF résiduel.

Le réseau de polymères réticulés sec est découpé en morceaux puis mis en forme sous presse chauffante à 130°C et 3 tonnes pendant 1h.

Test de solubilité à température ambiante dans le THF anhydre

Un échantillon (120 mg) du réseau de polymères réticulés ainsi obtenu est introduit dans 10 mL de THF anhydre et laissé à gonfler 24 heures à température ambiante. Le taux de gonflement (SR) et la fraction soluble (SF) du réseau de polymères réticulés sont ensuite calculés. Résultats : taux de gonflement SR = 23.6 ; fraction soluble SF = 32 % ; fraction insoluble = 68 %

d/ 22 g de AMS-163Benz sont mis en solution dans 18 g de THF anhydre. 0.733 g (5 eq. par chaine siloxane) de composé de formule (I) CF3 sont dissouts dans 4 g de THF anhydre et ajouté sous agitation à la solution de AMS-163Benz. Après 2h environ, un réseau de polymères réticulés est obtenu. Après 2h environ, un réseau de polymères réticulés est obtenu. Le THF est évaporé sous cloche à vide pendant 4h à 100°C. Le séchage est complété dans une étuve à vide à 120°C pendant 12h pour éliminer le THF résiduel.

Le réseau de polymères réticulés sec est découpé en morceaux puis mis en forme sous presse chauffante à 130°C et 3 tonnes pendant 1h.

Test de solubilité à température ambiante dans le THF anhydre

Un échantillon (144 mg) du réseau de polymères réticulés ainsi obtenu est introduit dans 10 mL de THF anhydre et laissé à gonfler 24 heures à température ambiante. Le taux de gonflement (SR) et la fraction soluble (SF) du réseau de polymères réticulés sont ensuite calculés. Résultats : taux de gonflement SR = 6.47 ; fraction soluble SF = 11.2 % ; fraction insoluble = 88.8 %.

## Revendications

**1.** Composition de silicones comprenant (a) des polymères comprenant des unités consécutives -Si-O- réticulés contenant des liaisons pendantes échangeables et des points de réticulation échangeables, par réactions d'échange aldéhyde-imine et/ou par réactions d'échange imine-imine et/ou par réactions d'échange imine-amine primaire, obtenu par réticulation de polymères comprenant des unités consécutives -Si-O-linéaires ou branchés et (b) des aldéhydes libres monofonctionnels et/ou des imines libres monofonctionnelles et/ou des amines primaires libres monofonctionnelles, en particulier la composition comprend des aldéhydes et qu'au moins 1% en mole des fonctions aldéhydes sont des fonctions aldéhydes aromatiques .

**2.** Composition selon la revendication précédente, **caractérisée en ce que** les polymères, avant réticulation, sont des polymères linéaires ou branchés ayant des groupements latéraux portant :

- des groupements fonctionnels aldéhyde, ou
- des groupements fonctionnels imine reliés au polymère par l'atome de carbone, ou
- des groupements fonctionnels imine reliés au polymère par l'atome d'azote, ou
- des groupements fonctionnels aldéhyde et des groupements fonctionnels imine reliés au polymère par l'atome de carbone, ou
- des groupements fonctionnels amine primaire, ou
- des groupements fonctionnels amine primaire et des groupements fonctionnels imine reliés au polymère par l'atome d'azote.

**3.** Composition selon l'une quelconque des revendications précédentes, **caractérisée en ce qu'**elle résulte du mélange, à l'état fondu ou en solution :

- D'au moins un polymère silicone, comprenant des unités consécutives -Si-O- , linéaire ou branché P1 ayant des groupements latéraux portant :

  - des groupements fonctionnels aldéhyde, ou
  - des groupements fonctionnels imine reliés au polymère par l'atome de carbone, ou
  - des groupements fonctionnels imine reliés au polymère par l'atome d'azote, ou
  - des groupements fonctionnels aldéhyde et des groupements fonctionnels imine reliés au polymère par l'atome de carbone, ou
  - des groupements fonctionnels amine primaire, ou
  - des groupements fonctionnels amine primaire et des groupements fonctionnels imine reliés au polymère par l'atome d'azote

- D'au moins un additif portant au moins deux groupements fonctionnels imine et/ou aldéhyde et/ou amine primaire aptes à réagir avec les groupements latéraux du polymère silicone P1 pour former une composition de polymères réticulés, avantageusement un réseau réticulé, à liaisons échangeables et points de réticulation échangeables par réactions d'échange aldéhyde-imine ou par réactions d'échange imine-imine ou par réactions d'échange imine-amine primaire ;
- avantageusement, des aldéhydes libres monofonctionnels.

4. Composition selon la revendication 3, **caractérisée en ce que** l'additif est un composé de formule (I) ou de formule (II) ou un mélange de ces composés, les formules (I) et (II) répondant aux définitions suivantes :

$$(R_1)(R_2)Y{=}Z(R_3){-}R_4{-}\left[W_1(R'){=}W_{2i}(R''_i)(R''')\right]_n \quad \text{(I) ou} \qquad H_2N{-}R'_4{-}\left[NH_2\right]_{n'} \quad \text{(II)}$$

dans laquelle

n, n' est un entier variant de 1 à 6;
i est un entier variant de 1 à n
les liaisons en pointillé sont présentes ou absentes, en fonction de la valence de Y, Z, $W_1$, $W_{2i}$
Y et Z sont différents et chacun représente soit C soit N, ou Y est O et alors Z est C

- lorsque Y représente C, alors Z représente N, et R1 représente un groupe hydrocarboné, R2 représente H et $R_3$ est absent,
- lorsque Y représente N, alors Z représente C, et $R_1$ représente H ou un groupe hydrocarboné, $R_2$ est absent et $R_3$ représente H,
- lorsque Y est O, alors Z est C et, $R_1$, $R_2$ sont absents et $R_3$ représente H

$R_4$ et $R'_4$ représentent un groupe hydrocarboné lié aux fonctions amine et/ou imine et/ou aldéhyde par une liaison covalente via un atome de carbone
dans chaque bloc $W_1(R')=W_{2i}(R''_i)(R''')$,
$W_1$ et $W_{2i}$ sont différents et chacun représente soit C soit N, ou $W_{2i}$ est O et alors $W_1$ est C

- lorsque $W_{2i}$ représente C, alors $W_1$ représente N et R' est absent, $R''_i$ représente un groupe hydrocarboné et R''' représente H,
- lorsque $W_{2i}$ représente N, alors $W_1$ représente C et R' représente H, $R''_i$ représente H ou un groupe hydrocarboné, et R''' est absent,
- lorsque $W_{2i}$ est O, alors $W_1$ est C et $R''_i$, R''' sont absents et R' représente H

lorsque Z représente C, alors $W_1$ représente C,
lorsque Y représente C, alors $W_{2i}$ représente C ;
l'additif peut être un mélange de composés de formule (I) et de formule (II) lorsque dans le composé de formule (I)

Z représente N et $W_1$ représente N.

**5.** Composition selon la revendication 3 ou 4, **caractérisée en ce que** l'additif est un polymère silicone linéaire ou branché P2, comprenant des unités consécutives -Si-O- , ayant des groupements latéraux portant :

- des groupements fonctionnels aldéhyde, ou
- des groupements fonctionnels imine reliés au polymère par l'atome de carbone, ou
- des groupements fonctionnels imine reliés au polymère par l'atome d'azote, ou
- des groupements fonctionnels aldéhyde et des groupements fonctionnels imine reliés au polymère par l'atome de carbone, ou
- des groupements fonctionnels amine primaire, ou
- des groupements fonctionnels amine primaire et des groupements fonctionnels imine reliés au polymère par l'atome d'azote.

**6.** Composition selon l'une quelconque des revendications 3 à 5, **caractérisée en ce que**

- le polymère silicone P1 a des groupements latéraux portant des groupements fonctionnels imines reliés à la chaîne principale par leurs atomes de carbone et l'additif est choisi parmi : un polymère silicone P2 dont les groupements latéraux portent des groupements fonctionnels imine reliés à la chaîne principale par leurs atomes d'azote, un polymère silicone P2 dont les groupements latéraux portent des groupements fonctionnels amine primaire, un polymère silicone P2 comprenant des groupements latéraux portant des groupements fonctionnels amine primaire et des groupements latéraux portant des groupements fonctionnels imine reliés à la chaîne principale par leurs atomes d'azote, un composé de formule (I) dans lequel les atomes Z et $W_1$ représentent N, un composé de formule (II), un mélange de composés de formule (II) et de formule (I) dans lequel les atomes Z et $W_1$ représentent N, ou un mélange de ces additifs;
- le polymère silicone P1 a des groupements latéraux portant des groupements fonctionnels imine reliés à la chaîne principale par leurs atomes d'azote et l'additif est choisi parmi : un polymère silicone P2 dont les groupements latéraux portent des groupements fonctionnels imine reliés à la chaîne principale par leurs atomes de carbone, un polymère silicone P2 dont les groupements latéraux portent des groupements fonctionnels aldéhyde, un polymère silicone P2 comprenant des groupements latéraux portant des groupements fonctionnels aldéhyde et des groupements latéraux portant des groupements fonctionnels imine reliés au polymère par l'atome de carbone, un composé de formule (I) dans lequel les atomes Z et W1 représentent C ou un mélange de ces additifs ;
- le polymère silicone P1 a des groupements latéraux portant des groupements fonctionnels aldéhyde et l'additif est choisi parmi : un polymère silicone P2 ayant des groupements latéraux portant des groupements fonctionnels imine reliés à la chaîne principale par leurs atomes d'azote, un polymère silicone P2 comprenant des groupements latéraux portant des groupements fonctionnels amine primaire et des groupements latéraux portant des groupements fonctionnels imine reliés au polymère par l'atome d'azote, un composé de formule (I) dans lequel les atomes Z et W1 représentent N ou un mélange de ces additifs ;
- le polymère silicone P1 a des groupements latéraux portant des groupements fonctionnels amine primaire et l'additif est un polymère silicone P2 comprenant des groupements latéraux portant des groupements fonctionnels imine reliés au polymère par l'atome de carbone, un polymère silicone P2 comprenant des groupements latéraux portant des groupements fonctionnels aldéhyde et des groupements latéraux portant des groupements fonctionnels imine reliés au polymère par l'atome de carbone, un composé de formule (I) dans lequel les atomes Z et W1 représentent C et, Y et un W2i au moins représentent N, les autres W2i représentent, chacun indépendamment les uns des autres, N ou O le cas échéant ou un mélange de ces additifs;
- le polymère silicone P1 a des groupements latéraux portant des groupements fonctionnels aldéhyde et des groupements latéraux portant des groupements fonctionnels imine reliées à la chaîne principale par leurs atomes de carbone et l'additif est un polymère silicone P2 comprenant des groupements latéraux portant des groupements fonctionnels amine primaire, un polymère silicone P2 comprenant des groupements latéraux portant des groupements fonctionnels imine reliés au polymère par l'atome d'azote, un polymère silicone P2 comprenant des groupements latéraux portant des groupements fonctionnels amine primaire et des groupements latéraux portant des groupements fonctionnels imine reliés au polymère par l'atome d'azote, un composé de formule (I) dans lequel les atomes Z et W1 représentent N, un composé de formule II, un mélange de composés de formule (II) et de formule (I) dans lequel les atomes Z et W1 représentent N ou un mélange de ces additifs;
- le polymère silicone P1 a des groupements latéraux portant des groupements fonctionnels amine primaire et des groupements latéraux portant des groupements fonctionnels imine reliées à la chaîne principale par leurs atomes d'azote et l'additif est un polymère silicone P2 comprenant des groupements latéraux portant des

groupements fonctionnels aldéhyde, un polymère silicone P2 comprenant des groupements latéraux portant des groupements fonctionnels imine reliés au polymère par l'atome de carbone, un polymère silicone P2 comprenant des groupements latéraux portant des groupements fonctionnels aldéhyde et des groupements latéraux portant des groupements fonctionnels imine reliés au polymère par l'atome de carbone, un composé de formule (I) dans lequel les atomes Z et W1 représentent C ou un mélange de ces additifs.

**7.** Composition selon l'une quelconque des revendications 1 à 2, **caractérisée en ce qu'**elle résulte du mélange, à l'état fondu ou en solution :

- D'au moins un polymère silicone linéaire ou branché P1', comprenant des unités consécutives -Si-O- , et comprenant des fonctions permettant un greffage,
- Une combinaison de molécules dont des molécules comprenant à une extrémité un groupe fonctionnel permettant de lier de façon covalente la molécule au polymère P1' et à l'autre extrémité un groupement fonctionnel choisi parmi une fonction imine reliée par son atome de carbone, une fonction imine reliée par son atome d'azote, une fonction aldéhyde ou une fonction amine primaire, et/ou des molécules comprenant à deux de leurs extrémités des groupes fonctionnels permettant de lier de façon covalente la molécule au polymère P1' et entre ses deux extrémités une fonction imine, la combinaison devant permettre le greffage et la création de liaisons pendantes échangeables et de points de réticulation échangeables par réactions d'échange aldéhyde-imine et/ou par réactions d'échange imine-imine et/ou par réactions d'échange imine-amine primaire ;
- avantageusement, des aldéhydes libres monofonctionnels.

**8.** Composition selon l'une quelconque des revendications précédentes, **caractérisée en ce que** l'aldéhyde est une molécule pour laquelle la fonction aldéhyde est portée par un groupement aryle, hétéroaryle ou la fonction alcène d'un terpénoïde.

**9.** Procédé pour préparer une composition de polymères silicones, comprenant des unités consécutives -Si-O- , réticulés, ledit procédé comprend les étapes suivantes :

- Choisir un polymère silicone, comprenant des unités consécutives -Si-O-, linéaire ou branché P1 ayant des groupements latéraux portant :

  - des groupements fonctionnels aldéhyde, ou
  - des groupements fonctionnels imine reliés au polymère par l'atome de carbone, ou
  - des groupements fonctionnels imine reliés au polymère par l'atome d'azote, ou
  - des groupements fonctionnels aldéhyde et des groupements fonctionnels imine reliés au polymère par l'atome de carbone, ou
  - des groupements fonctionnels amine primaire, ou
  - des groupements fonctionnels amine primaire et des groupements fonctionnels imine reliés au polymère par l'atome d'azote ;

- Choisir au moins un additif portant au moins deux groupements fonctionnels imine et/ou aldéhyde et/ou amine primaire aptes à réagir avec les groupements latéraux du polymère P1 pour former une composition de polymères réticulés, avantageusement un réseau réticulé, contenant des liaisons pendantes échangeables et des points de réticulation échangeables par réactions d'échange aldéhyde-imine et/ou par réactions d'échange imine-imine et/ou par réactions d'échange imine-amine primaire ;

  - Mélanger, à l'état fondu ou en solution, ledit polymère P1, ledit additif et le cas échéant un aldéhyde libre monofonctionnel, pour obtenir ladite composition.

**10.** Procédé pour préparer une composition de polymères réticulés, ledit procédé comprend les étapes suivantes :

- Choisir un polymère silicone, comprenant des unités consécutives -Si-O-, linéaire ou branché P1' comprenant des fonctions permettant un greffage,
- Choisir une combinaison de molécules dont des molécules comprenant à une extrémité un groupe fonctionnel permettant de lier de façon covalente la molécule au polymère P1' et à l'autre extrémité un groupement fonctionnel choisi parmi une fonction imine reliée par son atome de carbone, une fonction imine reliée par son atome d'azote, une fonction aldéhyde, ou une fonction amine primaire et/ou des molécules comprenant à deux de leurs extrémités des groupes fonctionnels permettant de lier de façon covalente la molécule au polymère

P1' et entre ces deux extrémités une fonction imine, la combinaison devant permettre le greffage et la création de liaisons pendantes échangeables et de points de réticulation échangeables par réactions d'échange aldéhyde-imine et/ou par réactions d'échange imine-imine et/ou par réactions d'échange imine-amine primaire ;
- Mélanger, à l'état fondu ou en solution, ledit polymère P1', ladite combinaison et le cas échéant un aldéhyde libre monofonctionnel, pour obtenir ladite composition.

**11.** Utilisation d'aldéhyde pour catalyser les réactions de métathèse imine-imine et les réactions d'échange imine-aldéhyde réalisées dans les compositions définies dans les revendications 1 à 8.

**12.** Matériau obtenu à partir de la composition selon l'une quelconque des revendications 1 à 8.

**13.** Formulation comprenant une composition selon l'une quelconque des revendications 1 à 8.

**14.** Utilisation d'un additif tel que défini dans l'une quelconque des revendications 3 à 5, ou d'une combinaison telle que définie à la revendication 7, en présence d'un polymère silicone, comprenant des unités consécutives -Si-O-, linéaire ou branché P1 ou P1' pour la formation d'une composition comprenant des polymères silicones, comprenant des unités consécutives -Si-O-, réticulés, avantageusement un réseau silicone réticulé, contenant des liaisons pendantes échangeables et des points de réticulation échangeables par réactions d'échange aldéhyde-imine et/ou par réactions d'échange imine-imine et/ou par réactions d'échange imine-amine primaire, des aldéhydes libres monofonctionnels et/ou des imines libres monofonctionnelles et/ou des amines primaires libres monofonctionnelles.

**15.** Combinaisons pour réticuler des polymères silicones, comprenant des unités consécutives -Si-O-, linéaires ou branchés P1 tel que défini dans la revendication 3 ou P1' tel que défini dans la revendication 7, lesdites combinaisons étant choisies parmi des combinaisons comprenant :

• Pour réticuler ledit polymère P1 :

- Un aldéhyde libre monofonctionnel + composé de formule (I), tels que définis à l'une des revendications précédentes ;
- Composé de formule (II) + composé de formule (I) dans lequel Z représente N et W1 représente N, tels que définis à l'une des revendications précédentes ; ou
- Un aldéhyde libre monofonctionnel + polymère silicone P2, tels que définis à l'une des revendications précédentes ;

• Pour réticuler ledit polymère P1' :

- A et/ou B + C, et éventuellement un aldéhyde libre monofonctionnel tels que définis à l'une des revendications précédentes ;
- A, éventuellement B, + C et/ou E, et éventuellement un aldéhyde libre monofonctionnel tels que définis à l'une des revendications précédentes
- A et/ou B et/ou C + D et/ou E, et éventuellement un aldéhyde libre monofonctionnel tels que définis à l'une des revendications précédentes ;
- A et/ou B + composé de formule (I) pour lequel Z et W1 sont N, et éventuellement un aldéhyde libre monofonctionnel, tels que définis à l'une des revendications précédentes ;
- A, éventuellement B, + composé de formule (II) et éventuellement un aldéhyde libre monofonctionnel, tels que définis à l'une des revendications précédentes ;
- C et/ou E + composé de formule (I) pour lequel Z et W1 sont C, et éventuellement un aldéhyde libre monofonctionnel, tels que définis à l'une des revendications précédentes ; ou

A, B, C, D, E répondant aux formules suivantes : (A) $G_1$-Rx-CH=N-Ry, (B) $G_2$-R'x-CH=O, (C) $G_3$-R"y-N=CH-R"x, (D) $G_4$-R'''x-CH=N-R'''y-$G_5$ et (E) $G_6$-Rw-$NH_2$, où les lettres $G_1$, $G_2$, $G_3$, $G_4$, $G_5$ et $G_6$ représentent un groupe fonctionnel permettant de lier de façon covalente les molécules aux chaînes polymère à fonctionnaliser, Rx, R'x, R"x, R'''x et Ry, R"y, R"'y, Rw sont des groupes hydrocarbonés.

**16.** Utilisation d'une combinaison telle que définie à la revendication 15, en présence d'un polymère silicone, comprenant des unités consécutives -Si-O-, linéaire ou branché P1 ou P1' pour la formation d'une composition comprenant des polymères réticulés, avantageusement d'un réseau silicone réticulé, contenant des liaisons pendantes échangeables et des points de réticulation échangeables par réactions d'échange aldéhyde-imine et/ou par réactions

d'échange imine-imine et/ou par réactions d'échange imine-amine primaire et des aldéhydes libres monofonctionnels et/ou des imines libres monofonctionnelles et/ou des amines primaires libres monofonctionnelles.

17. Utilisation selon la revendication 16 pour modifier la rhéologie d'une composition, telle qu'une huile, une peinture ou une formulation cosmétique, comprenant ledit polymère P1 ou P1' par ajout à la composition de la combinaison selon la revendication 15.

**Patentansprüche**

1. Silikonzusammensetzung, umfassend (a) Polymere, die aufeinanderfolgende vernetzte -Si-O-Einheiten umfassen, die austauschbare nicht abgesättigte Bindungen und austauschbare Vernetzungspunkte enthalten, durch Aldehyd-Imin-Austauschreaktionen und/oder durch Imin-Imin-Austauschreaktionen und/oder durch Imin-primäres Amin-Austauschreaktionen, erhalten durch Vernetzung von Polymeren, die aufeinanderfolgende lineare oder verzweigte -Si-O--Einheiten umfassen, und (b) freie monofunktionelle Aldehyde und/oder freie monofunktionelle Imine und/oder freie monofunktionelle primäre Amine, wobei die Zusammensetzung insbesondere Aldehyde umfasst und mindestens 1 Mol-% der Aldehydfunktionen aromatische Aldehydfunktionen sind.

2. Zusammensetzung nach vorstehendem Anspruch, **dadurch gekennzeichnet, dass** die Polymere vor der Vernetzung lineare oder verzweigte Polymere sind, die Seitengruppen aufweisen, die tragen:

- funktionelle Aldehyd-Gruppen, oder
- funktionelle Imin-Gruppen, die über das Kohlenstoffatom an das Polymer gebunden sind, oder
- funktionelle Imin-Gruppen, die über das Stickstoffatom an das Polymer gebunden sind, oder
- funktionelle Aldehyd-Gruppen und funktionelle Imin-Gruppen, die über das Kohlenstoffatom an das Polymer gebunden sind, oder
- funktionelle primäres Amin-Gruppen, oder
- funktionelle primäres Amin-Gruppen und funktionelle Imin-Gruppen, die über das Stickstoffatom an das Polymer gebunden sind.

3. Zusammensetzung nach einem der vorstehenden Ansprüche, **dadurch gekennzeichnet, dass** sie aus dem Gemisch in geschmolzenem Zustand oder in Lösung resultiert:

- mindestens eines linearen oder verzweigten Silikonpolymers P1, das aufeinanderfolgende -Si-O-Einheiten umfasst, mit Seitengruppen, die tragen:
    - funktionelle Aldehyd-Gruppen, oder
    - funktionelle Imin-Gruppen, die über das Kohlenstoffatom an das Polymer gebunden sind, oder
    - funktionelle Imin-Gruppen, die über das Stickstoffatom an das Polymer gebunden sind, oder
    - funktionelle Aldehyd-Gruppen und funktionelle Imin-Gruppen, die über das Kohlenstoffatom an das Polymer gebunden sind, oder
    - funktionelle primäres Amin-Gruppen, oder
    - funktionelle primäres Amin-Gruppen und funktionelle Imin-Gruppen, die über das Stickstoffatom an das Polymer gebunden sind
- mindestens eines Additivs, das mindestens zwei funktionelle Imin- und/oder Aldehyd- und/oder primäres Amin-Gruppen trägt, die geeignet sind, mit den Seitengruppen des Silikonpolymers P1 zu reagieren, um eine Zusammensetzung aus vernetzten Polymeren zu bilden, in vorteilhafter Weise ein vernetztes Netzwerk, mit austauschbaren Bindungen und austauschbaren Vernetzungspunkten, durch Aldehyd-Imin-Austauschreaktionen oder durch Imin-Imin-Austauschreaktionen oder durch Imin-primäres Amin-Austauschreaktionen;
- in vorteilhafter Weise freier monofunktioneller Aldehyde.

4. Zusammensetzung nach Anspruch 3, **dadurch gekennzeichnet, dass** das Additiv eine Verbindung der Formel (I) oder der Formel (II) oder ein Gemisch dieser Verbindungen ist, wobei die Formeln (I) und (II) den folgenden Definitionen entsprechen:

$$R_1\ R_2\ Y{=}Z(R_3){-}R_4{-}[W_1(R'){=}W_{2i}(R''_i)(R''')]_n \quad (I) \quad \text{oder} \quad H_2N{-}R'_4{-}[NH_2]_{n'} \quad (II)$$

wobei

n, n' eine ganze Zahl von 1 bis 6 ist;
i eine ganze Zahl von 1 bis n ist;
die gestrichelten Bindungen je nach Valenz von Y, Z, $W_1$, $W_{2i}$ vorhanden oder nicht vorhanden sind
Y und Z unterschiedlich sind und jeweils entweder für C oder N stehen, oder Y O ist und dann Z C ist

- wenn Y für C steht, dann steht Z für N, und R1 steht für eine Kohlenwasserstoffgruppe, R2 steht für H und R3 ist nicht vorhanden,
- wenn Y für N steht, dann steht Z für C, und $R_1$ steht für H oder eine Kohlenwasserstoffgruppe, $R_2$ ist nicht vorhanden und $R_3$ steht für H,
- wenn Y O ist, dann ist Z C, und $R_1$, $R_2$ sind nicht vorhanden und $R_3$ steht für H,

$R_4$ und $R'_4$ stehen für eine Kohlenwasserstoffgruppe, die über ein Kohlenstoffatom durch eine kovalente Bindung an die Amin- und/oder Imin- und/oder Aldehydfunktionen gebunden ist
in jedem Block $W_1(R')=W_{2i}(R''_i)(R''')$,
sind $W_1$ und $W_{2i}$ unterschiedlich und stehen jeweils entweder für C oder N, oder $W_{2i}$ ist O und dann ist $W_1$ C

- wenn $W_{2i}$ für C steht, dann steht $W_1$ für N und R' ist nicht vorhanden, $R''_i$ steht für eine Kohlenwasserstoffgruppe und R''' steht für H,
- wenn $W_{2i}$ für N steht, dann steht $W_1$ für C und R' steht für H, $R''_i$ steht für H oder für eine Kohlenwasserstoffgruppe und R''' ist nicht vorhanden,
- wenn $W_{2i}$ O ist, dann ist $W_1$ C und $R''_i$, R''' sind nicht vorhanden und R' steht für H

wenn Z für C steht, dann steht $W_1$ für C,
wenn Y für C steht, dann steht $W_{2i}$ für C;
das Additiv kann ein Gemisch aus Verbindungen der Formel (I) und der Formel (II) sein, wenn in der Verbindung der Formel (I) Z für N steht und $W_1$ für N steht.

**5.** Zusammensetzung nach Anspruch 3 oder 4, **dadurch gekennzeichnet, dass** das Additiv ein lineares oder verzweigtes Silikonpolymer P2 ist, das aufeinanderfolgende -Si-O--Einheiten umfasst, mit und Seitengruppen, die tragen:

- funktionelle Aldehyd-Gruppen, oder
- funktionelle Imin-Gruppen, die über das Kohlenstoffatom an das Polymer gebunden sind, oder
- funktionelle Imin-Gruppen, die über das Stickstoffatom an das Polymer gebunden sind, oder
- funktionelle Aldehyd-Gruppen und funktionelle Imin-Gruppen, die über das Kohlenstoffatom an das Polymer gebunden sind, oder
- funktionelle primäres Amin-Gruppen, oder
- funktionelle primäres Amin-Gruppen und funktionelle Imin-Gruppen, die über das Stickstoffatom an das Polymer gebunden sind.

**6.** Zusammensetzung nach einem der Ansprüche 3 bis 5, **dadurch gekennzeichnet, dass**

- das Silikonpolymer P1 Seitengruppen aufweist, die funktionelle Imin-Gruppen tragen, die über ihre Kohlenstoffatome an die Hauptkette gebunden sind, und das Additiv ausgewählt ist aus: einem Silikonpolymer P2, dessen Seitengruppen funktionelle Imin-Gruppen tragen, die über ihre Stickstoffatome an die Hauptkette gebunden sind, einem Silikonpolymer P2, dessen Seitengruppen funktionelle primäres Amin-Gruppen tragen, einem Silikonpolymer P2, das Seitengruppen umfasst, die funktionelle primäres Amin-Gruppen tragen und

Seitengruppen, die funktionelle Imin-Gruppen tragen, die über ihre Stickstoffatome an die Hauptkette gebunden sind, einer Verbindung der Formel (I), in der die Atome Z und $W_1$ für N stehen, einer Verbindung der Formel (II), einem Gemisch aus Verbindungen der Formel (II) und der Formel (I), in denen die Atome Z und $W_1$ für N stehen, oder einem Gemisch dieser Additive;

- das Silikonpolymer P1 Seitengruppen aufweist, die funktionelle Imin-Gruppen tragen, die über ihre Stickstoffatome an die Hauptkette gebunden sind, und das Additiv ausgewählt ist aus: einem Silikonpolymer P2, dessen Seitengruppen funktionelle Imin-Gruppen tragen, die über ihre Kohlenstoffatome an die Hauptkette gebunden sind, einem Silikonpolymer P2, dessen Seitengruppen funktionelle Aldehyd-Gruppen tragen, einem Silikonpolymer P2, das Seitengruppen umfasst, die funktionelle Aldehyd-Gruppen tragen, und Seitengruppen, die funktionelle Imin-Gruppen tragen, die über das Kohlenstoffatom an das Polymer gebunden sind, einer Verbindung der Formel (I), in der die Atome Z und W1 für C stehen, oder einem Gemisch dieser Additive;
- das Silikonpolymer P1 Seitengruppen aufweist, die funktionelle Aldehyd-Gruppen tragen, und das Additiv ausgewählt ist aus: einem Silikonpolymer P2 mit Seitengruppen, die funktionelle Imin-Gruppen tragen und über ihre Stickstoffatome an die Hauptkette gebunden sind, einem Silikonpolymer P2, das Seitengruppen umfasst, die funktionelle primäres Amin-Gruppen tragen und Seitengruppen, die funktionelle Imin-Gruppen tragen, die über das Stickstoffatom an das Polymer gebunden sind, einer Verbindung der Formel (I), in der die Atome Z und W1 für N stehen, oder einem Gemisch dieser Additive;
- das Silikonpolymer P1 Seitengruppen aufweist, die funktionelle primäres Amin-Gruppen tragen und das Additiv ein Silikonpolymer P2 ist, das Seitengruppen umfasst, die funktionelle Imin-Gruppen tragen, die über das Kohlenstoffatom an das Polymer gebunden sind, ein Silikonpolymer P2, das Seitengruppen umfasst, die funktionelle Aldehyd-Gruppen tragen und Seitengruppen, die funktionelle Imin-Gruppen tragen, die über das Kohlenstoffatom an das Polymer gebunden sind, eine Verbindung der Formel (I), in der die Atome Z und W1 für C stehen und Y und mindestens ein W2i für N stehen, die übrigen W2i jeweils unabhängig voneinander gegebenenfalls für N oder O stehen oder ein Gemisch dieser Additive;
- das Silikonpolymer P1 Seitengruppen aufweist, die funktionelle Aldehyd-Gruppen tragen und Seitengruppen, die funktionelle Imin-Gruppen tragen, die über ihre Kohlenstoffatome an die Hauptkette gebunden sind, und das Additiv ein Silikonpolymer P2 ist, das Seitengruppen umfasst, die funktionelle primäres Amin-Gruppen tragen, ein Silikonpolymer P2, das Seitengruppen umfasst, die funktionelle Imin-Gruppen tragen, die über das Stickstoffatom an das Polymer gebunden sind, ein Silikonpolymer P2, das Seitengruppen umfasst, die funktionelle primäres Amin-Gruppen tragen und Seitengruppen, die funktionelle Imin-Gruppen tragen, die über das Stickstoffatom an das Polymer gebunden sind, eine Verbindung der Formel (I), in der die Atome Z und W1 für N stehen, eine Verbindung der Formel II, ein Gemisch aus Verbindungen der Formel (II) und der Formel (I), in denen die Atome Z und W1 für N stehen, oder ein Gemisch dieser Additive;
- das Silikonpolymer P1 Seitengruppen aufweist, die funktionelle primäres Amin-Gruppen tragen und Seitengruppen, die funktionelle Imin-Gruppen tragen, die über ihre Stickstoffatome an die Hauptkette gebunden sind, und das Additiv ein Silikonpolymer P2 ist, das Seitengruppen umfasst, die funktionelle Aldehyd-Gruppen tragen, ein Silikonpolymer P2, das Seitengruppen umfasst, die funktionelle Imin-Gruppen tragen, die über das Kohlenstoffatom an das Polymer gebunden sind, ein Silikonpolymer P2, das Seitengruppen umfasst, die funktionelle Aldehyd-Gruppen tragen und Seitengruppen, die funktionelle Imin-Gruppen tragen, die über das Kohlenstoffatom an das Polymer gebunden sind, eine Verbindung der Formel (I), in der die Atome Z und W1 für C stehen, oder ein Gemisch dieser Additive.

**7.** Zusammensetzung nach einem der Ansprüche 1 bis 2, **dadurch gekennzeichnet, dass** sie aus dem Gemisch in geschmolzenem Zustand oder in Lösung resultiert:

- mindestens eines linearen oder verzweigten Silikonpolymers P1', das aufeinanderfolgende -Si-O-Einheiten umfasst und Funktionen umfasst, die eine Pfropfung ermöglichen,
- einer Kombination von Molekülen, darunter Moleküle, die an einem Ende eine funktionelle Gruppe umfassen, die eine kovalente Bindung des Moleküls an das Polymer P1' ermöglicht, und am anderen Ende eine funktionelle Gruppe, ausgewählt aus einer über ihr Kohlenstoffatom gebundenen Iminfunktion, einer über ihr Stickstoffatom gebundenen Iminfunktion, einer Aldehydfunktion oder einer primäres Amin-Funktion, und/oder Molekülen, die an zwei ihrer Enden funktionelle Gruppen umfassen, die eine kovalente Bindung des Moleküls an das Polymer P1' ermöglichen und zwischen ihren beiden Enden eine Iminfunktion, wobei die Kombination die Pfropfung und die Bildung von austauschbaren nicht abgesättigten Bindungen sowie von austauschbaren Vernetzungspunkten durch Aldehyd-Imin-Austauschreaktionen und/oder durch Imin-Imin-Austauschreaktionen und/oder durch Imin-primäres Amin-Austauschreaktionen ermöglichen muss;
- in vorteilhafter Weise monofunktioneller freier Aldehyde.

8. Zusammensetzung nach einem der vorstehenden Ansprüche, **dadurch gekennzeichnet, dass** der Aldehyd ein Molekül ist, bei dem die Aldehydfunktion von einer Aryl- , Heteroaryl- oder der Alkenfunktion eines Terpenoids getragen wird.

9. Verfahren zur Herstellung einer Zusammensetzung aus vernetzten Silikonpolymeren, die aufeinanderfolgende -Si-O--Einheiten umfassen, wobei das Verfahren die folgenden Schritte umfasst:

- Auswählen eines linearen oder verzweigten Silikonpolymers P1, das aufeinanderfolgende -Si-O-Einheiten umfasst und Seitengruppen aufweist, die tragen:

    ▪ funktionelle Aldehyd-Gruppen, oder
    ▪ funktionelle Imin-Gruppen, die über das Kohlenstoffatom an das Polymer gebunden sind, oder
    ▪ funktionelle Imin-Gruppen, die über das Stickstoffatom an das Polymer gebunden sind, oder
    ▪ funktionelle Aldehyd-Gruppen und funktionelle Imin-Gruppen, die über das Kohlenstoffatom an das Polymer gebunden sind, oder
    ▪ funktionelle primäres Amin-Gruppen, oder
    ▪ funktionelle primäres Amin-Gruppen und funktionelle Imin-Gruppen, die über das Stickstoffatom an das Polymer gebunden sind;

- Auswählen mindestens eines Additivs, das mindestens zwei funktionelle Imin- und/oder Aldehyd-und/oder primäres Amin-Gruppen trägt, die geeignet sind, mit den Seitengruppen des Polymers P1 zu reagieren, um eine Zusammensetzung aus vernetzten Polymeren zu bilden, in vorteilhafter Weise ein vernetztes Netzwerk, das austauschbare nicht abgesättigte Bindungen und austauschbare Vernetzungspunkte enthält, durch Aldehyd-Imin-Austauschreaktionen und/oder durch Imin-Imin-Austauschreaktionen und/oder durch Imin-primäres Amin-Austauschreaktionen;
- Mischen des Polymers P1, des Additivs und gegebenenfalls eines freien monofunktionellen Aldehyds in geschmolzenem Zustand oder in Lösung, um die Zusammensetzung zu erhalten.

10. Verfahren zur Herstellung einer Zusammensetzung aus vernetzten Polymeren, wobei das Verfahren die folgenden Schritte umfasst:

- Auswählen eines linearen oder verzweigten Silikonpolymers P1', das aufeinanderfolgende -Si-O-Einheiten umfasst und Funktionen umfasst, die eine Pfropfung ermöglichen,
- Auswählen einer Kombination von Molekülen, darunter Moleküle, die an einem Ende eine funktionelle Gruppe umfassen, die eine kovalente Bindung des Moleküls an das Polymer P1' ermöglicht, und am anderen Ende eine funktionelle Gruppe, ausgewählt aus einer über ihr Kohlenstoffatom gebundenen Iminfunktion, einer über ihr Stickstoffatom gebundenen Iminfunktion, einer Aldehydfunktion oder einer primäres Amin-Funktion, und/oder Molekülen, die an zwei ihrer Enden funktionelle Gruppen umfassen, die eine kovalente Bindung des Moleküls an das Polymer P1' ermöglichen, und zwischen diesen beiden Enden eine Iminfunktion, wobei die Kombination die Pfropfung und die Bildung von austauschbaren nicht abgesättigten Bindungen sowie von austauschbaren Vernetzungspunkten durch Aldehyd-Imin-Austauschreaktionen und/oder durch Imin-Imin-Austauschreaktionen und/oder durch Imin-primäres Amin-Austauschreaktionen ermöglichen muss;
- Mischen des Polymers P1', die Kombination und gegebenenfalls eines monofunktionellen freien Aldehyds in geschmolzenem Zustand oder in Lösung, um die Zusammensetzung zu erhalten.

11. Verwendung von Aldehyd zur Katalyse von Imin-Imin-Metathese-Reaktionen und Imin-Aldehyd-Austauschreaktionen, die in den in den Ansprüchen 1 bis 8 definierten Zusammensetzungen durchgeführt werden.

12. Material, das aus der Zusammensetzung nach einem der Ansprüche 1 bis 8 erhalten wird.

13. Formulierung, die eine Zusammensetzung nach einem der Ansprüche 1 bis 8 umfasst.

14. Verwendung eines Additivs, wie in einem der Ansprüche 3 bis 5 definiert, oder einer Kombination, wie in Anspruch 7 definiert, in Gegenwart eines linearen oder verzweigten Silikonpolymers P1 oder P1', das aufeinanderfolgende -Si-O--Einheiten umfasst, zur Bildung einer Zusammensetzung, die vernetzte Silikonpolymere umfasst, umfassend aufeinanderfolgende -Si-O--Einheiten, vorzugsweise ein vernetztes Silikonnetzwerk, enthaltend austauschbare nicht abgesättigte Bindungen und austauschbare Vernetzungspunkte durch Aldehyd-Imin-Austauschreaktionen und/oder durch Imin-Imin-Austauschreaktionen und/oder durch Imin-primäres Amin-Austauschreaktionen, freie

monofunktionelle Aldehyde und/oder freie monofunktionelle Imine und/oder freie monofunktionelle primäre Amine.

**15.** Kombinationen zur Vernetzung von linearen oder verzweigten Silikonpolymeren, die aufeinanderfolgende - Si-O-- Einheiten umfassen, P1, wie in Anspruch 3 definiert, oder P1', wie in Anspruch 7 definiert, wobei die Kombinationen aus Kombinationen ausgewählt sind, die umfassen:

- zur Vernetzung des Polymers P1:

  - einen freien monofunktionellen Aldehyd + Verbindung der Formel (I), wie in einem der vorstehenden Ansprüche definiert;
  - Verbindung der Formel (II) + Verbindung der Formel (I), wobei Z für N steht und W1 für N steht, wie in einem der vorstehenden Ansprüche definiert; oder
  - einen freien monofunktionellen Aldehyd + Silikonpolymer P2, wie in einem der vorstehenden Ansprüche definiert;

- zur Vernetzung des Polymers P1':

  - A und/oder B + C und gegebenenfalls einen freien monofunktionellen Aldehyd, wie in einem der vorstehenden Ansprüche definiert;
  - A, gegebenenfalls B, + C und/oder E und gegebenenfalls einen freien monofunktionellen Aldehyd, wie in einem der vorstehenden Ansprüche definiert
  - A und/oder B und/oder C + D und/oder E und gegebenenfalls einen freien monofunktionellen Aldehyd, wie in einem der vorstehenden Ansprüche definiert;
  - A und/oder B + Verbindung der Formel (I), wobei Z und W1 N sind, und gegebenenfalls einen freien monofunktionellen Aldehyd, wie in einem der vorstehenden Ansprüche definiert;
  - A, gegebenenfalls B, + Verbindung der Formel (II) und gegebenenfalls einen freien monofunktionellen Aldehyd, wie in einem der vorstehenden Ansprüche definiert;
  - C und/oder E + Verbindung der Formel (I), wobei Z und W1 C sind, und gegebenenfalls einen freien monofunktionellen Aldehyd, wie in einem der vorstehenden Ansprüche definiert; oder

wobei A, B, C, D, E den folgenden Formeln entsprechen: (A) $G_1$ -Rx-CH=N-Ry, (B) $G_2$-R'x-CH=O, (C) $G_3$-R"y-N=CH-R"x, (D) $G_4$-R‴x-CH=N-R‴y-$G_5$ und (E) $G_6$-Rw-$NH_2$, wobei die Buchstaben $G_1$, $G_2$, $G_3$, $G_4$, $G_5$ und $G_6$ eine funktionelle Gruppe darstellen, die es ermöglicht, die Moleküle kovalent an die zu funktionalisierenden Polymerketten zu binden, und Rx, R'x, R"x, R‴x sowie Ry, R"y, R‴y und Rw Kohlenwasserstoffgruppen sind.

**16.** Verwendung einer Kombination, wie in Anspruch 15 definiert, in Gegenwart eines linearen oder verzweigten Silikonpolymers P1 oder P1', das aufeinanderfolgende -Si-O--Einheiten umfasst, zur Bildung einer Zusammensetzung, die vernetzte Polymere, vorzugsweise ein vernetztes Silikonnetzwerk, umfasst, enthaltend austauschbare nicht abgesättigte Bindungen und austauschbare Vernetzungspunkte durch Aldehyd-Imin-Austauschreaktionen und/oder durch Imin-Imin-Austauschreaktionen und/oder durch Imin-primäres Amin-Austauschreaktionen und freie monofunktionelle Aldehyde und/oder freie monofunktionelle Imine und/oder freie monofunktionelle primäre Amine.

**17.** Verwendung nach Anspruch 16 zur Modifizierung der Rheologie einer Zusammensetzung, wie beispielsweise eines Öls, einer Farbe oder einer kosmetischen Formulierung, die das Polymer P1 oder P1' umfasst, durch Zugabe der Kombination nach Anspruch 15 zu der Zusammensetzung.

## Claims

**1.** Silicone composition comprising (a) crosslinked polymers comprising consecutive -Si-O-units containing exchangeable pendant bonds and exchangeable crosslinking points, that are exchangeable by aldehyde-imine exchange reactions and/or by imine-imine exchange reactions and/or by imine-primary amine exchange reactions, obtained by crosslinking of linear or branched polymers comprising consecutive -Si-O- units and (b) monofunctional free aldehydes and/or monofunctional free imines and/or monofunctional free primary amines, in particular the composition comprising aldehydes and wherein at least 1 mol% of the aldehyde functions are aromatic aldehyde functions.

**2.** Composition according to claim 1, wherein the crosslinked polymers, before crosslinking, are linear or branched polymers having side groups bearing:

- aldehyde functional groups, or
- imine functional groups bound to the polymer by the carbon atom, or
- imine functional groups bound to the polymer by the nitrogen atom, or
- aldehyde functional groups and imine functional groups bound to the polymer by the carbon atom, or
- primary amine functional groups, or
- primary amine functional groups and imine functional groups bound to the polymer by the nitrogen atom.

**3.** Composition according to any of the preceding claims, **characterized in that** said composition results from mixing, in the molten state or in solution, of:

- at least one linear or branched silicone polymer, comprising consecutive -Si-O-units P1 having side groups bearing:

  - aldehyde functional groups, or
  - imine functional groups bound to the polymer by the carbon atom, or
  - imine functional groups bound to the polymer by the nitrogen atom, or
  - aldehyde functional groups and imine functional groups bound to the polymer by the carbon atom, or
  - primary amine functional groups, or
  - primary amine functional groups and imine functional groups bound to the polymer by the nitrogen atom;

  and

- at least one additive bearing at least two imine and/or aldehyde and/or primary amine functional groups able to react with the side groups of the silicone polymer P1 to form a composition of crosslinked polymers with exchangeable bonds and exchangeable crosslinking points that are exchangeable by aldehyde-imine exchange reactions or by imine-imine exchange reactions or by imine-primary amine exchange reactions;
- optionally, monofunctional free aldehydes.

**4.** Composition according to claim 3, wherein the additive is a compound of formula (I) or of formula (II) or a mixture of these compounds, the formulas (I) and (II) meeting the following definitions:

$R_1$
$R_3$
R'
R"$_i$
Y
Z
$R_4$
$W_1$
$W_{2i}$
$R_2$
R'''
n
(I) or
$H_2N$
$R'_4$
$NH_2$
n'
(II)


in which:

n, n' is an integer varying from 1 to 6;
i is an integer varying from 1 to n;
the bonds in dashed lines are present or absent, as a function of the valency of Y, Z, $W_1$, $W_{2i}$;
Y and Z are different and each represents either C or N, or Y is O and then Z is C:

- when Y represents C, then Z represents N, and $R_1$ represents a hydrocarbon group, $R_2$ represents H and $R_3$ is absent,
- when Y represents N, then Z represents C, and $R_1$ represents H or a hydrocarbon group, $R_2$ is absent and $R_3$ represents H,
- when Y is O, then Z is C and, $R_1$, $R_2$ are absent and $R_3$ represents H;

$R_4$ and $R'_4$ represent a hydrocarbon group bound to the amine and/or imine and/or aldehyde functional groups by a covalent bond via a carbon atom;
in each block $W_1$(R')=$W_{2i}$(R"$_i$)(R'''):

$W_1$ and $W_{2i}$ are different and each represents either C or N, or $W_{2i}$ is O and then $W_1$ is C:

- when $W_{2i}$ represents C, then $W_1$ represents N and R' is absent, $R''_i$ represents a hydrocarbon group and R''' represents H,
- when $W_{2i}$ represents N, then $W_1$ represents C and R' represents H, $R''_i$ represents H or a hydrocarbon group, and R''' is absent,
- when $W_{2i}$ is O, then $W_1$ is C and $R''_i$, R''' are absent and R' represents H;

when Z represents C, then $W_1$ represents C,
when Y represents C, then $W_{2i}$ represents C;
the additive may be a mixture of compounds of formula (I) and of formula (II) when in the compound of formula (I) Z represents N and $W_1$ represents N.

**5.** Composition according to claim 3 or 4, **characterized in that** the additive is a linear or branched silicone polymer P2, comprising consecutive -Si-O- units, having side groups bearing:

- aldehyde functional groups, or
- imine functional groups bound to the polymer by the carbon atom, or
- imine functional groups bound to the polymer by the nitrogen atom, or
- aldehyde functional groups and imine functional groups bound to the polymer by the carbon atom, or
- primary amine functional groups, or
- primary amine functional groups and imine functional groups bound to the polymer by the nitrogen atom.

**6.** Composition according to any of claims 3 to 5, **characterized in that**:

- the silicone polymer P1 has side groups bearing imine functional groups bound to the main chain by their carbon atoms and the additive is selected from: a silicone polymer P2 of which the side groups bear imine functional groups bound to the main chain by their nitrogen atoms, a silicone polymer P2 of which the side groups bear primary amine functional groups, a silicone polymer P2 comprising side groups bearing primary amine functional groups and side groups bearing imine functional groups bound to the main chain by their nitrogen atoms, a compound of formula (I) in which the atoms Z and $W_1$ represent N, a compound of formula (II), a mixture of compounds of formula (II) and of formula (I) in which the atoms Z and $W_1$ represent N, or a mixture of these additives;
- the silicone polymer P1 has side groups bearing imine functional groups bound to the main chain by their nitrogen atoms and the additive is selected from: a silicone polymer P2 of which the side groups bear imine functional groups bound to the main chain by their carbon atoms, a silicone polymer P2 of which the side groups bear aldehyde functional groups, a silicone polymer P2 comprising side groups bearing aldehyde functional groups and side groups bearing imine functional groups bound to the polymer by the carbon atom, a compound of formula (I) in which the atoms Z and W1 represent C or a mixture of these additives;
- the silicone polymer P1 has side groups bearing aldehyde functional groups and the additive is selected from: a silicone polymer P2 having side groups bearing imine functional groups bound to the main chain by their nitrogen atoms, a silicone polymer P2 comprising side groups bearing primary amine functional groups and side groups bearing imine functional groups bound to the polymer by the nitrogen atom, a compound of formula (I) in which the atoms Z and W1 represent N or a mixture of these additives;
- the silicone polymer P1 has side groups bearing primary amine functional groups and the additive is a silicone polymer P2 comprising side groups bearing imine functional groups bound to the polymer by the carbon atom, a silicone polymer P2 comprising side groups bearing aldehyde functional groups and side groups bearing imine functional groups bound to the polymer by the carbon atom, a compound of formula (I) in which the atoms Z and W1 represent C and, Y and one W2i at least represents N, the other W2i represents, each independently of each other, N or O where appropriate or a mixture of these additives;
- the silicone polymer P1 has side groups bearing aldehyde functional groups and side groups bearing imine functional groups bound to the main chain by their carbon atoms and the additive is a silicone polymer P2 comprising side groups bearing primary amine functional groups, a silicone polymer P2 comprising side groups bearing imine functional groups bound to the polymer by the nitrogen atom, a silicone polymer P2 comprising side groups bearing primary amine functional groups and side groups bearing imine functional groups bound to the polymer by the nitrogen atom, a compound of formula (I) in which the atoms Z and W1 represent N, a compound of formula (II), a mixture of compounds of formula (II) and of formula (I) in which the atoms Z and W1 represent N or a mixture of these additives; or
- the silicone polymer P1 has side groups bearing primary amine functional groups and side groups bearing imine functional groups bound to the main chain by their nitrogen atoms and the additive is a silicone polymer P2

comprising side groups bearing aldehyde functional groups, a silicone polymer P2 comprising side groups bearing imine functional groups bound to the polymer by the carbon atom, a silicone polymer P2 comprising side groups bearing aldehyde functional groups and side groups bearing imine functional groups bound to the polymer by the carbon atom, a compound of formula (I) in which the atoms Z and W1 represent C or a mixture of these additives.

**7.** Composition according to any of claims 1 to 2, **characterized in that** said composition results from mixing, in the molten state or in solution, of:

- at least one linear or branched silicone polymer P1', comprising consecutive -Si-O- units, and comprising functional groups enabling grafting; and
- a combination of molecules including molecules comprising at one end a functional group making it possible to bond in a covalent manner the molecule to the polymer P1' and at the other end a functional group selected from an imine function bound to the molecule by its carbon atom, an imine function bound to the molecule by its nitrogen atom, an aldehyde function or a primary amine function, and/or molecules comprising at two of their ends functional groups making it possible to bond in a covalent manner the molecule to the polymer P1' and between its two ends an imine function, the combination having to enable the grafting and the creation of exchangeable pendant bonds and exchangeable crosslinking points that are exchangeable by aldehyde-imine exchange reactions and/or by imine-imine exchange reactions and/or by imine-primary amine exchange reactions;
- optionally, monofunctional free aldehydes.

**8.** Composition according to any of the precedent claims, **characterized in that** the aldehyde is a molecule for which the aldehyde function is borne by an aryl, heteroaryl group or the alkene function of a terpenoid.

**9.** Method for preparing a composition of crosslinked silicone polymers, comprising consecutive -Si-O- units, said method comprising:

- choosing a linear or branched silicone polymer, comprising consecutive -Si-O- units P1 having side groups bearing:
    - aldehyde functional groups, or
    - imine functional groups bound to the polymer by the carbon atom, or
    - imine functional groups bound to the polymer by the nitrogen atom, or
    - aldehyde functional groups and imine functional groups bound to the polymer by the carbon atom, or
    - primary amine functional groups, or
    - primary amine functional groups and imine functional groups bound to the polymer by the nitrogen atom;
- choosing at least one additive bearing at least two imine and/or aldehyde and/or primary amine functional groups able to react with the side groups of the polymer P1 to form a composition of crosslinked polymers containing exchangeable pendant bonds and exchangeable crosslinking points that are exchangeable by aldehyde-imine exchange reactions and/or by imine-imine exchange reactions and/or by imine-primary amine exchange reactions; and
- mixing, in the molten state or in solution, said polymer P1, said additive and, optionally a monofunctional free aldehyde to obtain said composition.

**10.** Method for preparing a composition of crosslinked polymers, said method comprising the following steps:

- choosing a linear or branched silicone polymer, comprising consecutive -Si-O- units P1' comprising functional groups enabling grafting;
- choosing a combination of molecules including molecules comprising at one end a functional group making it possible to bond in a covalent manner the molecule to the polymer P1' and at the other end a functional group selected from an imine function bound to the molecule by its carbon atom, an imine function bound to the molecule by its nitrogen atom, an aldehyde function, or a primary amine function and/or molecules comprising at two of their ends functional groups making it possible to bond in a covalent manner the molecule to the polymer P1' and between these two ends an imine function, the combination having to enable the grafting and the creation of exchangeable pendant bonds and exchangeable crosslinking points that are exchangeable by aldehyde-imine exchange reactions and/or by imine-imine exchange reactions and/or by imine-primary amine exchange reactions;

- mixing, in the molten state or in solution, said polymer P1', said combination and optionally a monofunctional free aldehyde, to obtain said composition.

**11.** Use of aldehyde for catalysing the imine-imine metathesis reactions and imine-aldehyde exchange reactions carried out in the compositions defined in claims 1 to 8.

**12.** Material obtained from the composition according to any of claims 1 to 8.

**13.** Formulation comprising the composition according to claim 1.

**14.** Use of an additive as defined in any of claims 3 to 5, or of a combination as defined in claim 7, in the presence of a linear or branched silicone polymer, the linear or branched silicone polymer comprising consecutive -Si-O- units P1 or P1' for forming a composition comprising crosslinked silicone polymers, advantageously a crosslinked silicone network, comprising exchangeable pendant bonds and exchangeable crosslinking points that are exchangeable by aldehyde-imine exchange reactions and/or by imine-imine exchange reactions and/or by imine-primary amine exchange reactions, monofunctional free aldehydes and/or monofunctional free imines and/or monofunctional free primary amines.

**15.** Combinations for crosslinking linear or branched silicone polymers, comprising consecutive -Si-O- units, P1 as defined in claim 3 or P1' as defined in claim 7, said combinations being selected from combinations comprising:

- For crosslinking said polymer P1:

  - A monofunctional free aldehyde + compound of formula (I), as defined in one of the preceding claims;
  - Compound of formula (II) + compound of formula (I) in which Z represents N and W1 represents N, as defined in one of the preceding claims;
  - A monofunctional free aldehyde + silicone polymer P2, as defined in one of the preceding claims;

- For crosslinking said polymer P1':

  - A and/or B + C, and optionally a monofunctional free aldehyde as defined in one of the preceding claims;
  - A, optionally B, + C and/or E, and optionally a monofunctional free aldehyde as defined in one of the preceding claims;
  - A and/or B and/or C + D and/or E, and optionally a monofunctional free aldehyde as defined in one of the preceding claims;
  - A and/or B + compound of formula (I) for which Z and W1 are N, and optionally a monofunctional free aldehyde, as defined in one of the preceding claims;
  - A, optionally B, + compound of formula (II) and optionally a monofunctional free aldehyde, as defined in one of the preceding claims;
  - C and/or E + compound of formula (I) for which Z and W1 are C, and optionally a monofunctional free aldehyde, as defined in one of the preceding claims; or A, B, C, D, E meeting the following formulas: (A) $G_1$-Rx-CH=N-Ry, (B) $G_2$-R'x-CH=O, (C) $G_3$-R"y-N=CH-R"x, (D) $G_4$-R‴x-CH=N-R‴y-$G_5$ and (E) $G_6$-Rw-$NH_2$, where the letters $G_1$, $G_2$, $G_3$, $G_4$, $G_5$ and $G_6$ represent a functional group making it possible to bond in a covalent manner the molecules to the polymer chains to functionalise, Rx, R'x, R"x, R‴x and Ry, R"y, R"'y, Rw are hydrocarbon groups.

**16.** Use of a combination as defined in claim 15, in the presence of a linear or branched silicone polymer, comprising consecutive -Si-O- units P1 or P1' for the formation of a composition comprising crosslinked polymers, advantageously a crosslinked silicone network, containing exchangeable pendant bonds and exchangeable crosslinking points that are exchangeable by aldehyde-imine exchange reactions and/or by imine-imine exchange reactions and/or by imine-primary amine exchange reactions and monofunctional free aldehydes and/or monofunctional free imines and/or monofunctional free primary amines.

**17.** Use according to claim 15 to modify the rheology of a composition, such as an oil, a paint or a cosmetic formulation, comprising said polymer P1 or P1' by addition to the composition of the combination according to claim 15.

A B C D E

Fig. 1

A C

A C

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2013055467 A
- US 2012302705 A
- US 4948858 A


### Littérature non-brevet citée dans la description


- **GILBERT, A. R.** ; **KANTOR, S. W.** *J. Polym. Sci.*, 1959, vol. 40, 35-58
- **C. RACLES** ; **M. CAZACU** ; **G. HITRUE**. *Colloïd Polym. Sci.*, 2009, vol. 287, 461-470
- **R.G. BERGMAN**. *J. Am. Chem. Soc.*, 1994, vol. 116, 2669
- **R.G. BERGMAN**. *J. Am. Chem. Soc.*, 2000, vol. 122, 751
- **T.Y. MEYER**. *Organometallics*, 1997, vol. 16, 5381
- **T.Y. MEYER**. *J. Am. Chem. Soc.*, 1998, vol. 120, 8035
- **P. MOUNTFORD**. *Chem. Commun.*, 1998, 1669
- **J. H. ESPENSON**. *Organometallics*, 1999, vol. 18, 5170
- **J. W. BRUNO**. *Organometallics*, 2000, vol. 19, 4672
- **J.-M. LEHN**. *J. Am. Chem. Soc.*, 2005, vol. 127, 5528
- **DIELS-ALDER**. Diels-Alder reactions_recent applications in polymer and material science. *Mehmet Atilla Tasdelen, Polym. Chem.*, 2011, vol. 2, 2133
- **JULIEN NICOLAS et al.** Nitroxide-mediated polymerization. *Progress in Polymer Science*, 2013, vol. 38, 63
- **YING-LING LIU** ; **TSAI-WEI CHUO**. Self-healing polymers based on thermally reversible Diels-Alder chemistry. *Polym. Chem.*, 2013, vol. 4, 2194
- **G. MOAD**. *Prog. Polym. Sci.*, 1999, vol. 24, 81-142
- **ELISA PASSAGLIAA** ; **SERENA COIAI** ; **SYLVAIN AUGIER**. *Prog. Polym. Sci.*, 2009, vol. 34, 911-947
- **KEMAL ARDA GÜNAY** ; **PATRICK THEATO** ; **HARM-ANTON KLOK**. *Journal of Polymer Science Part A: Polymer Chemistry*, 2013, vol. 51, 1-28
- **CHARLES E. HOYLE** ; **ANDREW B. LOWE** ; **CHRISTOPHER N. BOWMAN**. *Chem. Soc. Rev.*, 2010, vol. 39, 1355-1387
- **BRIAN D. MATHER** ; **KALPANA VISWANATHAN** ; **KEVIN M. MILLER** ; **TIMOTHY E. LONG**. *Prog. Polym. Sci.*, 2006, vol. 31, 487-531
- **M. SPINU** ; **J. E. MC GRATH**. *J. Polym. Sci. Part A Polym. Chem.*, 1991, vol. 29, 657
- **W. NOLI**. Chemistry and Technology of Silicones.. Academiv Press, 1968
- **B. BOUTEVIN** ; **F. GUIDA-PIETRASANTA** ; **A. RATSIMIHETY**. *Side Group Modified*
- Silicon-Containing Polymers. Springer, 2000
- **J. V. CRIVELLO** ; **J. L. LEE**. *J Polym. Sci., Part A, Polym. Chem.*, 1990, vol. 28, 479
- **J. N. LEWIS**. *J. Amer. Chem. Soc.*, 1991, vol. 112, 5998
- **J. V. CRIVELLO** ; **D. BI**. *J Polym. Sci., Part A, Polym. Chem.*, 1993, vol. 31, 3121
- **J. V. CRIVELLO** ; **G. LOHDEN**. *Macromolecules*, 1995, vol. 28, 8057
- **L. LECAMP** ; **C. VAUGELADE** ; **B. YOUSSEF** ; **C. BUNEL**. *Eur. Polym. J.*, 1997, vol. 33, 1453
- **J. V. CRIVELLO** ; **M. FAN**. *J Polym Sci., Part A. Polym Chem.*, 1991, vol. 29, 1853
- **J. V. CRIVELLO** ; **BO YANG** ; **WHAN-GI KIM**. *J Polym. Sci., Part A. Polym. Chem.*, 1995, vol. 33, 2415
- **K. D. BELFIELD** ; **X. Z. LIN** ; **I. CABASSO**. *J Polym. Sci. Part A Polym. Chem.*, 1991, vol. 29, 1073
- **R. PUYENBROEK** ; **J. J. JANSEMA** ; **J. C. VAN DE GRAMPEL** ; **B. A. C. ROUSSEEUW** ; **E. W. J. M. VAN DER DRIFT**. *Polymer*, 1996, vol. 37, 847
- **CHARLES E. HOYLE** ; **CHRISTOPHER N. BOWMAN**. *Angew. Chem. Int. Ed.*, 2010, vol. 49, 1540-1573
- **T. C. CHUNG**. *Prog. Polym. Sci.*, 2002, vol. 27, 39-85
- **CHULSUNG BAE** ; **JOHN F. HARTWIG** ; **HOYONG CHUNG** ; **NICOLE K. HARRIS** ; **KAREN A. SWITEK** ; **MARC A. HILLMYER**. *Angew. Chem. Int. Ed.*, 2005, vol. 44, 6410-6413
- *CHEMICAL ABSTRACTS*, 99363-37-8